(19)

**Europäisches Patentamt**
**European Patent Office**
**Office européen des brevets**

(11) **EP 4 560 586 A1**

(12) **EUROPEAN PATENT APPLICATION**

(43) Date of publication:
**28.05.2025 Bulletin 2025/22**

(21) Application number: **24203354.6**

(22) Date of filing: **27.09.2024**

(51) International Patent Classification (IPC):
**G06V 10/764** *(2022.01)* **G06V 20/58** *(2022.01)*

(52) Cooperative Patent Classification (CPC):
**G05D 1/249; G05D 1/225; G06N 3/08; G06N 20/00; G06V 10/764; G06V 20/00; G06V 20/58;**
G05D 2101/20; G05D 2107/13; G05D 2109/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.10.2023 JP 2023178241**

(71) Applicant: **Toyota Jidosha Kabushiki Kaisha Aichi-Ken 471-8571 (JP)**

(72) Inventors:
• **HATANO, Yasuyoshi**
  **Toyota-shi, 471-8571 (JP)**
• **IWAHORI, Kento**
  **Toyota-shi, 471-8571 (JP)**
• **YOKOYAMA, Daiki**
  **Toyota-shi, 471-8571 (JP)**

(74) Representative: **D Young & Co LLP**
**3 Noble Street**
**London EC2V 7BQ (GB)**

(54) **INFORMATION PROCESSING DEVICE, INFORMATION PROCESSING SYSTEM, AND INFORMATION PROCESSING METHOD**

(57) An information processing device includes a change information acquisition unit, and, when an appearance state is determined, using change information, to have changed, at least one of a training unit and a notification control unit. The change information acquisition unit acquires change information. The training unit trains a machine learning model using a plurality of sets of training data in which a training image including a target region after a change in the appearance state and a moving object is associated with a correct answer label. The notification control unit notifies an administrator of training request information for training the machine learning model.

Fig.1

EP 4 560 586 A1

# Description

BACKGROUND

FIELD

The present disclosure relates to an information processing device, an information processing system, and an information processing method.

RELATED ART

Heretofore, a technology for automatic running of vehicles by remote control by monitoring running of the vehicle using a camera located outside the vehicle has been known (Japanese Laid-Open Patent Application (PCT Application) Publication No. 2017-538619).

In order to move a moving object, such as a vehicle, by unmanned driving, in some cases, an image including a moving object is input to a machine learning model to detect the moving object from the image, thereby acquiring parameters for generating a control signal for regulating operation of the moving object. However, there may be cases where the appearance state of the target region, including a pathway and a surrounding area of the pathway, may change, for example, when the pathway on which moving objects are moving is soiled. The present inventors have found that, in case that the appearance state of the target region changes, the accuracy of detection of moving objects may decrease if an image after the change in the appearance state is input to the machine learning model that has been trained with images before the change in the appearance state.

SUMMARY

The present disclosure may be realized by the following aspects.

(1) According to a first aspect of the present disclosure, an information processing device is provided. The information processing device used to move a moving object that is capable of moving by unmanned driving includes a change information acquisition unit, and, when an appearance state is determined, using change information, to have changed, includes at least one of a training unit and a notification control unit. The change information acquisition unit acquires the change information regarding a change in an appearance state of a target region. The target region is included in an imaging range of an external camera provided in a place different from a place of the moving object, and includes a pathway on which the moving object moves and a surrounding area of the pathway. The training unit trains a machine learning model using a plurality of sets of training data in which a training image including the target region after a change in the appearance state and the moving object is associated with a correct answer label when a captured image acquired by the external camera imaging the target region and the moving object is input. The machine learning model outputs at least one of a control signal for defining operation of the moving object that moves by the unmanned driving and a parameter used in generating the control signal. The notification control unit notifies an administrator of training request information for training the machine learning model. According to the above aspect, when it is determined, using the change information, that the appearance state of the target region has changed, the information processing device can perform the following processing. In this case, the information processing device can train the machine learning model using a plurality of sets of training data in which a training image including the moving object and the target region after its change in the appearance state is associated with a correct answer label. In this way, it is possible to suppress a decrease in accuracy of the control signal output from the machine learning model and the parameter used in generating the control signal when the appearance state of the target region changes. Further, according to the above aspect, when it is determined, using the change information, that the appearance state of the target region has changed, the information processing device can notify the administrator of the training request information for training the machine learning model. In this way, the information processing device can notify the administrator that the necessity of training the machine learning model has been determined. This allows the information processing device to prompt the administrator to take measures to train the machine learning model.

(2) According to a second aspect of the present disclosure, an information processing device is provided. The information processing device used to move a moving object that is capable of moving by unmanned driving includes a training unit. The training unit trains a machine learning model when a captured image acquired by an external camera imaging a target region and the moving object is input. The machine learning model outputs at least one of a control signal for defining operation of the moving object that moves by the unmanned driving and a parameter used in generating the control signal. The target region is included in an imaging range of the external camera provided in a place different from a place of the moving object, and includes a pathway on which the moving object moves and a surrounding area of the pathway. The target region is classified into a plurality of appearance states according to a change in appearance. The training unit trains the machine learning model for each of the appearance states using M (M is an integer of 2 or more) sets of training data in which a training image including the target region classified as one of the plurality of appearance states and the moving object is associated with a correct answer label, and N (N is an integer of 0 or more and less than M) sets of training data in which a training image including the target region classified as another remaining appearance state and the moving object is associated with a correct answer label. According to the above aspect, the information processing device can train the machine learning model using more training images including a moving object and a target region classified as one appearance state, than training images including a moving object and a target region classified as another remaining appearance state. In this way, the information processing device can prepare a machine learning model suitable for acquiring at least one of the control signal and the parameter used in generating the control signal, using captured images including a moving object and the target region classified as one appearance state.

(3) According to a third aspect of the present disclosure, an information processing device is provided. The information processing device used to move a moving object that is capable of moving by unmanned driving includes a training unit. The training unit trains a machine learning model when a captured image acquired by an external camera imaging a target region and the moving object, and an appearance state of the target region are input. The machine learning model outputs at least one of a control signal for defining operation of the moving object that moves by the unmanned driving and a parameter used in generating the control signal. The target region is included in an imaging range of the external camera provided in a place different from a place of the moving object, and includes a pathway on which the moving object moves and a surrounding area of the pathway. The appearance state includes a plurality of appearance states into which the target region is classified according to a change in appearance. The training unit trains the machine learning model using a plurality of sets of training data in which a training image including the target region and the moving object, a correct answer label, and supplementary information indicating the appearance state of the target region included in the training image are associated with each other. According to the above aspect, the information processing device can train the machine learning model using a plurality of sets of training data in which a training image including a target region and a moving object, a correct answer label, and supplementary information indicating the appearance state of the target region included in the training image are associated with one another. This allows the information processing device to prepare a machine learning model that has been trained by associating the appearance state of the target region.

(4) According to a fourth aspect of the present disclosure, an information processing device is provided. The information processing device used to move a moving object that is capable of moving by unmanned driving includes a state information acquisition unit and a control information acquisition unit. The state information acquisition unit acquires state information regarding an appearance state of a target region. The target region is included in an imaging range of an external camera provided in a place different from a place of the moving object, and includes a pathway on which the moving object moves and a surrounding area of the pathway. The control information acquisition unit inputs, when a captured image acquired by the external camera imaging the target region and the moving object is input, the captured image to a trained machine learning model, thereby acquiring at least one of a control signal for defining operation of the moving object that moves by the unmanned driving and a parameter used in generating the control signal. The trained machine learning model outputs at least one of the control signal and the parameter. When the appearance state identified by the state information is different from the appearance state when the machine learning model was trained, the control information acquisition unit inputs the captured image to the machine learning model that has been trained using a plurality of sets of training data in which a training image including the target region having the appearance state identified by the state information and the moving object is associated with a correct answer label. According to the above aspect, when the appearance state of the target region identified by the state information is different from the appearance state of the target region in the training image used at the time of the training of the machine learning model, the information processing device can perform the following processing. In this case, the information processing device can acquire at least one of the control signal and the parameter used in generating the control signal by inputting a captured image to the machine learning model that has been trained using a plurality of sets of training data in which a training image including a moving object and the target region having an appearance state identified by the state information is associated with a correct answer label. In this way, it is possible to suppress a decrease in accuracy of the control signal output from the machine learning model and the parameter used in generating the control signal, when the appearance state of the target region identified by the state information is different from the appearance state of the target region in the training image used at the time of the training of the machine learning model.

(5) According to a fifth aspect of the present disclosure, an information processing device is provided. The information processing device used to move a moving object that is capable of moving by unmanned driving includes a state information acquisition unit, a model acquisition unit, and a control information acquisition unit. The state information acquisition unit acquires state information regarding an appearance state of a target region. The target region is included in an imaging range of an external camera provided in a place different from a place of the moving object, and includes a pathway on which the moving object moves and a surrounding area of the pathway. The model acquisition unit acquires a machine learning model when a captured image acquired by the external camera imaging the target region and the moving object is input. The machine learning model outputs at least one of a control signal for defining operation of the moving object that moves by the unmanned driving and a parameter used in generating the control signal. The control information acquisition unit acquires at least one of the control signal and the parameter by inputting the captured image to the machine learning model acquired by the model acquisition unit. The appearance state includes a plurality of appearance states into which the target region is classified according to a change in appearance. The machine learning model is prepared for each of the appearance states. The machine learning model prepared for each of the appearance states has been trained in advance using M (M is an integer of 2 or more) sets of training data in which a training image including the target region classified as one appearance state and the moving object is associated with a correct answer label, and N (N is an integer of 0 or more and less than M) sets of training data in which a training image including the target region classified as another remaining appearance state and the moving object is associated with a correct answer label. The model acquisition unit acquires the machine learning model selected according to the appearance state from among the plurality of machine learning models prepared for the respective appearance states. According to the above aspect, the information processing device can acquire a machine learning model selected according to the appearance state identified by the state information from among a plurality of machine learning models prepared for respective appearance states of the target region. Further, the information processing device can acquire at least one of the control signal and the parameter used in generating the control signal by inputting a captured image into a machine learning model corresponding to the appearance state of the target region included in the captured image. In this way, it is possible to suppress a decrease in accuracy of the control signal output from the machine learning model and the parameter used in generating the control signal.

(6) According to a sixth aspect of the present disclosure, an information processing device is provided. The information processing device used to move a moving object that is capable of moving by unmanned driving includes a state information acquisition unit and a control information acquisition unit. The state information acquisition unit acquires state information regarding an appearance state of a target region. The target region is included in an imaging range of an external camera provided in a place different from a place of the moving object, and includes a pathway on which the moving object moves and a surrounding area of the pathway. The control information acquisition unit inputs, when a captured image acquired by the external camera imaging the target region and the moving object, and the appearance state identified by the state information are input, the captured image and the appearance state identified by the state information to a trained machine learning model, thereby acquiring at least one of a control signal for defining operation of the moving object that moves by the unmanned driving and a parameter used in generating the control signal. The trained machine learning model outputs at least one of the control signal and the parameter. The appearance state includes a plurality of appearance states into which the target region is classified according to a change in appearance. The machine learning model has been trained in advance using a plurality of sets of training data in which a training image including the target region and the moving object, a correct answer label, and supplementary information indicating the appearance state of the target region included in the training image are associated with each other. According to the above aspect, the information processing device inputs a captured image and an appearance state of the target region identified by the state information into a machine learning model that has been trained in advance using a plurality of sets of training data in which a training image including the target region and a moving object, a correct answer label, and supplementary information indicating the appearance state of the target region included in the training image are associated with one another. In this way, the information processing device can acquire at least one of the control signal and the parameter used in generating the control signal. In this way, it is possible to suppress a decrease in accuracy of the control signal output from the machine learning model and the parameter used in generating the control signal.

(7) In the above aspect, the factor affecting a change in the appearance state may include at least one of dirt in the target region, irregularities in the target region, an object other than the moving object and movably disposed in the target region, and a road surface color of the pathway. According to the above aspect, the following can be achieved when at least one of the dirt in the target region, irregularities in the target region, an object movably disposed in the target region, and the color of the road surface of the pathway is the factor affecting the change in the appearance state of the target region. In this case, it is possible to suppress a decrease in accuracy of the control signal output from the machine learning model and the parameter used in generating the control signal.

(8) In the above aspect, the machine learning model may be trained during a period when the unmanned driving control is performed. According to the above aspect, the information processing device can train the machine learning model during the period when the moving object is performing control of unmanned driving.

(9) In the above aspect, the training image may include at least one of the captured image and a composite image generated by combining a virtual moving object image generated by virtually reproducing the moving object with a background image that is either a real background image acquired by the external camera imaging the target region or a virtual background image generated by virtually reproducing the target region. According to the above aspect, the information processing device can use a composite image generated by combining a virtual moving object image with a background image, which is either a real background image or a virtual background image, as the training image used for training the machine learning model.

(10) According to a seventh aspect of the present disclosure, an information processing system is provided. The information processing system used to move a moving object that is capable of moving by unmanned driving includes the moving object, an external camera provided in a place different from a place of the moving object, and the information processing device according to the above aspect. According to the above aspect, the information processing system can train a machine learning model that outputs at least one of the control signal and the parameter used in generating the control signal, and/or move a moving object by unmanned driving using the trained machine learning model.

(11) According to an eighth aspect of the present disclosure, an information processing method is provided. The information processing method used to move a moving object that is capable of moving by unmanned driving includes a change information acquisition step, and, when an appearance state is determined, using change information, to have changed, includes at least one of a training step and a notification step. The change information acquisition step includes acquiring the change information regarding a change in the appearance state of a target region. The target region is included in an imaging range of an external camera provided in a place different from a place of the moving object, and includes a pathway on which the moving object moves and a surrounding area of the pathway. The training step includes training a machine learning model using a plurality of sets of training data in which a training image including the target region after a change in the appearance state and the moving object is associated with a correct answer label when a captured image acquired by the external camera imaging the target region and the moving object is input. The machine learning model outputs at least one of a control signal for defining operation of the moving object that moves by the unmanned driving and a parameter used in generating the control signal. The notification step includes notifying an administrator of training request information for training the machine learning model. According to the above aspect, when it is determined, using the change information, that the appearance state of the target region has changed, the following processing can be performed. In this case, it is possible to train the machine learning model using a plurality of sets of training data in which a training image including the moving object and the target region after its change in the appearance state is associated with a correct answer label. In this way, it is possible to suppress a decrease in accuracy of the control signal output from the machine learning model and the parameter used in generating the control signal when the appearance state of the target region changes. Further, according to the above aspect, when it is determined, using the change information, that the appearance state of the target region has changed, it is possible to notify the administrator of the training request information for training the machine learning model. In this way, it is possible to notify the administrator that the necessity of training the machine learning model has been determined. This can prompt the administrator to take measures to train the machine learning model.

(12) According to a ninth aspect of the present disclosure, an information processing method is provided. The information processing method used to move a moving object that is capable of moving by unmanned driving includes a preparation step and a training step. The preparation step includes preparing a plurality of training images including a target region and the moving object. The target region is included in an imaging range of an external camera provided in a place different from a place of the moving object, and includes a pathway on which the moving object moves and a surrounding area of the pathway. The training step includes training a machine learning model when a captured image acquired by the external camera imaging the target region and the moving object is input. The machine learning model outputs at least one of a control signal for defining operation of the moving object that moves by the unmanned driving and a parameter used in generating the control signal. The target region is classified into a plurality of appearance states according to a change in appearance. The training step includes training the machine learning model for each of the appearance states using M (M is an integer of 2 or more) sets of training data in which the training image including the target region classified as one of the plurality of appearance states and the moving object is associated with a correct answer label, and N (N is an integer of 0 or more and less than M) sets of training data in which the training image including the target region classified as another remaining appearance state and the moving object is associated with a correct answer label. According to the above aspect, it is possible to train the machine learning model using more training images including a moving object and a target region classified as one of the plurality of appearance states, than training images including a moving object and a target region classified as another remaining appearance state. In this way, it is possible to prepare a machine learning model suitable for acquiring at least one of the control signal and the parameter used in generating the control signal, using captured images including a moving object and the target region classified as one appearance state.

(13) According to a tenth aspect of the present disclosure, an information processing method is provided. The information processing method used to move a moving object that is capable of moving by unmanned driving includes a preparation step and a training step. The preparation step includes preparing a plurality of training images including a target region and the moving object. The target region is included in an imaging range of an external camera provided in a place different from a place of the moving object, and includes a pathway on which the moving object moves and a surrounding area of the pathway. The training step includes training a machine learning model when a captured image acquired by the external camera imaging the target region and the moving object, and an appearance state of the target region are input. The machine learning model outputs at least one of a control signal for defining operation of the moving object that moves by the unmanned driving and a parameter used in generating the control signal. The appearance state includes a plurality of appearance states into which the target region is classified according to a change in appearance. The training step includes training the machine learning model using a plurality of sets of training data in which the training image including the target region and the moving object, a correct answer label, and supplementary information indicating the appearance state of the target region included in the training image are associated with each other. According to the above aspect, it is possible to train the machine learning model using a plurality of sets of training data in which the training image including a target region and a moving object, a correct answer label, and supplementary information indicating the appearance state of the target region included in the training image are associated with one another. In this way, it is possible to prepare a machine learning model that has been trained by associating the appearance state of the target region.

(14) According to an eleventh aspect of the present disclosure, an information processing method is provided. The information processing method used to move a moving object that is capable of moving by unmanned driving includes a state information acquisition step and a control information acquisition step. The state information acquisition step includes acquiring state information regarding an appearance state of a target region. The target region is included in an imaging range of an external camera provided in a place different from a place of the moving object, and includes a pathway on which the moving object moves and a surrounding area of the pathway. The control information acquisition step includes inputting, when a captured image acquired by the external camera imaging the target region and the moving object is input, the captured image to a trained machine learning model, thereby acquiring at least one of a control signal for defining operation of the moving object that moves by the unmanned driving and a parameter used in generating the control signal. The trained machine learning model outputs at least one of the control signal and the parameter. When the appearance state identified by the state information is different from the appearance state of the target region in a training image input at a time when the machine learning model was trained, the control information acquisition step includes inputting the captured image to the machine learning model that has been trained using a plurality of sets of training data in which a training image including the target region having the appearance state identified by the state information and the moving object is associated with a correct answer label. According to the above aspect, when the appearance state of the target region identified by the state information is different from the appearance state of the target region in the training image used at the time of the training of the machine learning model, it is possible to perform the following processing. In this case, it is possible to acquire at least one of the control signal and the parameter used in generating the control signal by inputting captured images to the machine learning model that has been trained using a plurality of sets of training data in which a training image including a moving object and the target region having an appearance state identified by the state information is associated with a correct answer label. In this way, it is possible to suppress a decrease in accuracy of the control signal output from the machine learning model and the parameter used in generating the control signal, when the appearance state of the target region identified by the state information is different from the appearance state of the target region in the training image used at the time of the training of the machine learning model.

(15) According to a twelfth aspect of the present disclosure, an information processing method is provided. The information processing method used to move a moving object that is capable of moving by unmanned driving includes a state information acquisition step, a model acquisition step, and a control information acquisition step. The state information acquisition step includes acquiring state information regarding an appearance state of a target region. The target region is included in an imaging range of an external camera provided in a place different from a place of the moving object, and includes a pathway on which the moving object moves and a surrounding area of the pathway. The model acquisition step includes acquiring a machine learning model when a captured image acquired by the external camera imaging the target region and the moving object is input. The machine learning model outputs at least one of a control signal for defining operation of the moving object that moves by the unmanned driving and a parameter used in generating the control signal. The control information acquisition step includes acquiring at least one of the control signal and the parameter by inputting the captured image to the machine learning model acquired in the model acquisition step. The appearance state includes a plurality of appearance states into which the target region is classified according to a change in appearance. The machine learning model is prepared for each of the appearance states. The machine learning model prepared for each of the appearance states has been trained in advance using M (M is an integer of 2 or more) sets of training data in which a training image including the target region classified as one of the plurality of appearance states and the moving object is associated with a correct answer label, and N (N is an integer of 0 or more and less than M) sets of training data in which a training image including the target region classified as another remaining appearance state and the moving object is associated with a correct answer label. The model acquisition step includes acquiring the machine learning model selected according to the appearance state from among the plurality of machine learning models prepared for the respective appearance states. According to the above aspect, it is possible to acquire a machine learning model selected according to the appearance state identified by the state information from among a plurality of machine learning models prepared for respective appearance states of the target region. Further, it is possible to acquire at least one of the control signal and the parameter used in generating the control signal by inputting a captured image into a machine learning model corresponding to the appearance state of the target region included in the captured image. In this way, it is possible to suppress a decrease in accuracy of the control signal output from the machine learning model and the parameter used in generating the control signal.

(16) According to a thirteenth aspect of the present disclosure, an information processing method is provided. The information processing method used to move a moving object that is capable of moving by unmanned driving includes a state information acquisition step and a control information acquisition step. The state information acquisition step includes acquiring state information regarding an appearance state of a target region. The target region is included in an imaging range of an external camera provided in a place different from a place of the moving object, and includes a pathway on which the moving object moves and a surrounding area of the pathway. The control information acquisition step includes inputting, when a captured image acquired by the external camera imaging the target region and the moving object, and the appearance state identified by the state information are input, the captured image and the appearance state identified by the state information to a trained machine learning model, thereby acquiring at least one of a control signal for defining operation of the moving object that moves by the unmanned driving and a parameter used in generating the control signal. The trained machine learning model outputs at least one of the control signal and the parameter. The appearance state includes a plurality of appearance states into which the target region is classified according to a change in appearance. The machine learning model has been trained in advance using a plurality of sets of training data in which a training image including the target region and the moving object, a correct answer label, and supplementary information indicating the appearance state of the target region included in the training image are associated with each other. According to the above aspect, a captured image and an appearance state of the target region identified by the state information are input to a machine learning model that has been trained in advance using a plurality of sets of training data in which a training image including the target region and a moving object, a correct answer label, and supplementary information indicating the appearance state of the target region included in the training image are associated with one another. In this way, it is possible to acquire at least one of the control signal and the parameter used in generating the control signal. In this way, it is possible to suppress a decrease in accuracy of the control signal output from the machine learning model and the parameter used in generating the control signal.

The present disclosure can be realized in various aspects other than the information processing device, the information processing system, and the information processing method described above. For example, the present disclosure may be embodied in aspects of methods for producing an information processing device, an information processing system, and a moving object, control methods for an information processing device, an information processing system, and a moving object, computer programs that execute the control methods, as well as non-transitory storage mediums storing the computer programs, and the like.

BRIEF DESCRIPTION OF THE DRAWINGS

Fig. 1 shows a structure of an information processing system in a first embodiment;
Fig. 2 is a flowchart showing a running control method of a vehicle in the first embodiment;
Fig. 3 is a flowchart showing a retraining method for a first learning model in the first embodiment;
Fig. 4 is a flowchart showing a method for acquiring shape data in the first embodiment;
Fig. 5 is a flowchart showing an example of a vehicle position calculation method;
Fig. 6 is a schematic diagram showing examples of various images when the method shown in Fig. 5 is performed;
Fig. 7 is a diagram for illustrating details of a coordinate point calculation step;
Fig. 8 is a diagram for illustrating a calculation method of base coordinate points;
Fig. 9 is a first diagram for illustrating details of a position transformation step;
Fig. 10 is a second diagram for illustrating details of the position transformation step;
Fig. 11 is a diagram showing a structure of an information processing system in a second embodiment;
Fig. 12 is a diagram showing a structure of an information processing system in a third embodiment;
Fig. 13 is a flowchart showing a retraining method for a first learning model in the third embodiment;
Fig. 14 is a diagram showing a structure of an information processing system in a fourth embodiment;

Fig. 15 is a flowchart showing a training method for a second learning model;
Fig. 16 is a flowchart showing a method for acquiring shape data using the second learning model;
Fig. 17 is a diagram showing a structure of an information processing system in a fifth embodiment;
Fig. 18 is a flowchart showing a training method for a third learning model;
Fig. 19 is a flowchart showing a method for acquiring shape data using the third learning model;
Fig. 20 is a diagram showing an example of a method for generating a training image;
Fig. 21 is a diagram showing a structure of an information processing system in a seventh embodiment;
Fig. 22 is a diagram for illustrating a rectangle coordinate value;
Fig. 23 is a flowchart showing a retraining method for a fourth learning model;
Fig. 24 is a flowchart showing a method for acquiring a rectangle coordinate value using the fourth learning model;
Fig. 25 is a diagram showing a structure of an information processing system in an eighth embodiment;
Fig. 26 is a diagram for illustrating a three-dimensional coordinate value;
Fig. 27 is a flowchart showing a retraining method for a fifth learning model;
Fig. 28 is a flowchart showing a method for acquiring a three-dimensional coordinate value using the fifth learning model;
Fig. 29 is a diagram showing a structure of an information processing system in a ninth embodiment;
Fig. 30 is a flowchart showing a retraining method for a sixth learning model;
Fig. 31 is a flowchart showing a method for acquiring vehicle position information using the sixth learning model;
Fig. 32 is a diagram showing a structure of an information processing system in a tenth embodiment;
Fig. 33 is a flowchart showing a retraining method for a seventh learning model;
Fig. 34 is a flowchart showing a method for acquiring a running control signal using the seventh learning model;
Fig. 35 is a diagram showing a structure of an information processing system in an eleventh embodiment;
Fig. 36 is a flowchart showing a transfer learning method for the first learning model;
Fig. 37 is a flowchart showing a method for acquiring shape data in the eleventh embodiment;
Fig. 38 is a diagram showing a structure of an information processing system in a twelfth embodiment;
Fig. 39 is a flowchart showing a training method for a learning model in the twelfth embodiment;

Fig. 40 is a flowchart showing a method for acquiring shape data in the twelfth embodiment;

Fig. 41 is a diagram showing a structure of an information processing system in a thirteenth embodiment; and

Fig. 42 is a flowchart showing a running control method of a vehicle in the thirteenth embodiment.

DETAILED DESCRIPTION

A. First Embodiment:

A-1. Structure of Information Processing System:

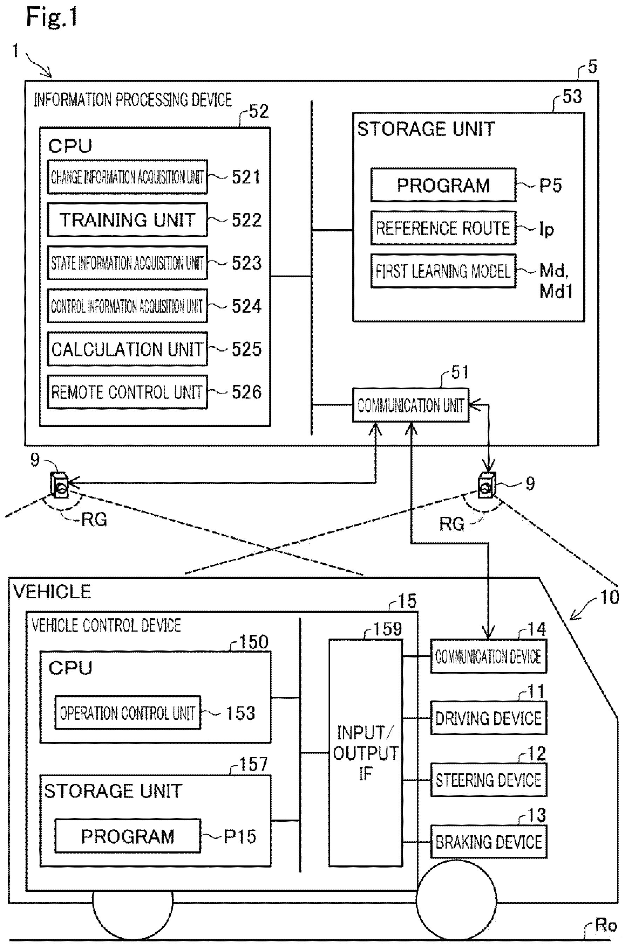

Fig. 1 is a diagram showing a structure of an information processing system 1 in the first embodiment. The information processing system 1 is a system for moving a moving object without running operation by a passenger riding on the moving object. The information processing system 1 includes one or more moving objects, one or more external cameras 9 provided at different locations from the moving objects, and an information processing device 5.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a track, a bus, a two-wheel vehicle, a four-wheel vehicle, a construction vehicle, or a combat vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

A vehicle 10 includes a driving device 11, a steering device 12, a braking device 13, a communication device 14, and a vehicle control device 15. The driving device 11 accelerates the vehicle 10. The driving device 11 includes wheels, a driving power source that rotates the wheels, and a power supply device that supplies power to the driving power source. For example, if the vehicle 10 is an electric vehicle, the driving power source is a driving motor and the power supply device is a battery such as a lithium-ion battery. The steering device 12 changes the traveling direction of the vehicle 10. The braking device 13 decelerates the vehicle 10. The communication device 14 communicates with external devices using wireless communication or the like. The external devices refer to devices provided in different locations from the own vehicle 10, such as the information processing device 5, and another vehicle 10. The communication device 14 is, for example, a wireless communication device.

The vehicle control device 15 controls operation of the vehicle 10. The vehicle control device 15 includes a CPU 150, a storage unit 157, and an input/output interface 159. In the vehicle control device 15, the CPU 150, the storage unit 157, and the input/output interface 159 are connected one another via a bus or the like to enable bidirectional communication. The input/output interface 159 is used to communicate with various devices mounted on the own vehicle 10. The storage unit 157 of the vehicle control device 15 stores various types of information, including various programs P15 that control operation of the vehicle control device 15. The storage unit 157 of the vehicle control device 15 includes, for example, RAM, ROM, and a hard disk drive (HDD). The CPU 150 of the vehicle control device 15 functions as an operation control unit 153 by expanding the various programs P15 stored in the storage unit 157. The operation control unit 153 performs driving control of the vehicle 10 by controlling operation of actuators that change acceleration/deceleration and a steering angle of the vehicle 10. The "driving control" refers to various controls for driving the actuators that exhibit three functions, i.e., "running," "turning," and "stopping" of the vehicle 10, by, for example, adjusting acceleration, a speed, and a steering angle of the vehicle 10. In the present embodiment, the actuators include an actuator for the driving device 11, an actuator for the steering device 12, and an actuator for the braking device 13. Further, at least some of the functions of the CPU 150 of the vehicle control device 15 may be implemented by a hardware circuit.

The vehicle 10 is configured to be capable of running by unmanned driving. The "unmanned driving" means driving independent of running operation by a passenger. The running operation means operation relating to at least one of "run," "turn," and "stop" of the vehicle 10. The unmanned driving is realized by automatic remote control or manual remote control using a device provided outside the vehicle 10 or by autonomous control by the vehicle 10. A passenger not involved in running operation may be on-board a vehicle running by the unmanned driving. The passenger not involved in running operation includes a person simply sitting in a seat of the vehicle 10 and a person doing work such as assembly, inspection, or operation of switches different from running operation while on-board the vehicle 10. Driving by running operation by a passenger may also be called "manned driving."

In the present specification, the "remote control" includes "complete remote control" by which all motions of the vehicle 10 are completely determined from outside the vehicle 10, and "partial remote control" by which some of the motions of the vehicle 10 are determined from outside the vehicle 10. The "autonomous control" includes "complete autonomous control" by which the vehicle 10 controls a motion of the vehicle 100 autonomously without receiving any information from a device outside the vehicle 10, and "partial autonomous control" by which the vehicle 10 controls a motion of the vehicle 10 autonomously using information received from a device outside the vehicle 10.

In the present embodiment, the information processing system 1 is used in a factory where the vehicles 10 are produced. The reference coordinate system of the factory is the global coordinate system. That is, any location in the factory is expressed with X, Y, and Z coordinates in the global coordinate system. The factory has a first place and a second place. The first place and the second place are connected by a pathway Ro on which the vehicle 10 can run. In the factory, a plurality of external cameras 9 are provided along the pathway Ro. Each external camera 9 captures an image of an imaging range RG including a target region and the vehicle 10 from outside of the vehicle 10. The target region is a region that includes the pathway Ro on which the vehicle 10 runs and a surrounding area of the pathway Ro. The position of each external camera 9 in the factory is adjusted in advance. The vehicle 10 moves from the first place to the second place through the pathway Ro by unmanned driving. In alternative embodiments, the vehicle 10 may run in a place different from the factory by unmanned driving.

The information processing device 5 is used to cause the vehicle 10 to run by unmanned driving. The information processing device 5 is, for example, a server provided at a place different from the vehicle 10. The information processing device 5 trains a machine learning model Md, or acquires and uses the machine learning model Md that has already been trained to cause the vehicle 10 to run by unmanned driving. The machine learning model Md outputs at least one of a running control signal and a signal generation parameter when captured images are input, and the like. The captured images are acquired by the external camera 9 capturing images of the target region and the vehicle 10. Each captured image is either an original image, i.e., raw data output from the external camera 9, or an edited image obtained by editing the original image. The running control signal is a control signal for regulating the operation of the vehicle 10 so as to cause the vehicle 10 to run by unmanned driving. In the present embodiment, the running control signal includes the acceleration and the steering angle of the vehicle 10 as control parameters. In alternative embodiments, the running control signal may include the speed of the vehicle 10 as a control parameter instead of, or in addition to, the acceleration of the vehicle 10. The signal generation parameter is a parameter used in the generation of the running control signal. The signal generation parameter is, for example, either vehicle position information, a coordinate value used to calculate at least one of the position and orientation of the vehicle 10, or shape data used to calculate at least one of the position and orientation of the vehicle 10. The shape data indicates the exterior shape of the vehicle 10. The shape data is generated by detecting the vehicle 10 from a captured image. The shape data is, for example, a mask image in which a mask region is added to the captured image by masking a region representing the vehicle 10 among the regions constituting the captured image. Each of the regions constituting the captured image is, for example, a single pixel that constitutes the captured image.

In the present embodiment, a first learning model Md1 is used as the machine learning model Md. The first learning model Md1 outputs shape data as the signal generation parameter. Therefore, the information processing device 5 acquires the shape data by inputting a captured image into the first learning model Md1. The information processing device 5 then calculates the position and orientation of the vehicle 10 using the shape data. The information processing device 5 then generates the running control signal using the vehicle position information, or the like, and transmits the running control signal to the vehicle 10. In this way, the information processing device 5 causes the vehicle 10 to run by remote control.

Here, there may be cases where the appearance state of the target region changes over time, for example, when the pathway Ro on which the vehicle 10 runs is soiled. Accordingly, the target region is classified into a plurality of appearance states according to changes in its appearance. In case the appearance state of the target region changes, when a captured image including the vehicle 10 and the target region after its change in the appearance state is input to the first learning model Md1 that has been trained using a training image including the vehicle 10 and the target region before its change in the appearance state, there is a possibility that the detection accuracy of the vehicle 10 decreases. Therefore, when it is determined that the appearance state of the target region has changed, the information processing device 5 retrains the first learning model Md1 and acquires shape data using the retrained first learning model Md1.

The following description is given under the assumption that dirt in the target region is the factor affecting the change in the appearance state of the target region. For example, at the time when the vehicle 10 starts running by unmanned driving, a pre-change state, i.e., a state before the appearance state of the target region changes is a state where the target region is not soiled with dirt. A post-change state, i.e., a state after the appearance state of the target region has changed is a state where the target region is soiled with dirt. In this case, it is determined that the target region is soiled during the period when the vehicle 10 is controlled by unmanned driving. At the time point after the first learning model Md1, which has been retrained, is stored in the storage unit 53 of the information processing device 5, the pre-change state and the post-change state are as follows. In this case, the pre-change state is a state where the target region is soiled. The post-change state is a state where the dirt in the target region has been removed by cleaning, or the like, and therefore the target region is not soiled.

The information processing device 5 includes a communication unit 51, a CPU 52, and a storage unit 53. In the information processing device 5, the communication unit 51, the CPU 52, and the storage unit 53 are connected one another via a bus or the like to enable bidirectional communication.

The communication unit 51 of the information processing device 5 is capable of communicatively connecting the information processing device 5 to devices other than the information processing device 5. The communication unit 51 of the information processing device 5 is, for example, a wireless communication device.

The storage unit 53 of the information processing device 5 stores various types of information, including various programs P5 that control operation of the information processing device 5, a reference route Ip, and the first learning model Md1. The storage unit 53 of the information processing device 5 includes, for example, RAM, ROM, and a hard disk drive (HDD).

The first learning model Md1 is a trained machine learning model Md that utilizes artificial intelligence, and outputs shape data by detecting the exterior shape of the vehicle 10 from the captured image. The first learning model Md1 has been trained in advance by supervised learning using an initial training data set. The initial training data set includes a plurality of sets of training data in which a training image including the vehicle 10 and a target region before its change in the appearance state is associated with a correct answer label according to the output of the machine learning model Md. In the present embodiment, the correct answer label is a region correct answer label. Each region correct answer label is a correct answer label indicating whether each region in the training image is a region indicating the vehicle 10 or a region indicating a region other than the vehicle 10. As the first learning model Md1, for example, a convolutional neural network (hereinafter referred to as "CNN") for implementing either semantic segmentation or instance segmentation may be used. Upon the training of the CNN, for example, CNN parameters are updated by back-propagation (error back-propagation) to reduce errors between the output result of the first learning model Md1 and the region correct answer label.

The CPU 52 of the information processing device 5 functions as a change information acquisition unit 521, a training unit 522, a state information acquisition unit 523, a control information acquisition unit 524, a calculation unit 525, and a remote control unit 526 by expanding the various programs P5 stored in the storage unit 53.

The change information acquisition unit 521 acquires change information. The change information is information regarding changes in the appearance state of the target region. Specifically, the change information is information used to determine whether the appearance state of the target region has changed from the appearance state of the target region in the training image used at the time of the training of the trained first learning model Md1. If dirt in the target region is the factor affecting the change in the appearance state of the target region, the change information is, for example, the following information. In this case, the change information is information used to determine whether the appearance state of the target region has changed due to dirt, which did not exist upon the training of the first learning model Md1 stored in the storage unit 53 of the information processing device 5. In the present embodiment, the change information acquisition unit 521 acquires a captured image as the change information.

When the change information indicates a change in the appearance state of the target region, the training unit 522 performs retraining of the first learning model Md1 as learning. The retraining is an example of additional learning. In the present embodiment, the training unit 522 retrains the first learning model Md1 that has been trained using the initial training data set, using a retraining data set. In the present embodiment, the retraining data set includes a plurality of sets of training data in which a training image including the vehicle 10 and the target region after its change in the appearance state is associated with a region correct answer label.

For example, if there is no dirt in the target region at the time point when the vehicle 10 starts running by unmanned driving, the first learning model Md1 stored in the storage unit 53 of the information processing device 5 has been trained in advance by supervised learning using the following initial training data set. In this case, the initial training data set includes a plurality of sets of training data in which a training image including the vehicle 10 and the target region with no dirt is associated with a region correct answer label. If the training unit 522 determines that the appearance state of the target region has changed, that is, if the training unit 522 determines that the target region is soiled, during the period in which unmanned driving control is being executed, the following processing is performed. In this case, the training unit 522 retrains the first learning model Md1, which has been trained using the initial training data set, using the following retraining data set during the period in which unmanned driving control is being executed. In this case, the retraining data set includes a plurality of sets of training data in which a training image including the vehicle 10 and the target region with dirt is associated with a region correct answer label.

In the present embodiment, the training unit 522 determines, using the change information, whether the appearance state of the target region has changed from the appearance state at the time when the first learning model Md1 was trained. More specifically, the training unit 522 determines, using a captured image as the change information, whether the appearance state of the target region has changed from the appearance state at the time when the first learning model Md1 was trained. The training unit 522 determines whether the appearance state of the target region has changed from the appearance state at the time when the first learning model Md1 was trained, for example, by detecting the factor affecting the change in the appearance state of the target region from the captured image. Specifically, when the factor affecting the change in the appearance state of the target region is detected from the captured image, the training unit 522 determines that the appearance state of the target region has changed from the appearance state at the time when the first learning model Md1 was trained. On the other hand, when the factor affecting the change in the appearance state of the target region is not detected from the captured image, the training unit 522 determines that the appearance state of the target region has not changed from the appearance state at the time when the first learning model Md1 was trained. More specifically, the training unit 522 determines the following in the case where the pre-change state is a state where the target region is not soiled, and the post-change state is a state where the target region is soiled. In this case, the training unit 522 determines that the target region is not soiled and the appearance state of the target region has not changed if no dirt is detected in the captured image. On the other hand, the training unit 522 determines that the target region is soiled and the appearance state of the target region has changed if dirt is detected in the captured image.

Note that the training unit 522 may determine, using the pixel value of the captured image, whether the appearance state of the target region has changed from the appearance state at the time when the first learning model Md1 was trained. The training unit 522 determines that the appearance state of the target region has changed from the appearance state at the time when the first learning model Md1 was trained, for example, when the difference between the sum of the luminance values of the respective pixels in the original image and a predetermined prescribed luminance value is equal to or more than a predetermined threshold. On the other hand, the training unit 522 determines that the appearance state of the target region has not changed from the appearance state at the time when the first learning model Md1 was trained, for example, when the difference between the sum of the luminance values of the respective pixels in the original image and the prescribed luminance value is less than the threshold.

The state information acquisition unit 523 acquires state information. The state information is information regarding the appearance state of the target region. In the present embodiment, the state information is information for determining whether the appearance state of the target region is a state where the target region is soiled or a state where the target region is not soiled. In the present embodiment, the state information acquisition unit 523 acquires a captured image as the state information.

The control information acquisition unit 524 identifies the appearance state of the target region using the state information, and inputs a captured image to the first learning model Md1 corresponding to the appearance state of the target region, thereby acquiring at least one of the running control signal and the signal generation parameter. When the appearance state of the target region identified by the state information is different from the appearance state of the target region in the training image used at the time of the training of the first learning model Md1, the control information acquisition unit 524 performs the following processing. In this case, the control information acquisition unit 524 inputs a captured image to the retrained first learning model Md1 that has been retrained using a plurality of sets of training data in which a training image including the vehicle 10 and the target region having an appearance state identified by the state information is associated with a region correct answer label. On the other hand, when the appearance state of the target region identified by the state information is the same as the appearance state of the target region in the training image used at the time of the training of the first learning model Md1 stored in the storage unit 53, the control information acquisition unit 524 performs the following processing. In this case, the control information acquisition unit 524 inputs a captured image to the first learning model Md1 that has not been retrained using a plurality of sets of training data in which a training image including the vehicle 10 and the target region having an appearance state identified by the state information is associated with a region correct answer label.

The calculation unit 525 acquires vehicle position information by calculating the position and orientation of the vehicle 10. The vehicle position information is position information that serves as the base in generating the running control signals. In the present embodiment, the vehicle position information includes the position and orientation of the vehicle 10 in the reference coordinate system of the factory.

The position of the vehicle 10 is, for example, the position of a positioning point 10e set in advance for a specific part of the vehicle 10. In the present embodiment, the calculation unit 525 calculates the coordinates of the positioning point 10e of the vehicle 10 in the coordinate system of the captured image, i.e., the local coordinate system, using the shape data acquired by inputting the captured image into the first learning model Md1, and transforms the calculated coordinates to the coordinates in the global coordinate system, thereby calculating the position of the vehicle 10.

The orientation of the vehicle 10 is, for example, a direction represented by a vector that runs from the rear side to the front side of the vehicle 10 along the front-rear axis passing through the center of gravity of the vehicle 10. In the present embodiment, the calculation unit 525 calculates the orientation of the vehicle 10 based on the orientation of the movement vector of the vehicle 10 calculated from the positional changes of the feature points of the vehicle 10 between frames of the captured images using, for example, the optical flow method.

The remote control unit 526 performs remote control of the running operation of the vehicle 10 by generating running control signals and transmitting the running control signals to the vehicle 10. First, the remote control unit 526 determines the target location to which the vehicle 10 is supposed to go next so as to generate a running control signal. In the present embodiment, the target location is expressed in the form of X, Y, Z coordinates in the global coordinate system of the factory. As mentioned above, the reference route Ip, which is the route on which the vehicle 10 is supposed to run, is stored in advance in the storage unit 53 of the information processing device 5. The remote control unit 526 determines the target location to which the vehicle 10 is supposed to go next using the vehicle position information and the reference route Ip. The reference route Ip is the route on which the vehicle 10 is supposed to run. The route is represented by a node indicating the departure point, a node indicating the transit point, a node indicating the destination, and a link connecting these nodes. The remote control unit 526 determines the target location on the reference route Ip ahead of the current location of the vehicle 10. The remote control unit 526 generates a running control signal to cause the vehicle 10 to run toward the determined target location. As mentioned above, in the present embodiment, the running control signal includes the acceleration and the steering angle of the vehicle 10 as parameters. The remote control unit 526 calculates the running speed of the vehicle 10 based on the positional transition of the vehicle 10 and compares the calculated running speed with a predetermined target speed of the vehicle 10. When the running speed is lower than the target speed as a whole, the remote control unit 526 determines the acceleration so that the vehicle 10 increases its speed, and when the running speed is higher than the target speed, the remote control unit 526 determines the acceleration so that the vehicle 10 decreases its speed. Further, when the vehicle 10 is located on the reference route Ip, the remote control unit 526 determines the steering angle and the acceleration so that the vehicle 10 does not deviate from the reference route Ip. When the vehicle 10 is not located on the reference route Ip, in other words, when the vehicle 10 deviates from the reference route Ip, the remote control unit 526 determines the steering angle and the acceleration so that the vehicle 10 returns on the reference route Ip. In this way, the remote control unit 526 generates the running control signal including the acceleration and the steering angle of the vehicle 10 as parameters. The remote control unit 526 then transmits the generated running control signal to the vehicle 10. At least some of the functions of the CPU 52 of the information processing device 5 may be implemented by a hardware circuit.

A-2. Vehicle Operation Control Method

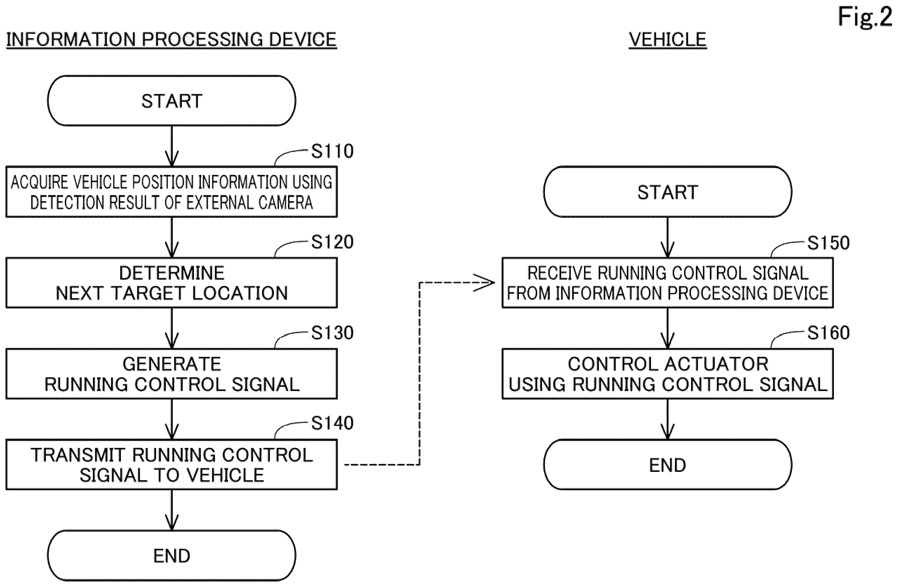

Fig. 2 is a flowchart showing a method for running the vehicle 10 in the information processing system 1 of the first embodiment. The flow shown in Fig. 2 is repeated, for example, every predetermined time from the time point at which the running of the vehicle 10 by unmanned driving is started.

The calculation unit 525 of the information processing device 5 acquires the vehicle position information using detection results output from the external camera 9, which is a sensor located outside the vehicle 10 (step S110). The remote control unit 526 determines the target location where the vehicle 10 is supposed to go next (step S120). The remote control unit 526 determines the target location to which the vehicle 10 is supposed to go next using the vehicle position information and the reference route Ip. The remote control unit 526 determines the target location on the reference route Ip ahead of the current location of the vehicle 10.

The remote control unit 526 generates a running control signal to cause the vehicle 10 to run toward the determined target location (step S130). The remote control unit 526 calculates the running speed of the vehicle 10 based on the positional transition of the vehicle 10 and compares the calculated running speed with a predetermined target speed of the vehicle 10. When the running speed is lower than the target speed, the remote control unit 526 determines the acceleration so that the vehicle 10 increases its speed, and when the running speed is higher than the target speed, the remote control unit 526 determines the acceleration so that the vehicle 10 decreases its speed. When the vehicle 10 is located on the reference route Ip, the remote control unit 526 determines the steering angle so that the vehicle 10 does not deviate from the reference route Ip. When the vehicle 10 is not located on the reference route Ip, in other words, when the vehicle 10 deviates from the reference route Ip, the remote control unit 526 determines the steering angle so that the vehicle 10 returns on the reference route Ip.

The remote control unit 526 transmits the generated running control signal to the vehicle 10 (step S140). The information processing device 5 repeats the acquisition of the vehicle position information, the determination of the target location, the generation of the running control signal, the transmission of the running control signal, and the like, in a predetermined cycle.

The vehicle control device 15 mounted on the vehicle 10 receives the running control signal from the information processing device 5 (step S150). The operation control unit 153 of the vehicle control device 15 controls the actuator using the received running control signal, thereby causing the vehicle 10 to run at the acceleration and the steering angle indicated by the running control signal (step S160). The vehicle control device 15 repeats the reception of the running control signal and the control of the actuator in a predetermined cycle. The information processing system 1 of the present embodiment enables the vehicle 10 to run by remote control, thereby moving the vehicle 10 without using transport equipment, such as a crane, a conveyor, or the like.

A-3. Information Processing Method

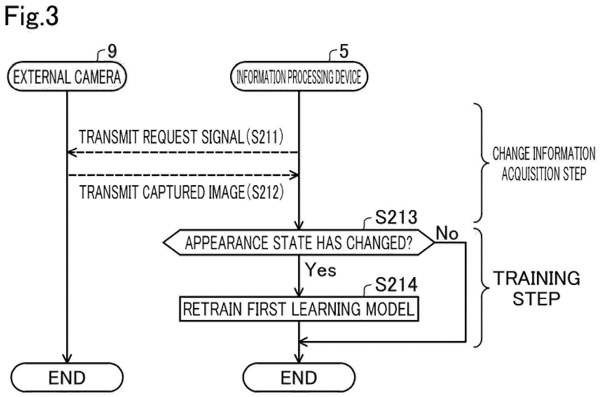

Fig. 3 is a flowchart showing a retraining method for the first learning model Md1 in the first embodiment. The flow shown in Fig. 3 is repeated, for example, every predetermined time from the time point at which the running of the vehicle 10 by unmanned driving is started.

In a change information acquisition step, the change information acquisition unit 521 transmits a request signal for acquiring a captured image as the change information to the external camera 9 (step S211). Upon receiving the request signal, the external camera 9 transmits the captured image to the information processing device 5 (step S212).

After the change information acquisition step, a training step is performed. In the training step, the training unit 522 determines, using the captured image, whether the appearance state of the target region has changed from the appearance state at the time when the first learning model Md1 stored in the storage unit 53 was trained. When the training unit 522 determines that the appearance state of the target region has changed from the appearance state at the time when the first learning model Md1 stored in the storage unit 53 was trained (step S213: Yes), the training unit 522 retrains the first learning model Md1 (step S214). On the other hand, when the training unit 522 determines that the appearance state of the target region has not changed from the appearance state at the time when the first learning model Md1 stored in the storage unit 53 was trained (step S213: No), the training unit 522 ends the flow without retraining the first learning model Md1.

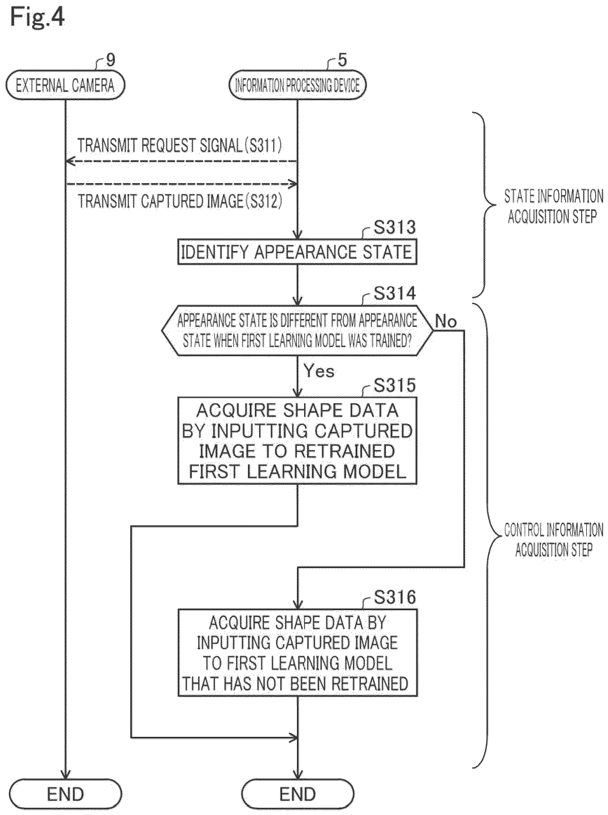

Fig. 4 is a flowchart showing a method for acquiring shape data in the first embodiment. The flow shown in Fig. 4 is repeated, for example, every predetermined time from the time point at which the running of the vehicle 10 by unmanned driving is started.

In a state information acquisition step, the state information acquisition unit 523 transmits a request signal for acquiring a captured image as the state information to the external camera 9 (step S311). Upon receiving the request signal, the external camera 9 transmits the captured image to the information processing device 5 (step S312). The state information acquisition unit 523 identifies the appearance state of the target region by analyzing the captured image (step S313).

After the state information acquisition step, a control information acquisition step is performed. In the control information acquisition step, the control information acquisition unit 524 acquires shape data by inputting a captured image to the first learning model Md1, which has been trained using a training image that includes the vehicle 10 and the target region having an appearance state identified by the state information. Specifically, when the appearance state identified by the state information is different from the appearance state of the target region in the training image used at the time of the training of the first learning model Md1 stored in the storage unit 53 (step S314: Yes), the control information acquisition unit 524 performs the following processing. In this case, the control information acquisition unit 524 inputs a captured image to the retrained first learning model Md1 that has been retrained using a plurality of sets of training data in which a training image including the vehicle 10 and the target region having an appearance state identified by the state information is associated with a region correct answer label. In this way, the control information acquisition unit 524 acquires the shape data (step S315). On the other hand, when the appearance state identified by the state information is the same as the appearance state of the target region in the training image used at the time of the training of the first learning model Md1 stored in the storage unit 53 (step S314: No), the control information acquisition unit 524 performs the following processing. In this case, the control information acquisition unit 524 inputs a captured image to the first learning model Md1 that has not been retrained using a plurality of sets of training data in which a training image including the vehicle 10 and the target region having an appearance state identified by the state information is associated with a region correct answer label, thereby acquiring the shape data (step S316).

A-4. Vehicle Position Calculation Method

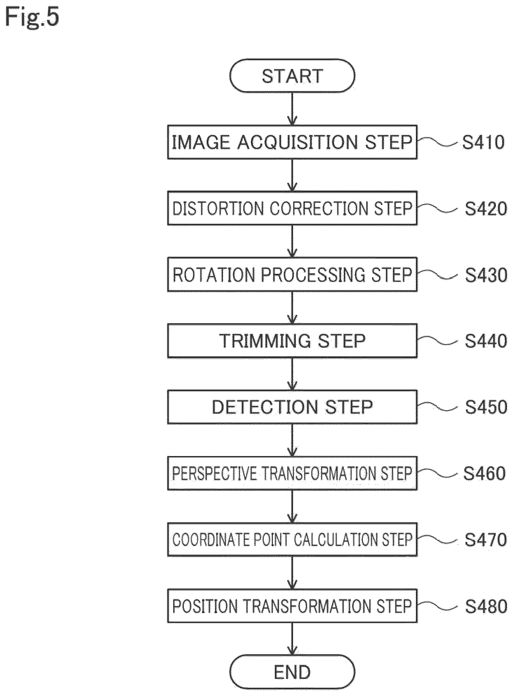

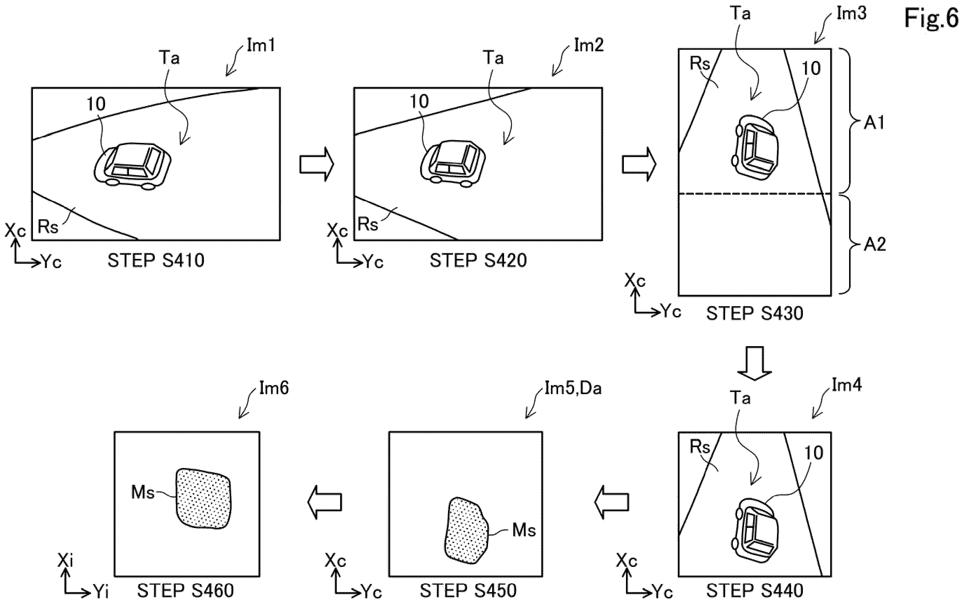

Fig. 5 is a flowchart showing an example of a method for generating shape data and a method for position calculation of the vehicle 10 using the shape data. Fig. 6 is a schematic diagram showing examples of various images Im1 to Im6 when the method shown in Fig. 5 is performed. In Fig. 6, each step of Fig. 5 is labelled with a corresponding step number. In the present embodiment, the positioning point 10e of the vehicle 10 is the rear end in the left side surface of the vehicle 10. The positioning point 10e of the vehicle 10 may be a portion other than the rear end in the left side surface of the vehicle 10.

In an image acquisition step (step S410), the control information acquisition unit 524 acquires an original image Im1 output from the external camera 9. In a distortion correction step (step S420), the control information acquisition unit 524 generates a corrected image Im2 as an edited image by correcting distortion of the original image Im1. In a rotation processing step (step S430), the control information acquisition unit 524 rotates the corrected image Im2. In this way, the control information acquisition unit 524 generates a rotated image Im3 as an edited image. In a trimming step (step S440), from among the regions constituting the rotated image Im3, the control information acquisition unit 524 deletes an unnecessary region A2 from the rotated image Im3. The unnecessary region A2 is a region other than a necessary region A1 constituted of the vehicle 10 and the surrounding area of the vehicle 10. In this way, the control information acquisition unit 524 generates a processed image Im4 as an edited image. The respective steps from the step S420 to the step S440 are preprocessing steps for improving the detection accuracy when the vehicle 10 is detected from the captured images Im1 to Im4. Therefore, at least one step from the step S420 to the step S440 may be omitted.

In a detection step (step S450), the control information acquisition unit 524 inputs the processed image Im4 to the first learning model Md1. In this way, the control information acquisition unit 524 detects the vehicle 10 from the processed image Im4 and acquires a first mask image Im5 as shape data Da. The first mask image Im5 is an image in which a mask region Ms is added to the processed image Im4 by masking the region representing the vehicle 10 among the regions constituting the processed image Im4.

In a perspective transformation step (step S460), the calculation unit 525 generates a second mask image Im6 by subjecting the first mask image Im5 to perspective transformation. The calculation unit 525 performs perspective transformation on the first mask image Im5, for example, using a predetermined perspective transformation parameter, thereby generating a bird's-eye view image that is viewed from a viewpoint above the vehicle 10 that is substantially perpendicular to a road surface Rs. The perspective transformation parameter is, for example, a parameter related to the position information and internal parameter of the external camera 9 obtained by calibration. As a result, the calculation unit 525 generates the second mask image Im6 represented by the local coordinate system from the first mask image Im5 represented by the camera coordinate system. The camera coordinate system is a coordinate system with the focal point of the external camera 9 as the origin and the coordinate axes indicated by the Xc axis and the Yc axis, which is orthogonal to the Xc axis. The local coordinate system is a coordinate system with one point in the image plane as the origin and the coordinate axes represented by the Xi axis and the Yi axis, which is orthogonal to the Xi axis.

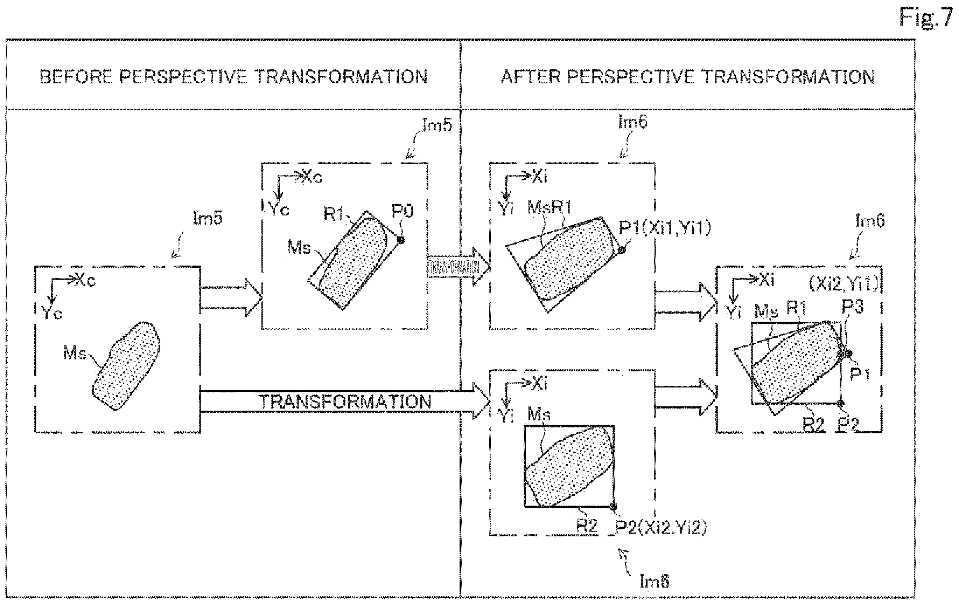

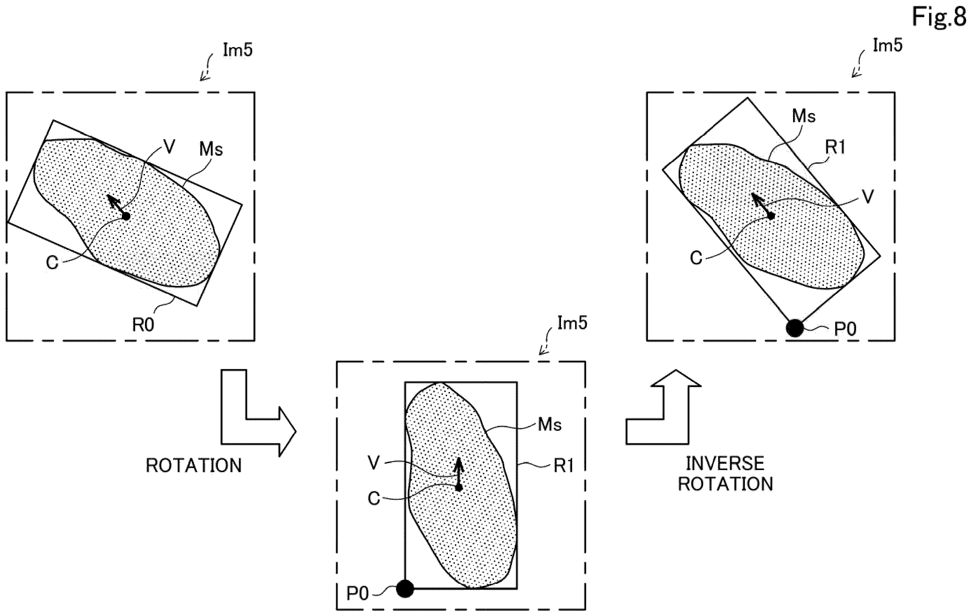

In a coordinate point calculation step (step S470), the calculation unit 525 calculates a local coordinate point, which indicates the position of the vehicle 10 in the local coordinate system. Fig. 7 is a diagram for illustrating details of the coordinate point calculation step. To calculate the local coordinate point, the calculation unit 525 first calculates a base coordinate point P0 from a first bounding rectangle R1 set in the mask region Ms in the first mask image Im5, which is the image before the perspective transformation. Fig. 8 is a diagram for illustrating a method for calculating the base coordinate point P0. To calculate the base coordinate point P0, the calculation unit 525 sets a base bounding rectangle R0 with respect to the mask region Ms in the first mask image Im5. Next, the calculation unit 525 rotates the first mask image Im5 by the required amount of rotation with the center of gravity C of the mask region Ms as the rotation center so that the direction of a movement vector V of the vehicle 10 corresponding to the mask region Ms in the first mask image Im5 is directed to a predetermined direction. The predetermined direction is, for example, the upward direction on a screen of a display device that displays the first mask image Im5. Next, the calculation unit 525 sets the first bounding rectangle R1 with respect to the mask region Ms of the rotated first mask image Im5 so that the long side thereof becomes parallel to the movement vector V. Next, the calculation unit 525 inversely rotates the first mask image Im5 in which the first bounding rectangle R1 is added, with the center of gravity C of the mask region Ms as the rotation center, by the above rotation amount. The calculation unit 525 thus sets, as the base coordinate point P0, the coordinate point of the vertex that is one of the four vertices of the first bounding rectangle R1 and that has the coordinates with the closest distance to the positioning point 10e of the vehicle 10.

Next, as shown in Fig. 7, the calculation unit 525 performs perspective transformation with respect to the inversely rotated first mask image Im5, i.e., the first mask image Im5 after the calculation of the base coordinate point P0. In this way, the calculation unit 525 sets the coordinate point corresponding to the base coordinate point P0 as a first coordinate point P1 in the first bounding rectangle R1 deformed by the perspective transformation.

Next, the calculation unit 525 sets a second bounding rectangle R2 with respect to the mask region Ms in the second mask image Im6 obtained by perspective transformation of the first mask image Im5. Then, the calculation unit 525 sets, as a second coordinate point P2, a vertex that indicates the same position as the first coordinate point P1 from among the vertices of the second bounding rectangle R2. In other words, the first coordinate point P1 and the second coordinate point P2 are correlated with each other, as they are coordinate points indicating the same position.

Next, the calculation unit 525 performs a correction to replace the coordinates $(Xi1, Yi1)$ of the first coordinate point P1 with the coordinates $(Xi2, Yi2)$ of the second coordinate point P2 according to the relative magnitude between the coordinate values of the first coordinate point P1 and the second coordinate point P2. When the coordinate value $Xi1$ in the $Xi$ direction of the first coordinate point P1 is greater than the coordinate value $Xi2$ in the $Xi$ direction of the second coordinate point P2 $(Xi1 > Xi2)$, the calculation unit 525 replaces the coordinate value $Xi1$ in the $Xi$ direction of the first coordinate point P1 with the coordinate value $Xi2$ in the $Xi$ direction of the second coordinate point P2. When the coordinate value $Yi1$ in the $Yi$ direction of the first coordinate point P1 is greater than the coordinate value $Yi2$ in the $Yi$ direction of the second coordinate point P2 $(Yi1 > Yi2)$, the calculation unit 525 replaces the coordinate value $Yi1$ in the $Yi$ direction of the first coordinate point P1 with the coordinate value $Yi2$ in the $Yi$ direction of the second coordinate point P2. In the example shown in Fig. 7, the coordinate value $Xi1$ in the $Xi$ direction of the first coordinate point P1 is greater than the coordinate value Xi2 in the Xi direction of the second coordinate point P2. Further, the coordinate value Yi1 in the Yi direction of the first coordinate point P1 is smaller than the coordinate value Yi2 in the Yi direction of the second coordinate point P2. Accordingly, a local coordinate point P3 has the coordinates (Xi2, Yi1). In this way, the calculation unit 525 calculates the local coordinate point P3, which indicates the position of the vehicle 10 in the local coordinate system, by correcting the first coordinate point P1 using the second coordinate point P2.

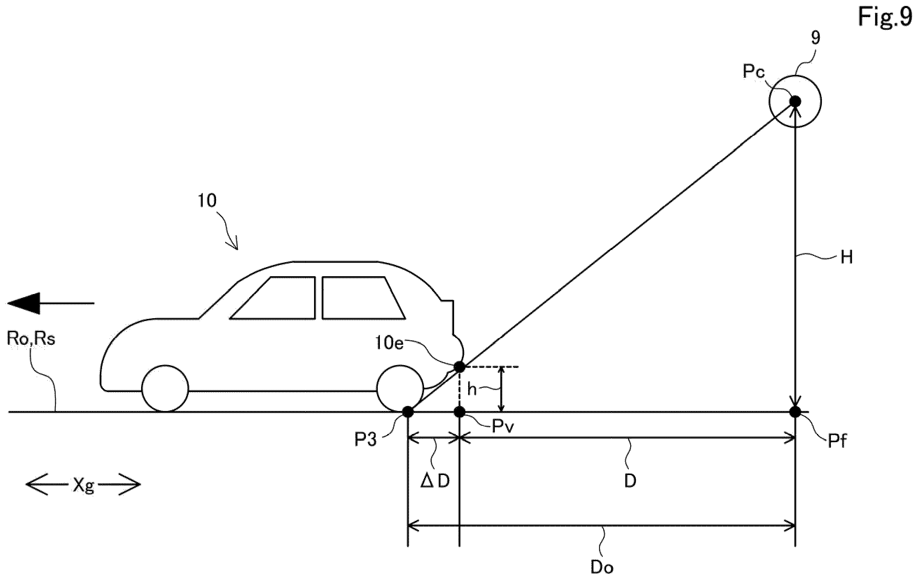

In a position transformation step (step S480), the calculation unit 525 calculates a vehicle coordinate point that indicates the position of the positioning point 10e of the vehicle 10 in the global coordinate system by transforming the local coordinate point P3 into the vehicle coordinate point. The calculation unit 525 transforms the local coordinate point P3 into the vehicle coordinate point using the relational expressions in the formulae (1) to (3) described later, which include the vehicle coordinate point as the objective variable, and the local coordinate point P3, an imaging parameter, and a vehicle parameter as the explanatory variables. The imaging parameter is a parameter regarding the distance of the external camera 9 from a predefined reference point. In the present embodiment, the imaging parameter is a height H (see Fig. 9 described later) of the external camera 9 from the road surface Rs. The vehicle parameter is a parameter regarding the distance of the positioning point 10e of the vehicle 10 from the reference point. In the present embodiment, the vehicle parameter is a height h (see Fig. 9 described later) of the positioning point 10e of the vehicle 10 from the road surface Rs.

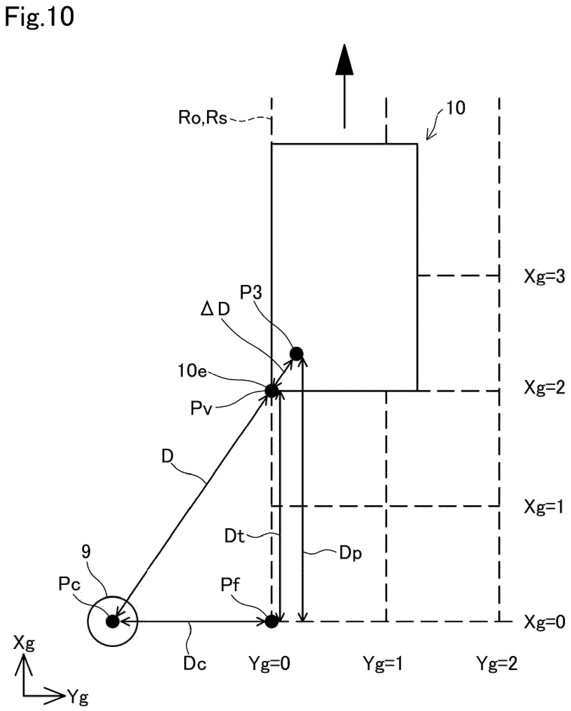

Fig. 9 is the first diagram for illustrating details of the position transformation step. Fig. 9 shows the vehicle 10 as viewed from the left side surface. Fig. 10 is the second diagram for illustrating details of the position transformation step. Fig. 10 shows the vehicle 10 as viewed from the roof side. The global coordinate system shown in Fig. 9 and Fig. 10 is a coordinate system with a fixed coordinate point Pf, which represents an arbitrary reference position on the road surface Rs, as the origin and the coordinate axes indicated by the Xg axis and the Yg axis, which is orthogonal to the Xg axis. An imaging coordinate point Pc is a coordinate point indicating the position of the external camera 9 that outputs the original image Im1 used to calculate the local coordinate point P3, in the global coordinate system. The fixed coordinate point Pf and the imaging coordinate point Pc are stored in advance, for example, in the storage unit 53 of the information processing device 5.

As shown in Fig. 9, Do represents an observation distance between the position of the external camera 9 and the position of the vehicle 10 (local coordinate point P3) on the XgYg plane. ΔD represents an observation error. H represents a height [m] of the external camera 9 from the road surface Rs as the imaging parameter. h represents a height [m] of the positioning point 10e of the vehicle 10 from the road surface Rs as the vehicle parameter. In this case, the observation error ΔD can be expressed by the following formula (1).

$$\Delta D = h/H \times Do \ ... \ Formula\ (1)$$

In other words, the larger the observation distance Do, the larger the observation error ΔD.

Assuming that a first distance D represents an actual distance between the position of the external camera 9 and the position of the positioning point 10e of the vehicle 10, the first distance D can be expressed by the following formula (2).

$$D = Do \times (1-h/H) \ ... \ Formula\ (2)$$

In other words, the first distance D is determined by the observation distance Do, the height H of the external camera 9 as the imaging parameter, and the height h of the positioning point 10e of the vehicle 10 as the vehicle parameter.

As shown in Fig. 10, assuming that an estimated distance Dp represents a distance between the reference position and an estimation position of the vehicle 10, and a second distance Dt represents an actual distance between the reference position and the vehicle 10, the second distance Dt can be expressed by the following formula (3).

$$Dt = Dp \times (1-h/H) \ ... \ Formula\ (3)$$

Here, the estimated distance Dp can be calculated using a third distance Dc, which is an actual distance obtained from the fixed coordinate point Pf and the imaging coordinate point Pc, as well as the local coordinate point P3 and the fixed coordinate point Pf. Therefore, the calculation unit 525 calculates a vehicle coordinate point Pv using the second distance Dt obtained by correcting the estimated distance Dp using the formula (3) shown above, and the fixed coordinate point Pf. The vehicle coordinate point Pv thus calculated is a coordinate point indicating the position of the positioning point 10e of the vehicle 10 in the global coordinate system, and therefore it corresponds to the position of the vehicle 10 in real space.

According to the first embodiment described above, the information processing device 5 can acquire the change information. Further, when the information processing device 5 determines, using the change information, that the appearance state of the target region Ta has changed, the information processing device 5 can perform the following processing. In this case, the information processing device 5 can retrain the first learning model Md1, which has been trained using a plurality of sets of training data in which a training image including the vehicle 10 and the target region Ta before its change in the appearance state is associated with a region correct answer label, using a plurality of sets of training data in which a training image including the vehicle 10 and the target region Ta after its change in the appearance state is associated with a region correct answer label. In this way, it is possible to suppress a decrease in detection accuracy in the detection of the vehicle 10 from the captured images Im1 to Im4, in the case where the appearance state of the target region Ta has changed.

Further, according to the first embodiment described above, the information processing device 5 can acquire the captured images Im1 to Im4 including the target region Ta and the vehicle 10 as the change information. Further, the information processing device 5 can determine, by detecting dirt in the captured images Im1 to Im4 through image analysis, whether the appearance state of the target region Ta has changed from the appearance state at the time when the first learning model Md1 was trained.

Further, according to the first embodiment described above, the information processing device 5 can retrain the first learning model Md1 during the period while control of unmanned driving is performed. In alternative embodiments, the information processing device 5 may train the first learning model Md1, for example, during the period while control of manned driving is performed, without executing control of unmanned driving.

Further, according to the first embodiment described above, the vehicle 10 runs in the factory by unmanned driving. In this way, the information processing device 5 can retrain the first learning model Md1 in the process of producing the vehicle 10.

Further, according to the first embodiment described above, the information processing device 5 can acquire the state information. Further, when the appearance state identified by the state information is different from the appearance state of the target region Ta in the training image used at the time of the training of the first learning model Md1, the information processing device 5 can acquire the shape data Da by performing the following processing. In this case, the information processing device 5 can acquire the shape data Da by inputting the captured images Im1 to Im4 to the retrained first learning model Md1 that has been retrained using a plurality of sets of training data in which a training image including the vehicle 10 and the target region Ta having an appearance state identified by the state information is associated with a region correct answer label. In this way, it is possible to suppress a decrease in accuracy in the detection of the vehicle 10 from the captured images Im1 to Im4, in the case where the appearance state of the target region Ta is different from the appearance state at the time when the first learning model Md1 was trained.

Further, according to the first embodiment described above, the information processing device 5 can acquire the captured images Im1 to Im4 including the target region Ta and the vehicle 10 as the state information. Further, the information processing device 5 can specify the appearance state of the target region Ta by detecting dirt in the captured images Im1 to Im4 through image analysis.

Note that the information processing device 5 may retrain the first learning model Md1 every time the appearance state of the target region Ta changes, and the retrained first learning model Md1 may be stored in the storage unit 53 as a new first learning model Md1, which is different from the first learning model Md1 before the retraining. Storing the retrained first learning model Md1 as a new first learning model Md1 different from the first learning model Md1 before the retraining in the storage unit 53 is preferably performed in the following manner. In this case, it is preferable to associate supplementary information indicating the appearance state of the target region Ta included in the training image used for the retraining with the retrained first learning model Md1. In this embodiment, the information processing device 5 can acquire at least one of the running control signal and the signal generation parameter using the trained first learning model Md1 that has been trained according to the appearance state of the target region Ta without performing the retraining every time the appearance state of the target region Ta changes. Furthermore, the information processing device 5 may acquire both the running control signal and the signal generation parameter by inputting the captured images Im1 to Im4 to the first learning model Md1.

B. Second Embodiment

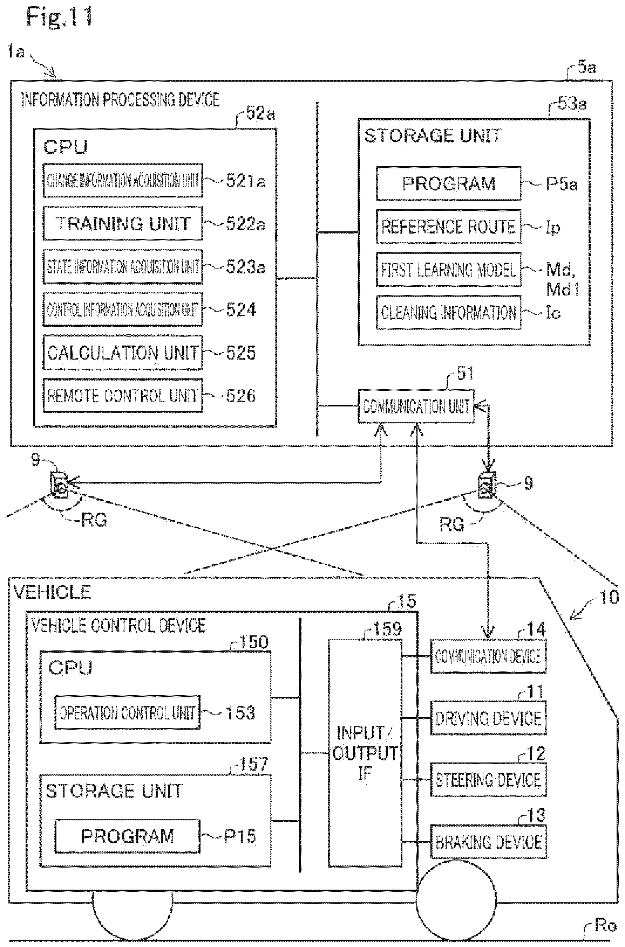

Fig. 11 is a diagram showing a structure of an information processing system 1a in the second embodiment. The information processing system 1a includes one or more vehicles 10, the external camera 9, and an information processing device 5a. In the present embodiment, the types of the change information and the state information are different from those in the first embodiment. The factor affecting the change in the appearance state in the target region Ta is, as in the first embodiment, dirt in the target region Ta. The rest of the structure of the information processing system 1a is the same as that of the first embodiment, unless otherwise specified. The same structure as that of the first embodiment is described with the same reference symbols and the explanation thereof is omitted.

The information processing device 5a has the communication unit 51, a CPU 52a, and a storage unit 53a. The storage unit 53a of the information processing device 5a stores various types of information, including various programs P5a that control operation of the information processing device 5a, the reference route Ip, the first learning model Md1, and cleaning information Ic. The cleaning information Ic is information that indicates, for each target region Ta, the cleaning status of dirt that may exist in the pathway Ro and the surrounding area of the pathway Ro. Specifically, the cleaning information Ic is information that indicates the timing of the cleaning by associating the timing for each imaging range RG of the external camera 9. The cleaning information Ic is updated each time the cleaning is performed. The cleaning of dirt is performed on a predetermined cycle.

The CPU 52a of the information processing device 5a functions as a change information acquisition unit 521a, a training unit 522a, a state information acquisition unit 523a, the control information acquisition unit 524, the calculation unit 525, and the remote control unit 526, by expanding the various programs P5a stored in the storage unit 53a.

The change information acquisition unit 521a acquires the cleaning information Ic as the change information. The training unit 522a determines, using the cleaning information Ic, whether the appearance state of the target region Ta has changed. For example, the training unit 522a determines the following in the case where the pre-change state is a state where the target region Ta is not soiled, and the post-change state is a state where the target region Ta is soiled. In this case, the training unit 522a determines that the target region Ta is not soiled and the appearance state of the target region Ta has not changed if cleaning is performed in the target region Ta within a predetermined time period. On the other hand, if cleaning of the target region Ta has not been performed within a predetermined time period, the training unit 522a determines that the target region Ta is soiled and the appearance state of the target region Ta has changed.

The state information acquisition unit 523a acquires the state information by generating the state information using the cleaning information Ic. For example, the state information acquisition unit 523a generates the state information in the following manner in the case where the pre-change state is a state where the target region Ta is not soiled, and the post-change state is a state where the target region Ta is soiled. In this case, the state information acquisition unit 523a generates the state information indicating that the target region Ta is not soiled when cleaning of the target region Ta is performed within a predetermined time period. On the other hand, the state information acquisition unit 523a generates the state information indicating that the target region Ta is soiled when cleaning of the target region Ta is not performed within a predetermined time period.

According to the second embodiment described above, the information processing device 5a can acquire the cleaning information Ic as the change information. Further, the information processing device 5a can use the cleaning information Ic to specify whether the target region Ta has been cleaned within a predetermined time period, thereby determining whether the appearance state of the target region Ta has changed from the appearance state at the time when the first learning model Md1 was trained.

Further, according to the second embodiment described above, the information processing device 5a can acquire the state information by identifying whether the target region Ta has been cleaned within a predetermined time period using the cleaning information Ic.

## C. Third Embodiment

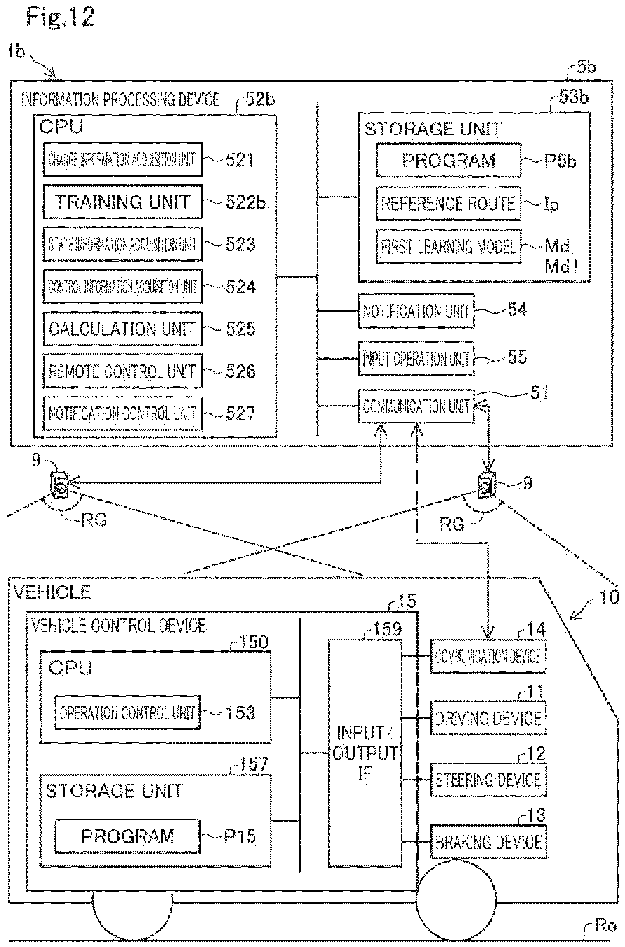

Fig. 12 is a diagram showing a structure of an information processing system 1b in the third embodiment. The information processing system 1b includes one or more vehicles 10, the external camera 9, and an information processing device 5b. In the present embodiment, the information processing device 5b informs an administrator of training request information to retrain the first learning model Md1 when it is determined that the appearance state of the target region Ta has changed. Then, the administrator who has recognized the training request information gives instructions to retrain the first learning model Md1 via an input operation unit 55, and thereby the first learning model Md1 is retrained. The rest of the structure of the information processing system 1b is the same as that of the first embodiment, unless otherwise specified. The same structure as that of the first embodiment is described with the same reference symbols and the explanation thereof is omitted.

The information processing device 5b includes the communication unit 51, a CPU 52b, a storage unit 53b, a notification unit 54, and the input operation unit 55. The storage unit 53b of the information processing device 5b stores various types of information, including various programs P5b that control operation of the information processing device 5b, the reference route Ip, and the first learning model Md1. The notification unit 54 informs the administrator of the training request information. The notification unit 54 is, for example, a display that shows the training request information as text information. The notification unit 54 may also be a speaker for reproducing the training request information as audio information. The input operation unit 55 is an input device for allowing the administrator who has recognized the training request information to instruct the retraining of the first learning model Md1. The input operation unit 55 is, for example, a touch panel, mouse, or keyboard that accepts input from the administrator.

The CPU 52b of the information processing device 5b functions as the change information acquisition unit 521, a notification control unit 527, and a training unit 522b by expanding the various programs P5b stored in the storage unit 53b. Further, the CPU 52b of the information processing device 5b functions as the state information acquisition unit 523, the control information acquisition unit 524, the calculation unit 525, and the remote control unit 526, by expanding the various programs P5b stored in the storage unit 53b.

When it is determined, using the change information, that the appearance state of the target region Ta has changed, the notification control unit 527 notifies the administrator of the training request information. In the present embodiment, the notification control unit 527 determines, using the captured images Im1 to Im4 as the change information, whether the appearance state of the target region Ta has changed. Further, when the notification control unit 527 determines that the appearance state of the target region Ta has changed, the notification control unit 527 notifies the administrator of the training request information via the notification unit 54.

The training unit 522b retrains the first learning model Md1 upon reception of a retraining instruction from the administrator via the input operation unit 55.

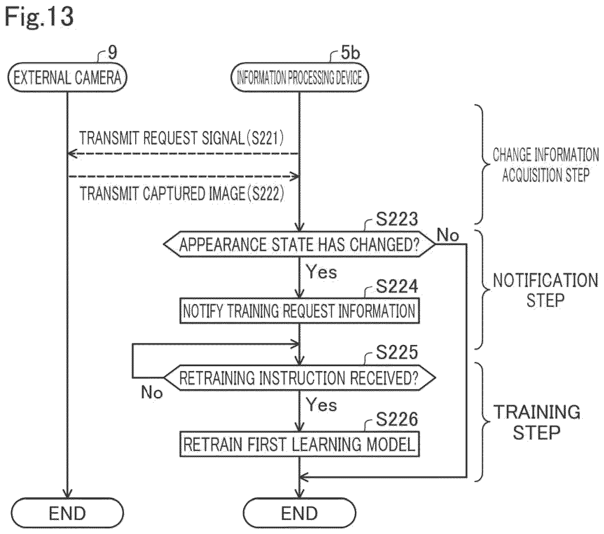

Fig. 13 is a flowchart showing a retraining method for the first learning model Md1 in the third embodiment. The flow shown in Fig. 13 is repeated, for example, every predetermined time from the time point at which the running of the vehicle 10 by unmanned driving is started.

In a change information acquisition step, the change information acquisition unit 521 transmits a request signal for acquiring the captured images Im1 to Im4 as the change information to the external camera 9 (step S221). Upon receiving the request signal, the external camera 9 transmits the captured images Im1 to Im4 to the information processing device 5b (step S222).

After the change information acquisition step, a notification step is performed. In the notification step, the notification control unit 527 determines, using the captured images Im1 to Im4, whether the appearance state of the target region Ta has changed. If it is determined that the appearance state of the target region Ta has changed (step S223: Yes), the notification control unit 527 notifies the administrator of the training request information via the notification unit 54 (step S224). After the notification step, a training step is performed. In the training step, upon reception of a retraining instruction from the administrator via the input operation unit 55 (step S225: Yes), the training unit 522b retrains the first learning model Md1 (step S226). On the other hand, if the information processing device 5b determines that the appearance state of the target region Ta has not changed (step S223: No), the information processing device 5b ends the flow without notifying the administrator of the training request information or retraining the first learning model Md1.

According to the third embodiment described above, the information processing device 5b can notify the administrator of the training request information when the information processing device 5b determines, using the change information, that the appearance state of the target region Ta has changed. This allows the information processing device 5b to prompt the administrator to take measures to retrain the first learning model Md1. In this way, the administrator who has recognized the training request information can quickly retrain the first learning model Md1 by giving a retraining instruction to the information processing device 5b via the input operation unit 55.

Note that the information processing device 5b may include the notification control unit 527 without having the training unit 522b. Also in this embodiment, when it is determined, using the change information, that the appearance state of the target region Ta has changed, the information processing system 1b can retrain the first learning model Md1 by communicatively connecting the information processing device 5b to other devices, such as a machine learning device (not shown), that realize the function of the training unit 522b.

D. Fourth Embodiment

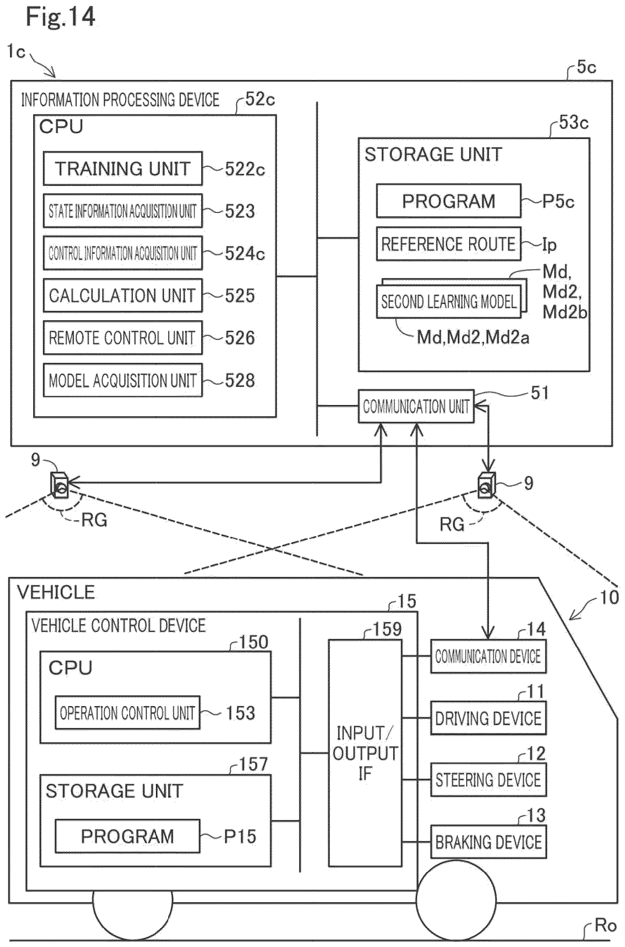

Fig. 14 is a diagram showing a structure of an information processing system 1c in the fourth embodiment. The information processing system 1c includes one or more vehicles 10, the external camera 9, and an information processing device 5c. In the present embodiment, the information processing device 5c trains a second learning model Md2 as the machine learning model Md for each appearance state of the target region Ta. Further, the information processing device 5c acquires the shape data Da as a signal generation parameter by inputting the captured images Im1 to Im4 into the second learning model Md2 corresponding to the appearance state of the target region Ta identified by the state information, from among a plurality of second learning models Md2 prepared for the respective appearance states of the target region Ta. The rest of the structure of the information processing system 1c is the same as that of the first embodiment, unless otherwise specified. The same structure as that of the first embodiment is described with the same reference symbols and the explanation thereof is omitted.

The information processing device 5c includes the communication unit 51, a CPU 52c, and a storage unit 53c. The storage unit 53c of the information processing device 5c stores various types of information, including various programs P5c that control operation of the information processing device 5c, the reference route Ip, and the plurality of second learning models Md2 prepared for the respective appearance states of the target region Ta.

Each of the plurality of second learning models Md2 detects the vehicle 10 from the captured images Im1 to Im4 and outputs the shape data Da when the captured images Im1 to Im4 are input. The second learning model Md2 is trained by supervised learning using a prioritized training data set according to the appearance state of the target region Ta, from among a plurality of prioritized training data sets, which are prepared for the respective appearance states of the target region Ta. Each prioritized training data set includes M (M is an integer of 2 or more) sets of first training data and N (N is an integer of 0 or more and less than M) sets of second training data. The first training data is training data in which a training image, which includes the vehicle 10 and a target region Ta classified as one appearance state from among a plurality of appearance states of the target region Ta, is associated with a region correct answer label. The second training data is training data in which a training image, which includes the vehicle 10 and a target region Ta classified as another remaining appearance state, i.e., an appearance state other than the one appearance state, from among the plurality of appearance states of the target region Ta, is associated with a correct answer label. The number M of the sets of the first training data may be, for example, 1.5 times or more or 2 times or more, of the number N of the sets of the second training data. Further, if there are a plurality of appearance states other than the one appearance state, the number M of the sets of the first training data is greater than, for example, the total number of the sets of the second training data. That is, the second learning model Md2 is a machine learning model Md that is trained with more sets of the first training data than the sets of the second training data, so that it preferentially learns the feature quantity of the target region Ta classified as the one appearance state.

The plurality of second learning models Md2, which are prepared for the respective appearance states of the target region Ta, include, for example, a non-dirt model Md2a and a dirt model Md2b. The non-dirt model Md2a is the second learning model Md2 that has been trained with more first training images including the vehicle 10 and an unsoiled target region Ta, than the second training images including the vehicle 10 and a soiled target region Ta. The non-dirt model Md2a is used to detect the vehicle 10 from the captured images Im1 to Im4 including the vehicle 10 and an unsoiled target region Ta. The dirt model Md2b is the second learning model Md2 that has been trained with more first training images including the vehicle 10 and a soiled target region Ta, than the second training images including the vehicle 10 and an unsoiled target region Ta. The dirt model Md2b is used to detect the vehicle 10 from the captured images Im1 to Im4 including the vehicle 10 and a soiled target region Ta.

As the second learning model Md2, for example, a CNN for implementing either semantic segmentation or instance segmentation may be used. Upon the training of the CNN, for example, CNN parameters are updated by back-propagation (error back-propagation) to reduce errors between the output result of the second learning model Md2 and the region correct answer label.

The CPU 52c of the information processing device 5c functions as a training unit 522c, the state information acquisition unit 523, a model acquisition unit 528, a control information acquisition unit 524c, the calculation unit 525, and the remote control unit 526, by expanding the various programs P5c stored in the storage unit 53c. The training unit 522c trains the second learning model Md2 for each appearance state of the target region Ta. The model acquisition unit 528 acquires the second learning model Md2 selected according to the appearance state of the target region Ta identified by the state information, from among the plurality of second learning models Md2 prepared for the respective appearance states of the target region Ta. The control information acquisition unit 524c acquires the shape data Da by inputting the captured images Im1 to Im4 to the second learning model Md2 acquired by the model acquisition unit 528.

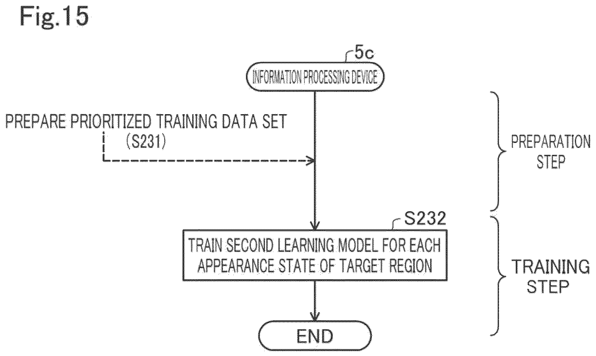

Fig. 15 is a flowchart showing a training method for the second learning model Md2. The flow shown in Fig. 15 is performed, for example, before the running of the vehicle 10 by unmanned driving is started.

In a preparation step, a prioritized training data set is prepared for each appearance state of the target region Ta (step S231). After the preparation step, a training step is performed. In the training step, the training unit 522c trains the second learning model Md2 for each appearance state of the target region Ta using the prioritized training data set (step S232).

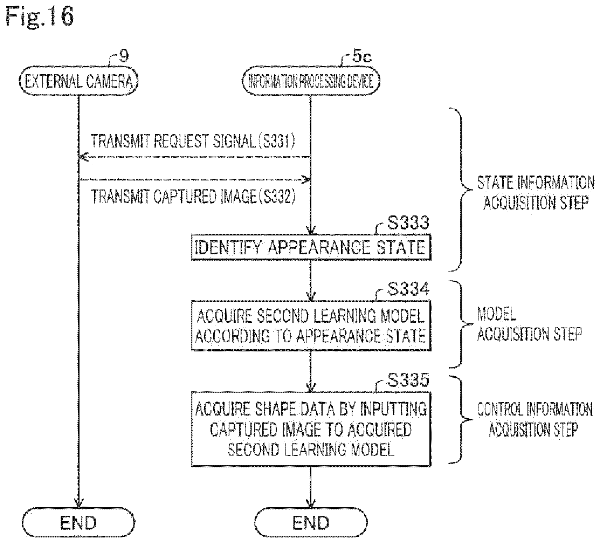

Fig. 16 is a flowchart showing a method for acquiring the shape data Da using the second learning model Md2. The flow shown in Fig. 16 is repeated, for example, every predetermined time from the time point at which the running of the vehicle 10 by unmanned driving is started.

In a state information acquisition step, the state information acquisition unit 523 transmits a request signal for acquiring the captured images Im1 to Im4 as the state information to the external camera 9 (step S331). Upon receiving the request signal, the external camera 9 transmits the captured images Im1 to Im4 to the information processing device 5c (step S332). The state information acquisition unit 523 identifies the appearance state of the target region Ta by analyzing the captured images Im1 to Im4 (step S333).

After the state information acquisition step, a model acquisition step is performed. In the model acquisition step, the model acquisition unit 528 acquires the second learning model Md2 selected according to the appearance state of the target region Ta identified by the state information, from among the plurality of second learning models Md2 prepared for the respective appearance states of the target region Ta (step S334).

After the model acquisition step, a control information acquisition step is performed. In the control information acquisition step, the control information acquisition unit 524c acquires the shape data Da by inputting the captured images Im1 to Im4 to the second learning model Md2 acquired by the model acquisition unit 528 (step S335).

According to the fourth embodiment described above, the information processing device 5c trains the second learning model Md2 using more training images including the vehicle 10 and a target region Ta classified as one appearance state, than training images including the vehicle 10 and a target region Ta classified as another remaining appearance state. This allows the information processing device 5c to prepare the second learning model Md2 suitable for the detection of the vehicle 10 from the captured images Im1 to Im4 including the vehicle 10 and target regions Ta classified as the one appearance state.

Further, according to the fourth embodiment described above, the second learning model Md2 is prepared for each one appearance state of the target region Ta. This allows the information processing device 5c to acquire the state information and acquire the second learning model Md2 selected according to the appearance state of the target region Ta identified by the state information, from among the plurality of second learning models Md2 prepared for the respective appearance states of the target region Ta. The information processing device 5c can then accurately detect the vehicle 10 from the captured images Im1 to Im4 by inputting the captured images Im1 to Im4 to the second learning model Md2 corresponding to the appearance state of the target region Ta included in the captured images Im1 to Im4. Therefore, the information processing device 5c can improve the detection accuracy in the detection of the vehicle 10 from the captured images Im1 to Im4.

E. Fifth Embodiment

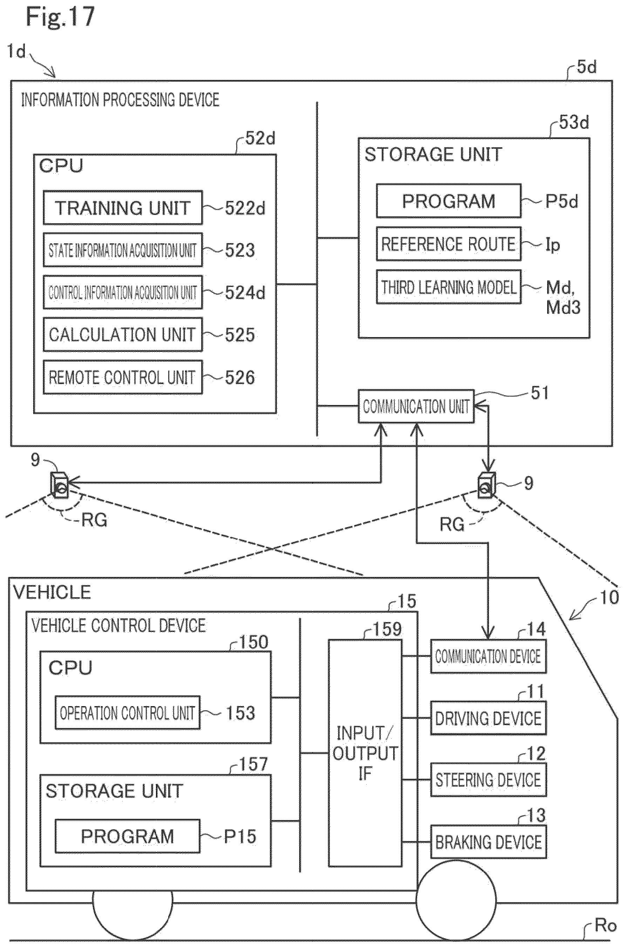

Fig. 17 is a diagram showing a structure of an information processing system 1d in the fifth embodiment. The information processing system 1d includes one or more vehicles 10, the external camera 9, and an information processing device 5d. In the present embodiment, the information processing device 5d trains a third learning model Md3 as the machine learning model Md by associating an appearance state with a training image. Further, the information processing device 5d acquires the shape data Da as the signal generation parameter by inputting the captured images Im1 to Im4 to the third learning model Md3. The rest of the structure of the information processing system 1d is the same as that of the first embodiment, unless otherwise specified. The same structure as that of the first embodiment is described with the same reference symbols and the explanation thereof is omitted.

The information processing device 5d includes the communication unit 51, a CPU 52d, and a storage unit 53d. The storage unit 53d of the information processing device 5d stores various types of information, including various programs P5d that control operation of the information processing device 5b, the reference route Ip, and the third learning model Md3.

The third learning model Md3 detects the vehicle 10 from the captured images Im1 to Im4 and outputs the shape data Da when the captured images Im1 to Im4 are input. The third learning model Md3 is trained by supervised learning using a batch training data set. The batch training data set includes a plurality of sets of training data in which a training image including the target region Ta and the vehicle 10, a region correct answer label, and supplementary information indicating the appearance state of the target region Ta included in the training image are associated with one another.

As the third learning model Md3, for example, a CNN for implementing either semantic segmentation or instance segmentation may be used. Upon the training of the CNN, for example, CNN parameters are updated by back-propagation (error back-propagation) to reduce errors between the output result of the third learning model Md3 and the region correct answer label.

The CPU 52d of the information processing device 5d functions as a training unit 522d, the state information acquisition unit 523, a control information acquisition unit 524d, the calculation unit 525, and the remote control unit 526, by expanding the various programs P5d stored in the storage unit 53d. The training unit 522d trains the third learning model Md3 using the batch training data set. The control information acquisition unit 524d acquires the shape data Da by inputting the captured images Im1 to Im4 and the appearance state of the target region Ta identified by the state information to the third learning model Md3.

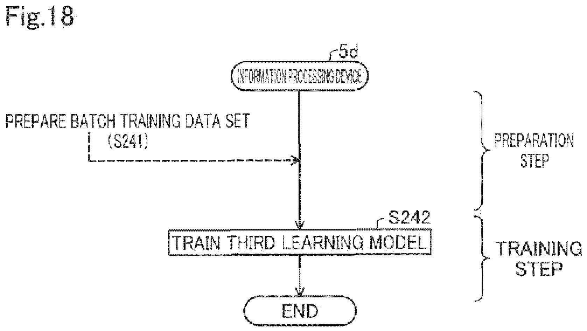

Fig. 18 is a flowchart showing a training method for the third learning model Md3. The flow shown in Fig. 18 is performed, for example, before the running of the vehicle 10 by unmanned driving is started.

In a preparation step, a batch training data set is prepared (step S241). After the preparation step, a training step is performed. In the training step, the training unit 522d trains the third learning model Md3 using the batch training data set (step S242).

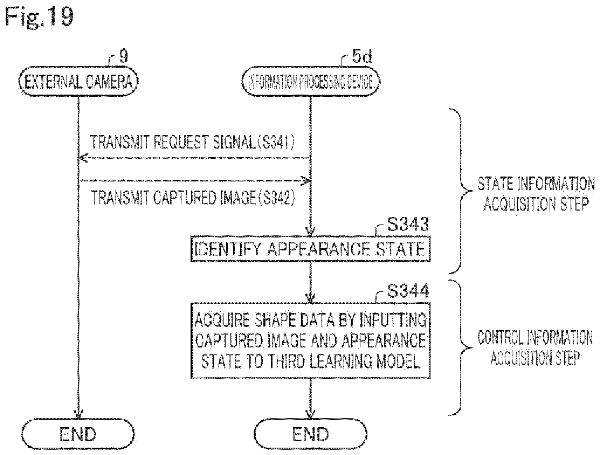

Fig. 19 is a flowchart showing a method for acquiring the shape data Da using the third learning model Md3. The flow shown in Fig. 19 is repeated, for example, every predetermined time from the time point at which the running of the vehicle 10 by unmanned driving is started.

In a state information acquisition step, the state information acquisition unit 523 transmits a request signal for acquiring the captured images Im1 to Im4 as the state information to the external camera 9 (step S341). Upon receiving the request signal, the external camera 9 transmits the captured images Im1 to Im4 to the information processing device 5d (step S342). The state information acquisition unit 523 identifies the appearance state of the target region Ta by analyzing the captured images Im1 to Im4 (step S343).

After the state information acquisition step, a control information acquisition step is performed. In the control information acquisition step, the control information acquisition unit 524d inputs the captured images Im1 to Im4 and the appearance state of the target region Ta identified by the state information to the third learning model Md3. In this way, the control information acquisition unit 524d acquires the shape data Da (step S344).

According to the fifth embodiment described above, the information processing device 5d can train the third learning model Md3 using a plurality of sets of training data in which a training image including the target region Ta and the vehicle 10, a region correct answer label, and supplementary information indicating the appearance state of the target region Ta included in the training image are associated with one another. This allows the information processing device 5d to prepare the third learning model Md3 that has been trained by associating the appearance state of the target region Ta.

Further, according to the fifth embodiment described above, the third learning model Md3, which has been trained using a plurality of sets of training data in which a training image including the target region Ta and the vehicle 10, a region correct answer label, and supplementary information indicating the appearance state of the target region Ta included in the training image are associated with one another, is prepared in advance. This allows the information processing device 5d to acquire the state information and accurately detect the vehicle 10 from the captured images Im1 to Im4 by inputting the captured images Im1 to Im4 and the appearance state of the target region Ta identified by the state information to the third learning model Md3. Therefore, the information processing device 5d can improve the detection accuracy in the detection of the vehicle 10 from the captured images Im1 to Im4.

F. Sixth Embodiment

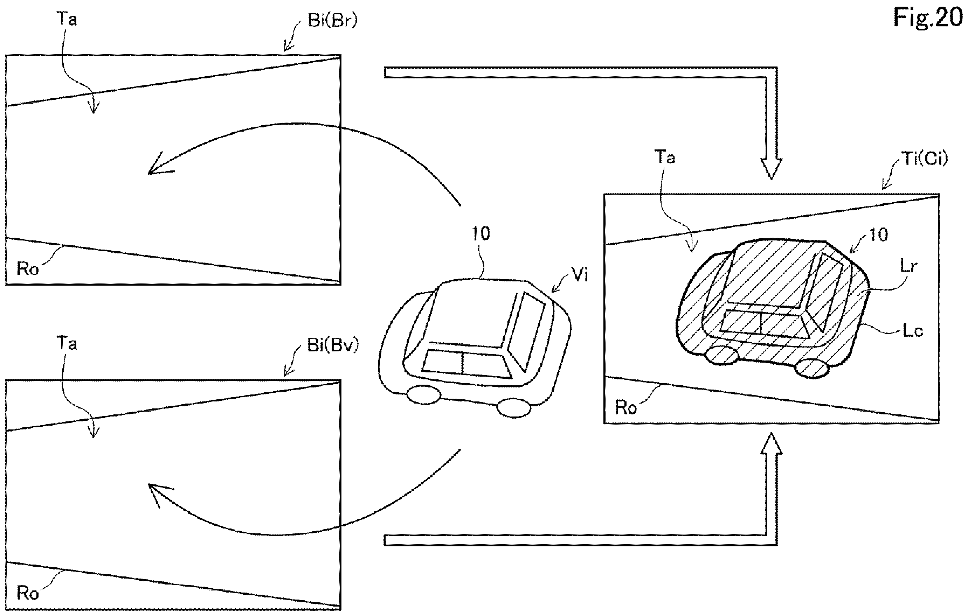

Fig. 20 is a diagram showing an example of a method for generating a training image Ti. In the present embodiment, the training image Ti used for the training of the machine learning model Md is a composite image Ci. The composite image Ci is a two-dimensional image generated by combining a virtual vehicle image Vi with a background image Bi, which is either a real background image Br or a virtual background image Bv. The background image Bi is an image that includes the target region Ta but does not include the vehicle 10. The real background image Br is the background image Bi acquired by actually capturing an image of the target region Ta using the external camera 9. The virtual background image Bv is the background image Bi that virtually replicates the target region Ta. The virtual background image Bv is, for example, either 2D CAD data or 3D CAD data representing the target region Ta. The virtual vehicle image Vi is an image that virtually replicates the vehicle 10. The virtual vehicle image Vi is either 2D CAD data or 3D CAD data representing the vehicle 10.

In the present embodiment, the composite image Ci is generated by combining the virtual vehicle image Vi with the virtual background image Bv. Specifically, the composite image Ci is generated by combining the virtual vehicle image Vi with the target region Ta, for example, by superimposing the virtual vehicle image Vi onto each target region Ta of a factory production line replicated in a virtual space. That is, in the present embodiment, the training image Ti is generated using digital twins.

Note that, in the case where the virtual background image Bv is 3D data, the virtual background image Bv is transformed from 3D data to 2D data in the process of generating the composite image Ci. In the case where the virtual vehicle image Vi is 3D data, the virtual vehicle image Vi is transformed from 3D data to 2D data in the process of generating the composite image Ci. In addition, during the process of combining the virtual vehicle image Vi with the background image Bi, it is possible to adjust arrangement of the virtual vehicle image Vi with respect to the background image Bi, or adjust the pixel values of the images Bi, Ci, and Vi.

According to the sixth embodiment described above, the machine learning model Md can be trained by using the composite image Ci, which is generated by combining the virtual vehicle image Vi with the background image Bi, as the training image Ti.

Further, according to the sixth embodiment described above, when the virtual vehicle image Vi is combined with the background image Bi, it is possible to change at least one of the position and orientation of the vehicle 10 by adjusting the arrangement of the virtual vehicle image Vi with respect to the background image Bi. In this way, it is possible to easily generate a plurality of training images Ti varied in at least one of the position and orientation of vehicle 10 with respect to the pathway Ro.

Further, according to the sixth embodiment described above, in the process of combining the virtual vehicle image Vi with the background image Bi, it is possible to change the pixel value of at least one of the background image Bi, the virtual vehicle image Vi, and the composite image Ci from the initial value. In this way, it is possible to easily generate a plurality of training images Ti varied in imaging condition, such as brightness. Therefore, it is possible to easily generate a plurality of training images Ti assuming that the pixel values such as brightness change depending on the weather, time zone, season, lighting environment, and the like.

Further, according to the sixth embodiment described above, the machine learning model Md can be trained by using the composite image Ci, which is generated by combining the virtual vehicle image Vi with the virtual background image Bv, as the training image Ti. By thus changing the structure of the virtual background image Bv, it is possible to easily replicate target regions Ta with different appearance states, thereby easily generating a plurality of training images Ti that include target regions Ta with different appearance states.

Note that, in the present embodiment, when the training image Ti is the composite image Ci, the correct answer label of the machine learning model Md that outputs the shape data Da may be a contour correct answer label Lc instead of a region correct answer label Lr. The contour correct answer label Lc is a correct answer label that represents the contour of the vehicle 10 extracted from the virtual vehicle image Vi. According to such an embodiment, it is possible to easily identify whether each region that constitutes the training image Ti represents a region indicating the vehicle 10 or a region indicating other than the vehicle 10 by extracting the outer shape of the virtual vehicle image Vi. This makes it possible to alleviate the burden required for the preparation of the training of the machine learning model Md.

G. Seventh Embodiment

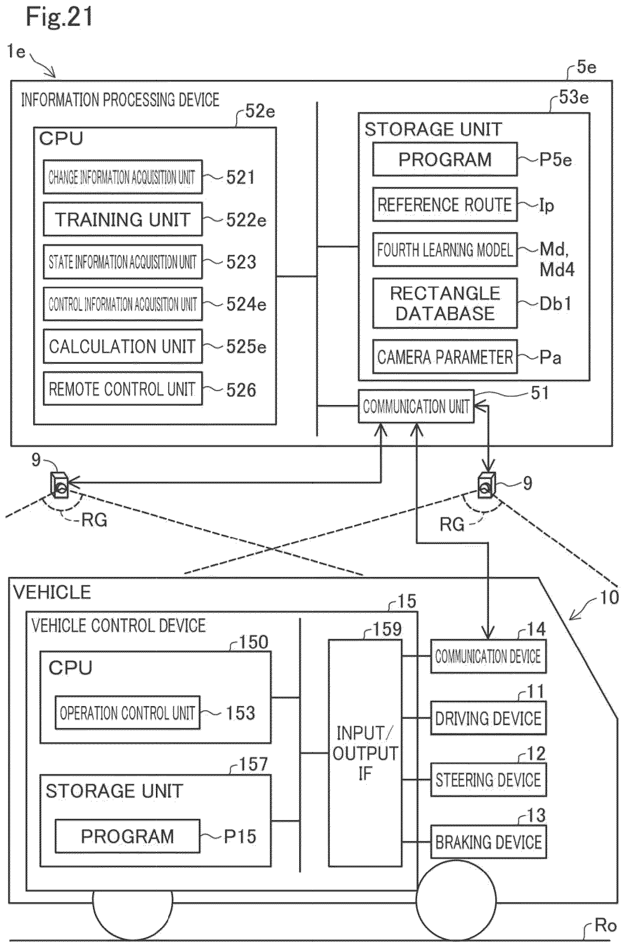

Fig. 21 is a diagram showing a structure of an information processing system 1e in the seventh embodiment. The information processing system 1e includes one or more vehicles 10, the external camera 9, and an information processing device 5e. In the present embodiment, the information processing device 5e acquires a rectangle coordinate value as the signal generation parameter by inputting the captured images Im1 to Im4 to a fourth learning model Md4 as the machine learning model Md. The rest of the structure of the information processing system 1e is the same as that of the first embodiment, unless otherwise specified. The same structure as that of the first embodiment is described with the same reference symbols and the explanation thereof is omitted.

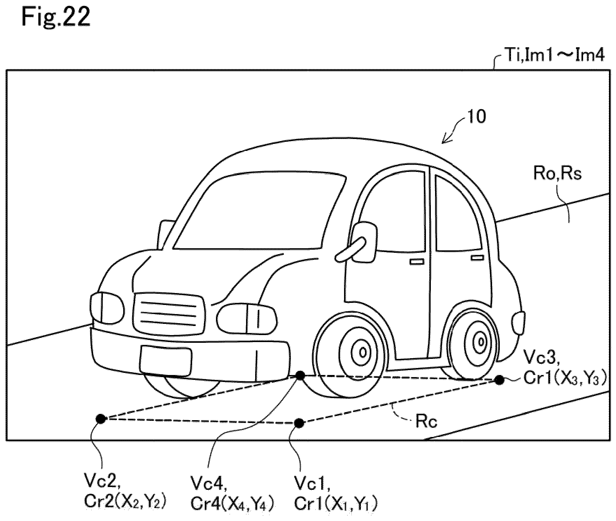

Fig. 22 is a diagram for illustrating rectangle coordinate values Cr1 to Cr4. The rectangle coordinate values Cr1 to Cr4 are the coordinate values of four vertices Vc1 to Vc4 of a vehicle bounding rectangle Rc. The vehicle bounding rectangle Rc is a rectangle set to surround the region occupied by the vehicle 10 when the vehicle 10 is projected onto the road surface Rs in the images Ti, and Im1 to Im4. The rectangle coordinate values Cr1 to Cr4 are used to calculate at least one of the position and orientation of the vehicle 10.

As shown in Fig. 21, the information processing device 5e includes the communication unit 51, a CPU 52e, and a storage unit 53e. The storage unit 53e of the information processing device 5e stores various types of information, including various programs P5e that control operation of the information processing device 5e, the reference route Ip, the fourth learning model Md4, a rectangle database Db1, and a camera parameter Pa.

The fourth learning model Md4 outputs the rectangle coordinate values Cr1 to Cr4 when the captured images Im1 to Im4 are input. The training data set used to train the fourth learning model Md4 includes a plurality of sets of training data in which the training image Ti including the target region Ta and the vehicle 10 is associated with a rectangle coordinate correct answer label. The rectangle coordinate correct answer label is a correct answer label indicating the coordinate values Cr1 to Cr4 of the four vertices Vc1 to Vc4 of the vehicle bounding rectangle Rc set for the vehicle 10 included in the training image Ti. In the rectangle coordinate correct answer label, each of the coordinate values Cr1 to Cr4 is associated with supplementary information indicating which of the four vertices Vc1 to Vc4 of the vehicle bounding rectangle Rc corresponds to each of the coordinate values Cr1 to Cr4. In the present embodiment, the rectangle coordinate values Cr1 to Cr4 output from the fourth learning model Md4 are coordinate values in the local coordinate system. Therefore, in the rectangle coordinate correct answer label, each of the coordinate values Cr1 to Cr4 is expressed in the local coordinate system.

As the fourth learning model Md4, for example, a CNN for implementing either semantic segmentation or instance segmentation may be used. Upon the training of the CNN, for example, CNN parameters are updated by back-propagation (error back-propagation) to reduce errors between the output result of the fourth learning model Md4 and the rectangle coordinate correct answer label.

The rectangle database Db1 is used to calculate the coordinate value of the positioning point 10e of the vehicle 10 from the rectangle coordinate values Cr1 to Cr4. The rectangle database Db1 is a database that shows the relative positions of each of the vertices Vc1 to Vc4 of the vehicle bounding rectangle Rc and the positioning point 10e of the vehicle 10.

The camera parameter Pa is a parameter regarding the external camera 9. In the present embodiment, the camera parameter Pa is used to transform the coordinate value of the positioning point 10e of the vehicle 10 expressed in the local coordinate system to the coordinate value in the global coordinate system. The camera parameter Pa is, for example, a location where the external camera 9 is provided, orientation in which the external camera 9 is provided, and a focal length.

The CPU 52e of the information processing device 5e functions as the change information acquisition unit 521, a training unit 522e, the state information acquisition unit 523, a control information acquisition unit 524e, a calculation unit 525e, and the remote control unit 526, by expanding the various programs P5e stored in the storage unit 53e.

The training unit 522e determines whether the appearance state of the target region Ta has changed from the appearance state at the time when the fourth learning model Md4 was trained using the change information. Further, when it is determined that the appearance state of the target region Ta has changed, the training unit 522e retrains the fourth learning model Md4 using the retraining data set including a plurality of sets of training data in which the training image Ti including the vehicle 10 and the target region Ta after its change in the appearance state is associated with the rectangle coordinate correct answer label.

The control information acquisition unit 524e identifies the appearance state of the target region Ta using the state information and inputs the captured images Im1 to Im4 to the fourth learning model Md4 according to the appearance state of the target region Ta, thereby acquiring the rectangle coordinate values Cr1 to Cr4 expressed in the local coordinate system.

The calculation unit 525e calculates the coordinate value of the positioning point 10e of the vehicle 10 from the rectangle coordinate values Cr1 to Cr4 using the rectangle database Db1. Then, the calculation unit 525e transforms the coordinate value of the positioning point 10e of the vehicle 10 expressed in the local coordinate system to the coordinate value in the global coordinate system using the camera parameter Pa. Here, in order to acquire the camera parameter Pa, the calculation unit 525e may acquire a camera identifier, which distinguishes the plurality of external cameras 9 from one another and indicates the external camera 9 that has acquired the captured images Im1 to Im4.

The calculation unit 525e further calculates the orientation of the vehicle 10. The calculation unit 525e calculates the orientation of the vehicle 10 using, for example, the shape of the vehicle bounding rectangle Rc, the supplementary information indicating which of the four vertices Vc1 to Vc4 of the vehicle bounding rectangle Rc corresponds to each of the coordinate values Cr1 to Cr4, and the like.

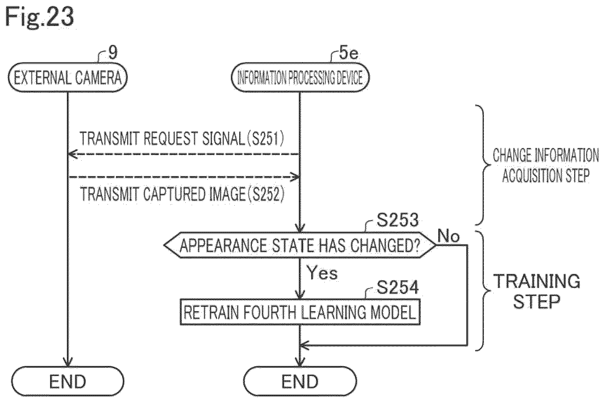

Fig. 23 is a flowchart showing a retraining method for the fourth learning model Md4. The flow shown in Fig. 23 is repeated, for example, every predetermined time from the time point at which the running of the vehicle 10 by unmanned driving is started.

In a change information acquisition step, the change information acquisition unit 521 transmits a request signal for acquiring the captured images Im1 to Im4 as the change information to the external camera 9 (step S251). Upon receiving the request signal, the external camera 9 transmits the captured images Im1 to Im4 to the information processing device 5e (step S252).

After the change information acquisition step, a training step is performed. In the training step, the training unit 522e determines whether the appearance state of the target region Ta has changed from the appearance state at the time when the fourth learning model Md4 was trained using the captured images Im1 to Im4. When the training unit 522e determines that the appearance state of the target region Ta has changed from the appearance state at the time when the fourth learning model Md4 was trained (step S253: Yes), the training unit 522e retrains the fourth learning model Md4 (step S254). On the other hand, when the training unit 522e determines that the appearance state of the target region Ta has not changed from the appearance state at the time when the fourth learning model Md4 was trained (step S253: No), the training unit 522e ends the flow without retraining the fourth learning model Md4.

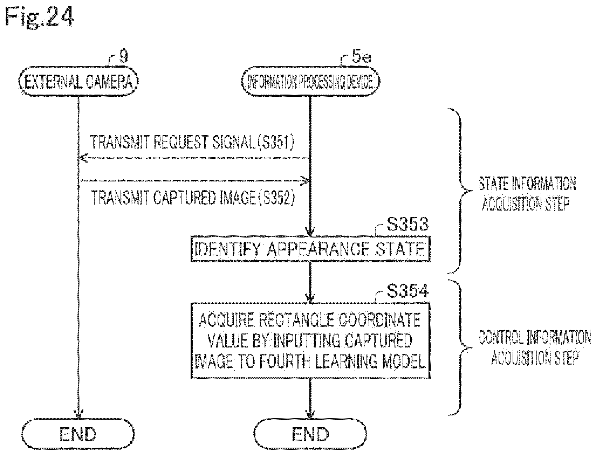

Fig. 24 is a flowchart showing a method for acquiring the rectangle coordinate values Cr1 to Cr4 using the fourth learning model Md4. The flow shown in Fig. 24 is repeated, for example, every predetermined time from the time point at which the running of the vehicle 10 by unmanned driving is started.

In a state information acquisition step, the state information acquisition unit 523 transmits a request signal for acquiring the captured images Im1 to Im4 as the state information to the external camera 9 (step S351). Upon receiving the request signal, the external camera 9 transmits the captured images Im1 to Im4 to the information processing device 5e (step S352). The state information acquisition unit 523 identifies the appearance state of the target region Ta by analyzing the captured images Im1 to Im4 (step S353).

After the state information acquisition step, a control information acquisition step is performed. In the control information acquisition step, the control information acquisition unit 524e acquires the rectangle coordinate values Cr1 to Cr4 by inputting the captured images Im1 to Im4 to the fourth learning model Md4 (step S354).

According to the seventh embodiment described above, the information processing device 5e can train the fourth learning model Md4 that outputs the rectangle coordinate values Cr1 to Cr4 when the captured images Im1 to Im4 are input. In this way, the information processing device 5e acquires the rectangle coordinate values Cr1 to Cr4 by inputting the captured images Im1 to Im4 to the fourth learning model Md4, thereby generating a running control signal.

Note that the rectangle coordinate values Cr1 to Cr4 may be either the coordinate values in the camera coordinate system or the coordinate values in the global coordinate system. If the rectangle coordinate values Cr1 to Cr4 are either the coordinate values in the camera coordinate system or the coordinate values in the global coordinate system, the fourth learning model Md4 is trained, for example, as follows. In this case, the fourth learning model Md4 is trained, for example, by associating at least one of the camera identifier indicating the external camera 9 that acquired the training image Ti, and the camera parameter Pa of the external camera 9 that acquired the training image Ti, with the training image Ti. Further, in this case, in the rectangle coordinate correct answer label, each of the coordinate values Cr1 to Cr4 is expressed, for example, by the same coordinate system as that of the rectangle coordinate values Cr1 to Cr4 that are output.

Further, the information processing device 5e may acquire the coordinate value of the ground in contact with wheels as the signal generation parameter, instead of the rectangle coordinate values Cr1 to Cr4. Also in such an embodiment, the information processing device 5e acquires the rectangle coordinate values Cr1 to Cr4, thereby generating a running control signal.

H. Eighth Embodiment

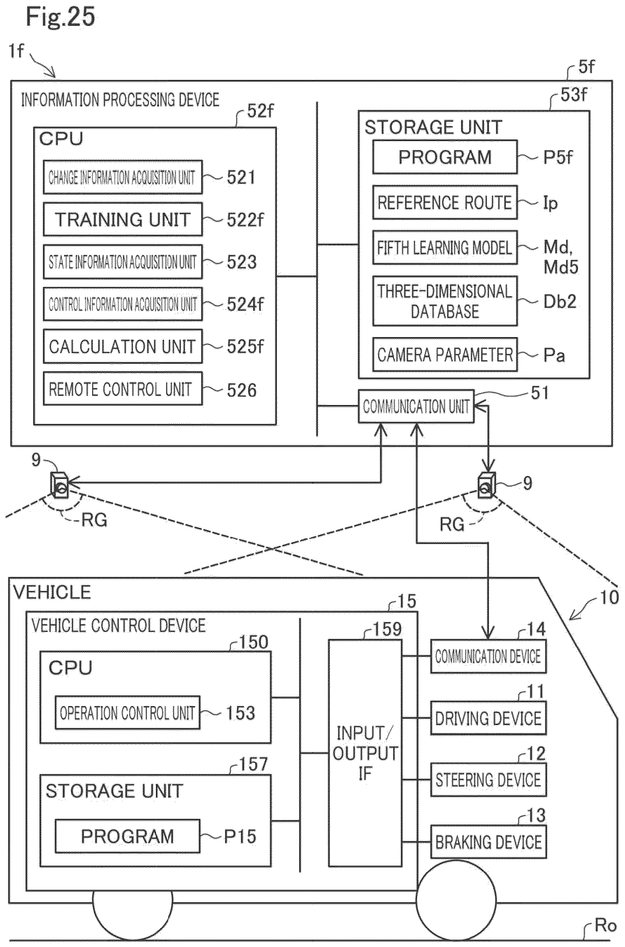

Fig. 25 is a diagram showing a structure of an information processing system 1f in the eighth embodiment. The information processing system 1f includes one or more vehicles 10, the external camera 9, and an information processing device 5f. In the present embodiment, the information processing device 5f acquires a three-dimensional coordinate value as the signal generation parameter by inputting the captured images Im1 to Im4 to a fifth learning model Md5 as the machine learning model Md. The rest of the structure of the information processing system 1f is the same as that of the first embodiment, unless otherwise specified. The same structure as that of the first embodiment is described with the same reference symbols and the explanation thereof is omitted.

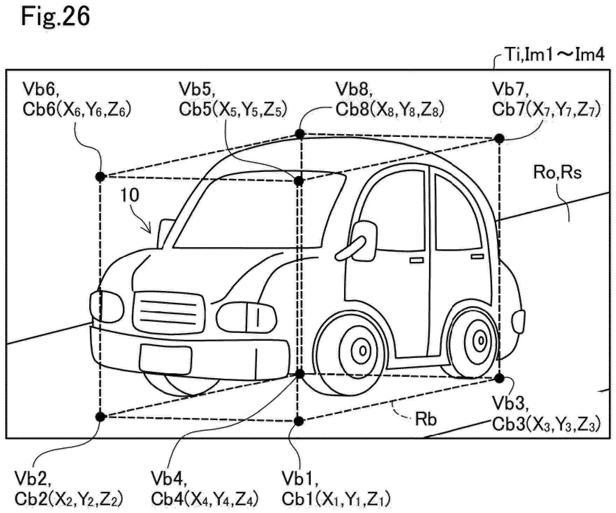

Fig. 26 is a diagram for illustrating three-dimensional coordinate values Cb1 to Cb8. The three-dimensional coordinate values Cb1 to Cb8 are the coordinate values of eight vertices Vb1 to Vb8 of a vehicle bounding box Rb. The vehicle bounding box Rb is a rectangle set to surround the vehicle 10 in the images Ti, and Im1 to Im4. The three-dimensional coordinate values Cb1 to Cb8 are used to calculate at least one of the position and orientation of the vehicle 10.

As shown in Fig. 25, the information processing device 5f includes the communication unit 51, a CPU 52f, and a storage unit 53f. The storage unit 53f of the information processing device 5f stores various types of information, including various programs P5f that control operation of the information processing device 5f, the reference route Ip, the fifth learning model Md5, a three-dimensional database Db2, and the camera parameter Pa.

The fifth learning model Md5 outputs the three-dimensional coordinate values Cb1 to Cb8 when the captured images Im1 to Im4 are input. The training data set used to train the fifth learning model Md5 includes a plurality of sets of training data in which the training image Ti including the target region Ta and the vehicle 10 is associated with a three-dimensional coordinate correct answer label. The three-dimensional coordinate correct answer label is a correct answer label indicating the coordinate values Cb1 to Cb8 of the eight vertices Vb1 to Vb8 of the vehicle bounding box Rb set for the vehicle 10 included in the training image Ti. In the three-dimensional coordinate correct answer label, each of the coordinate values Cb1 to Cb8 is associated with supplementary information indicating which of the eight vertices Vb1 to Vb8 of the vehicle bounding box Rb corresponds to each of the coordinate values Cb1 to Cb8. In the present embodiment, the three-dimensional coordinate values Cb1 to Cb8 output from the fifth learning model Md5 are coordinate values in the camera coordinate system. Therefore, in the three-dimensional coordinate correct answer label, each of the coordinate values Cb1 to Cb8 is expressed in the camera coordinate system. Further, the fifth learning model Md5 is trained by associating the training image Ti with at least one of the camera parameter Pa and the camera identifier used to acquire the camera parameter Pa.

As the fifth learning model Md5, for example, a CNN for implementing either semantic segmentation or instance segmentation may be used. Upon the training of the CNN, for example, CNN parameters are updated by back-propagation (error back-propagation) to reduce errors between the output result of the fifth learning model Md5 and the three-dimensional coordinate correct answer label.

The three-dimensional database Db2 is used to calculate the coordinate value of the positioning point 10e of the vehicle 10 from the three-dimensional coordinate values Cb1 to Cb8. The three-dimensional database Db2 is a database that shows the relative positions of each of the vertices Vb1 to Vb8 of the vehicle bounding box Rb and the positioning point 10e of the vehicle 10.

The CPU 52f of the information processing device 5f functions as the change information acquisition unit 521, a training unit 522f, the state information acquisition unit 523, a control information acquisition unit 524f, a calculation unit 525f, and the remote control unit 526, by expanding the various programs P5f stored in a storage unit 53f.

The training unit 522f determines whether the appearance state of the target region Ta has changed from the appearance state at the time when the fifth learning model Md5 was trained using the change information. Further, when it is determined that the appearance state of the target region Ta has changed, the training unit 522f retrains the fifth learning model Md5 using the retraining data set including a plurality of sets of training data in which the training image Ti including the vehicle 10 and the target region Ta after its change in the appearance state is associated with the three-dimensional coordinate correct answer label.

The control information acquisition unit 524f identifies the appearance state of the target region Ta using the state information and inputs the captured images Im1 to Im4 to the fifth learning model Md5 according to the appearance state of the target region Ta, thereby acquiring the three-dimensional coordinate values Cb1 to Cb8 expressed in the camera coordinate system.

The calculation unit 525f uses the three-dimensional database Db2 to calculate the coordinate value of the positioning point 10e of the vehicle 10 from the three-dimensional coordinate values Cb1 to Cb8. Then, the calculation unit 525f transforms the coordinate value of the positioning point 10e of the vehicle 10 expressed in the local coordinate system to the coordinate value in the camera coordinate system using the camera parameter Pa. Here, in order to acquire the camera parameter Pa, the calculation unit 525f may acquire the camera identifier.

The calculation unit 525f further calculates the orientation of the vehicle 10. The calculation unit 525f calculates the orientation of the vehicle 10 using, for example, the shape of the vehicle bounding box Rb, the supplementary information indicating which of the eight vertices Vb1 to Vb8 of the vehicle bounding box Rb corresponds to each of the coordinate values Cb1 to Cb8, and the like.

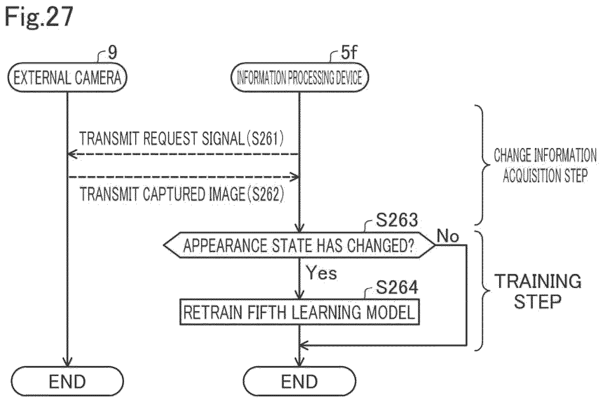

Fig. 27 is a flowchart showing a retraining method for the fifth learning model Md5. The flow shown in Fig. 27 is repeated, for example, every predetermined time from the time point at which the running of the vehicle 10 by unmanned driving is started.

In a change information acquisition step, the change information acquisition unit 521 transmits a request signal for acquiring the captured images Im1 to Im4 as the change information to the external camera 9 (step S261). Upon receiving the request signal, the external camera 9 transmits the captured images Im1 to Im4 to the information processing device 5f (step S262).

After the change information acquisition step, a training step is performed. In the training step, the training unit 522f determines whether the appearance state of the target region Ta has changed from the appearance state at the time when the fifth learning model Md5 was trained using the captured images Im1 to Im4. When the training unit 522f determines that the appearance state of the target region Ta has changed from the appearance state at the time when the fifth learning model Md5 was trained (step S263: Yes), the training unit 522f retrains the fifth learning model Md5 (step S264). On the other hand, when the training unit 522f determines that the appearance state of the target region Ta has not changed from the appearance state at the time when the fifth learning model Md5 was trained (step S263: No), the training unit 522f ends the flow without retraining the fifth learning model Md5.

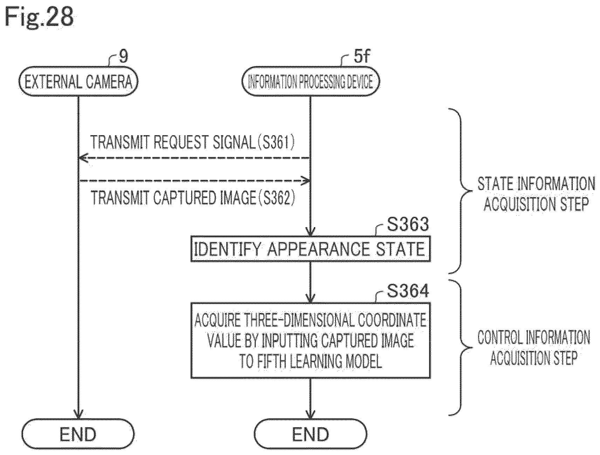

Fig. 28 is a flowchart showing a method for acquiring the three-dimensional coordinate values Cb1 to Cb8 using the fifth learning model Md5. The flow shown in Fig. 28 is repeated, for example, every predetermined time from the time point at which the running of the vehicle 10 by unmanned driving is started.

In a state information acquisition step, the state information acquisition unit 523 transmits a request signal for acquiring the captured images Im1 to Im4 as the state information to the external camera 9 (step S361). Upon receiving the request signal, the external camera 9 transmits the captured images Im1 to Im4 to the information processing device 5f (step S362). The state information acquisition unit 523 identifies the appearance state of the target region Ta by analyzing the captured images Im1 to Im4 (step S363).

After the state information acquisition step, a control information acquisition step is performed. In the control information acquisition step, the control information acquisition unit 524f acquires the three-dimensional coordinate values Cb1 to Cb8 by inputting the captured images Im1 to Im4 to the fifth learning model Md5 (step S364).

According to the eighth embodiment described above, the information processing device 5f can train the fifth learning model Md5 that outputs the three-dimensional coordinate values Cb1 to Cb8 when the captured images Im1 to Im4 are input. In this way, the information processing device 5f acquires the three-dimensional coordinate values Cb1 to Cb8 by inputting the captured images Im1 to Im4 to the fifth learning model Md5, thereby generating a running control signal.

Note that the three-dimensional coordinate values Cb1 to Cb8 may be either the coordinate values in the local coordinate system or the coordinate values in the global coordinate system.

I. Ninth Embodiment

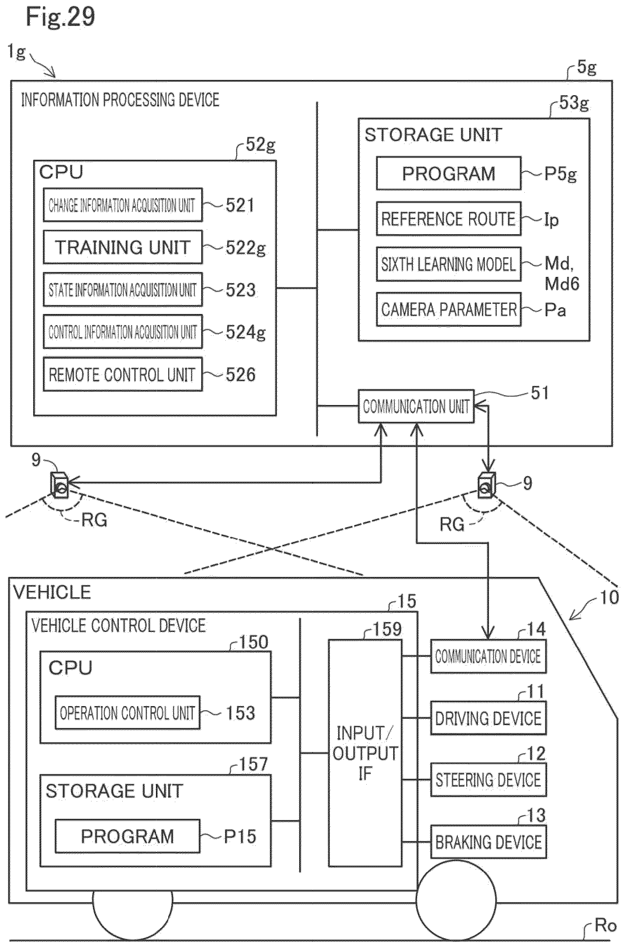

Fig. 29 is a diagram showing a structure of an information processing system 1g in the ninth embodiment. The information processing system 1g includes one or more vehicles 10, the external camera 9, and an information processing device 5g. In the present embodiment, the information processing device 5g acquires vehicle position information as the signal generation parameter by inputting the captured images Im1 to Im4 to a sixth learning model Md6 as the machine learning model Md. The rest of the structure of the information processing system 1g is the same as that of the first embodiment, unless otherwise specified. The same structure as that of the first embodiment is described with the same reference symbols and the explanation thereof is omitted.

The information processing device 5g includes the communication unit 51, a CPU 52g, and a storage unit 53g. The storage unit 53g of the information processing device 5g stores various types of information, including various programs P5g that control operation of the information processing device 5g, the reference route Ip, the sixth learning model Md6, and the camera parameter Pa. In the present embodiment, a program for generating a running control signal is prepared for each external camera 9. Therefore, the reference route Ip is prepared for each external camera 9. Further, the target location determined in the process of generating a running control signal is expressed by X, Y, and Z coordinates in the camera coordinate system.

The sixth learning model Md6 outputs the vehicle position information when the captured images Im1 to Im4 are input. In the present embodiment, when the captured images Im1 to Im4 are input, the sixth learning model Md6 outputs the coordinate value of the positioning point 10e of the vehicle 10 and the orientation of the vehicle 10. The training data set used to train the sixth learning model Md6 includes a plurality of sets of training data in which the training image Ti including the target region Ta and the vehicle 10, a position coordinate correct answer label, and an orientation correct answer label are associated with one another. The orientation correct answer label is a correct answer label indicating the orientation of the vehicle 10 included in the training image Ti. The position coordinate correct answer label is a correct answer label indicating the coordinate value of the positioning point 10e of the vehicle 10 included in the training image Ti. In the present embodiment, the coordinate value of the positioning point 10e of the vehicle 10 output from the sixth learning model Md6 is the coordinate value in the camera coordinate system. Therefore, in the position coordinate correct answer label, the coordinate value of the positioning point 10e of the vehicle 10 is expressed in the camera coordinate system. Further, the sixth learning model Md6 is trained by associating the training image Ti with at least one of the camera parameter Pa and the camera identifier used to acquire the camera parameter Pa.

As the sixth learning model Md6, for example, a CNN for implementing either semantic segmentation or instance segmentation may be used. Upon the training of the CNN, for example, CNN parameters are updated by back-propagation (error back-propagation) to reduce errors between the output result of the sixth learning model Md6, and the position coordinate correct answer label and the orientation correct answer label.

The CPU 52g of the information processing device 5g functions as the change information acquisition unit 521, a training unit 522g, the state information acquisition unit 523, a control information acquisition unit 524g, and the remote control unit 526, by expanding the various programs P5g stored in the storage unit 53g.

The training unit 522g determines whether the appearance state of the target region Ta has changed from the appearance state at the time when the sixth learning model Md6 was trained using the change information. Further, when it is determined that the appearance state of the target region Ta has changed, the training unit 522g retrains the sixth learning model Md6 using the retraining data set including a plurality of sets of training data in which a plurality of training images Ti including the vehicle 10 and the target region Ta after its change in the appearance state, the position coordinate correct answer label, and the orientation correct answer label are associated with one another.

The control information acquisition unit 524g identifies the appearance state of the target region Ta using the state information and inputs the captured images Im1 to Im4 to the sixth learning model Md6 according to the appearance state of the target region Ta. This enables the control information acquisition unit 524g to acquire the coordinate value of the positioning point 10e of the vehicle 10 expressed in the camera coordinate system and the orientation of the vehicle 10.

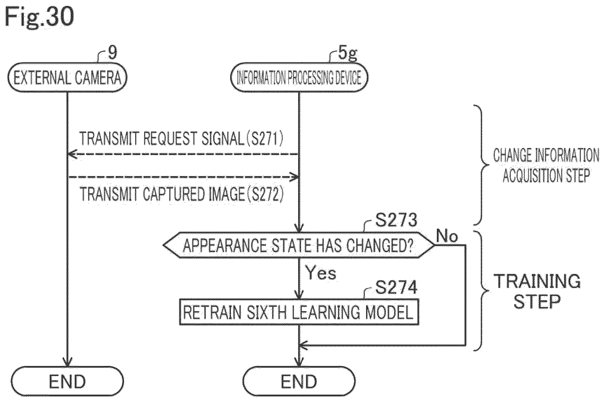

Fig. 30 is a flowchart showing a retraining method for the sixth learning model Md6. The flow shown in Fig. 30 is repeated, for example, every predetermined time from the time point at which the running of the vehicle 10 by unmanned driving is started.

In a change information acquisition step, the change information acquisition unit 521 transmits a request signal for acquiring the captured images Im1 to Im4 as the change information to the external camera 9 (step S271). Upon receiving the request signal, the external camera 9 transmits the captured images Im1 to Im4 to the information processing device 5f (step S272).

After the change information acquisition step, a training step is performed. In the training step, the training unit 522g determines whether the appearance state of the target region Ta has changed from the appearance state at the time when the sixth learning model Md6 was trained using the captured images Im1 to Im4. When the training unit 522g determines that the appearance state of the target region Ta has changed from the appearance state at the time when the sixth learning model Md6 was trained (step S273: Yes), the training unit 522g retrains the sixth learning model Md6 (step S274). On the other hand, when the training unit 522g determines that the appearance state of the target region Ta has not changed from the appearance state at the time when the sixth learning model Md6 was trained (step S273: No), the training unit 522g ends the flow without retraining the sixth learning model Md6.

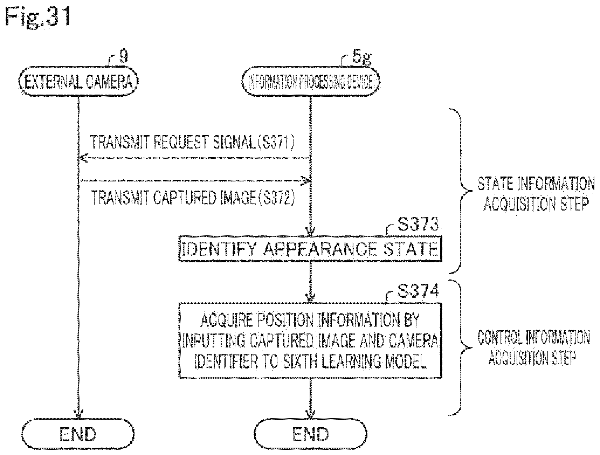

Fig. 31 is a flowchart showing a method for acquiring the vehicle position information using the sixth learning model Md6. The flow shown in Fig. 31 is repeated, for example, every predetermined time from the time point at which the running of the vehicle 10 by unmanned driving is started.

In a state information acquisition step, the state information acquisition unit 523 transmits a request signal for acquiring the captured images Im1 to Im4 as the state information to the external camera 9 (step S371). Upon receiving the request signal, the external camera 9 transmits the captured images Im1 to Im4 to the information processing device 5g (step S372). The state information acquisition unit 523 identifies the appearance state of the target region Ta by analyzing the captured images Im1 to Im4 (step S373).

After the state information acquisition step, a control information acquisition step is performed. In the control information acquisition step, the control information acquisition unit 524g acquires the coordinate value of the positioning point 10e representing the position of the vehicle 10 by inputting the captured images Im1 to Im4 to the sixth learning model Md6 (step S374).

According to the ninth embodiment described above, the information processing device 5g can train the sixth learning model Md6 that outputs the position and orientation of the vehicle 10 when the captured images Im1 to Im4 are input. In this way, the information processing device 5g acquires the vehicle position information by inputting the captured images Im1 to Im4 to the sixth learning model Md6, thereby generating a running control signal.

Further, according to the ninth embodiment described above, a program for generating a running control signal is prepared for each external camera 9. This enables the information processing device 5g to acquire the vehicle position information and generate a running control signal without performing the transformation from the camera coordinate system to the global coordinate system.

J. Tenth Embodiment

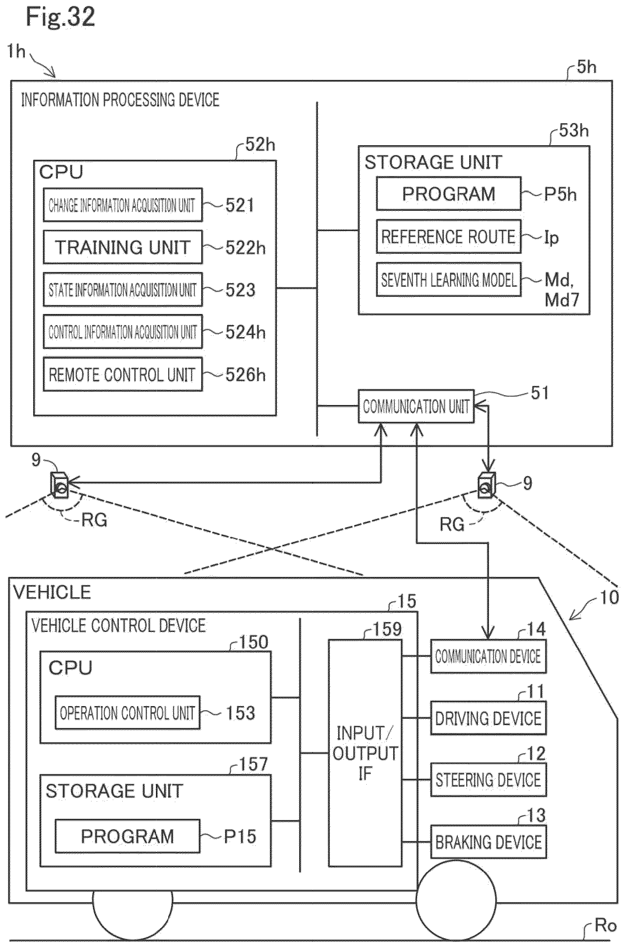

Fig. 32 is a diagram showing a structure of an information processing system 1h in the tenth embodiment. The information processing system 1h includes one or more vehicles 10, the external camera 9, and an information processing device 5h. In the present embodiment, the information processing device 5h acquires a running control signal by inputting the captured images Im1 to Im4 and the camera identifier to a seventh learning model Md7 as the machine learning model Md. The rest of the structure of the information processing system 1h is the same as that of the first embodiment, unless otherwise specified. The same structure as that of the first embodiment is described with the same reference symbols and the explanation thereof is omitted.

The information processing device 5h includes the communication unit 51, a CPU 52h, and a storage unit 53h. The storage unit 53h of the information processing device 5h stores various types of information, including various programs P5h that control operation of the information processing device 5h, and the seventh learning model Md7.

The seventh learning model Md7 outputs the running control signal when the captured images Im1 to Im4 and the camera identifier indicating the external camera 9 that acquired the captured images Im1 to Im4 are input. The training data set used to train the seventh learning model Md7 includes a plurality of sets of training data in which a plurality of training images Ti including the target region Ta and the vehicle 10, the camera identifier indicating the external camera 9 that acquired the training images Ti, and a signal correct answer label are associated with one another. The signal correct answer label is a correct answer label that indicates the target value of each parameter included in the running control signal. The signal correct answer label is generated based on the reference route Ip and the target speed in the imaging range RG of the external camera 9, which acquired the training images Ti.

As the seventh learning model Md7, for example, a CNN for implementing either semantic segmentation or instance segmentation may be used. Upon the training of the CNN, for example, CNN parameters are updated by back-propagation (error back-propagation) to reduce errors between the output result of the seventh learning model Md7 and the signal correct answer label.

The CPU 52h of the information processing device 5h functions as the change information acquisition unit 521, a training unit 522h, the state information acquisition unit 523, a control information acquisition unit 524h, and a remote control unit 526h, by expanding the various programs P5h stored in the storage unit 53h.

The training unit 522h determines whether the appearance state of the target region Ta has changed from the appearance state at the time when the seventh learning model Md7 was trained using the change information. Further, when the training unit 522h determines that the appearance state of the target region Ta has changed, the training unit 522h perform the following processing. In this case, the training unit 522h retrains the seventh learning model Md7 using the retraining data set including a plurality of sets of training data in which the training image Ti including the vehicle 10 and the target region Ta after its change in the appearance state, the camera identifier, and the signal correct answer label are associated with one another.

The control information acquisition unit 524h identifies the appearance state of the target region Ta using the state information, and inputs the captured images Im1 to Im4 and the camera identifier to the seventh learning model Md7 according to the appearance state of the target region Ta, thereby acquiring the running control signal. The remote control unit 526h transmits the running control signal acquired by the control information acquisition unit 524h to the vehicle 10.

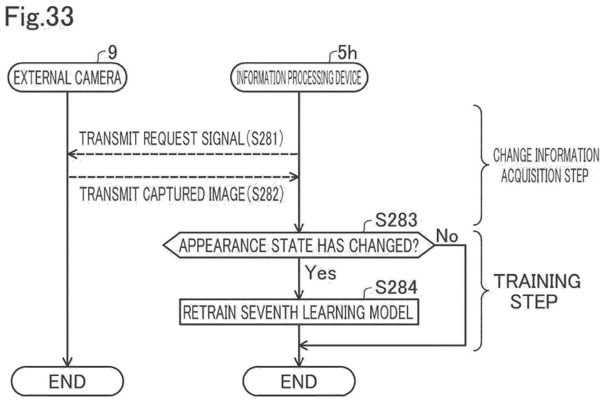

Fig. 33 is a flowchart showing a retraining method for the seventh learning model Md7. The flow shown in Fig. 33 is repeated, for example, every predetermined time from the time point at which the running of the vehicle 10 by unmanned driving is started.

In a change information acquisition step, the change information acquisition unit 521 transmits a request signal for acquiring the captured images Im1 to Im4 as the change information to the external camera 9 (step S281). Upon receiving the request signal, the external camera 9 transmits the captured images Im1 to Im4 to the information processing device 5h (step S282).

After the change information acquisition step, a training step is performed. In the training step, the training unit 522h determines whether the appearance state of the target region Ta has changed from the appearance state at the time when the seventh learning model Md7 was trained using the captured images Im1 to Im4. When the training unit 522h determines that the appearance state of the target region Ta has changed from the appearance state at the time when the seventh learning model Md7 was trained (step S283: Yes), the training unit 522h retrains the seventh learning model Md7 (step S284). On the other hand, when the training unit 522h determines that the appearance state of the target region Ta has not changed from the appearance state at the time when the seventh learning model Md7 was trained (step S283: No), the training unit 522h ends the flow without retraining the seventh learning model Md7.

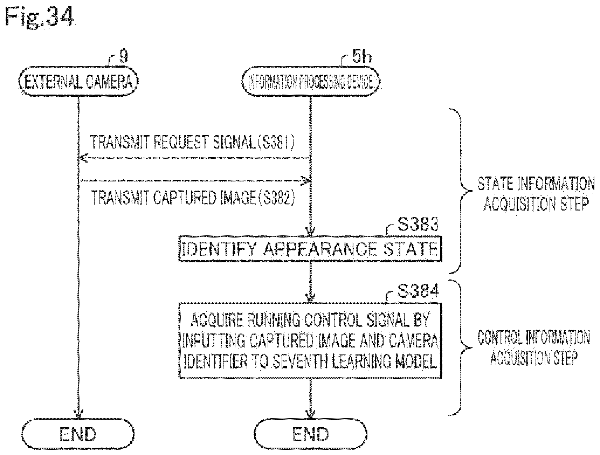

Fig. 34 is a flowchart showing a method for acquiring a running control signal using the seventh learning model Md7. The flow shown in Fig. 34 is repeated, for example, every predetermined time from the time point at which the running of the vehicle 10 by unmanned driving is started.

In a state information acquisition step, the state information acquisition unit 523 transmits a request signal for acquiring the captured images Im1 to Im4 as the state information to the external camera 9 (step S381). Upon receiving the request signal, the external camera 9 transmits the captured images Im1 to Im4 to the information processing device 5h (step S382). The state information acquisition unit 523 identifies the appearance state of the target region Ta by analyzing the captured images Im1 to Im4 (step S383).

After the state information acquisition step, a control information acquisition step is performed. In the control information acquisition step, the control information acquisition unit 524h acquires the running control signal by inputting the captured images Im1 to Im4 and the camera identifier to the seventh learning model Md7 (step S384).

According to the tenth embodiment described above, the information processing device 5h can train the seventh learning model Md7 that outputs a running control signal when the captured images Im1 to Im4 and the camera identifier are input. This enables the information processing device 5h to acquire the running control signal by inputting the captured images Im1 to Im4 and the camera identifier to the seventh learning model Md7.

Note that the information to be input to the seventh learning model Md7 is not limited to those described above. The information processing device 5h may acquire the running control signal by inputting, in addition to the captured images Im1 to Im4 and the camera identifier, other types of information, such as speed information indicating a running speed of the vehicle 10, route information indicating the reference route Ip of the vehicle 10, a pinion angle, and the like, to the seventh learning model Md7. In such an embodiment, the information processing device 5h can acquire more appropriate running control signals according to the running status of the vehicle 10 and the reference route Ip.

K. Eleventh Embodiment

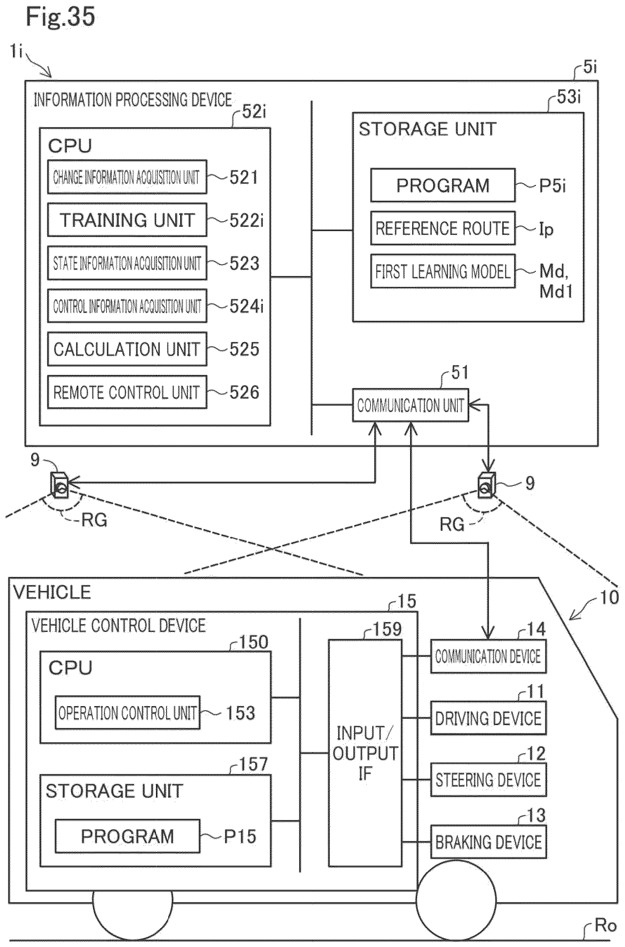

Fig. 35 is a diagram showing a structure of an information processing system 1i in the eleventh embodiment. The information processing system 1i includes one or more vehicles 10, the external camera 9, and an information processing device 5i. In the present embodiment, the information processing device 5i executes transfer learning as retraining of the first learning model Md1 when it is determined that the appearance state of the target region Ta has changed. The transfer learning is an example of additional learning. The rest of the structure of the information processing system 1i is the same as that of the first embodiment, unless otherwise specified. The same structure as that of the first embodiment is described with the same reference symbols and the explanation thereof is omitted.

The information processing device 5i includes the communication unit 51, a CPU 52i, and a storage unit 53i. The storage unit 53i of the information processing device 5i stores various types of information, including various programs P5i that control operation of the information processing device 5i, and the first learning model Md1.

The CPU 52i of the information processing device 5i functions as the change information acquisition unit 521, a training unit 522i, the state information acquisition unit 523, a control information acquisition unit 524i, the calculation unit 525, and the remote control unit 526, by expanding the various programs P5i stored in the storage unit 53i.

The training unit 522i determines whether the appearance state of the target region Ta has changed from the appearance state at the time when the first learning model Md1 was trained using the change information. Further, when the training unit 522i determines that the appearance state of the target region Ta has changed, the training unit 522i perform the following processing. In this case, the training unit 522i trains the first learning model Md1, which has been trained using the initial training data set, by transfer learning using a transfer training data set. The transfer training data set includes a plurality of sets of training data in which the training image Ti including the vehicle 10 and the target region Ta after its change in the appearance state is associated with the region correct answer label Lr. The training unit 522i performs, for example, the following process in the transfer learning. Specifically, the training unit 522i adds a layer of CNN that constitutes the first learning model Md1. The training unit 522i then updates the parameters regarding the added layer using the transfer training data set without updating the trained parameters.

The control information acquisition unit 524i identifies the appearance state of the target region Ta using the state information and inputs the captured images Im1 to Im4 to the first learning model Md1 according to the appearance state of the target region Ta, thereby acquiring the shape data Da. Specifically, when the appearance state of the target region Ta identified by the state information is different from the appearance state of the target region Ta in the training image Ti used at the time of the training of the first learning model Md1, the control information acquisition unit 524i performs the following processing. In this case, the control information acquisition unit 524i inputs the captured images Im1 to Im4 to the first learning model Md1, which has been trained by transfer learning using a plurality of sets of training data in which a training image Ti including the vehicle 10 and the target region Ta having an appearance state identified by the state information is associated with a region correct answer label Lr. On the other hand, when the appearance state of the target region Ta identified by the state information is the same as the appearance state of the target region Ta in the training image Ti used at the time of the training of the first learning model Md1, the control information acquisition unit 524i performs the following processing. In this case, the control information acquisition unit 524i inputs the captured images Im1 to Im4 to the first learning model Md1, which has not been trained by transfer learning using a plurality of sets of training data in which a training image Ti including the vehicle 10 and the target region Ta having an appearance state identified by the state information is associated with a region correct answer label Lr.

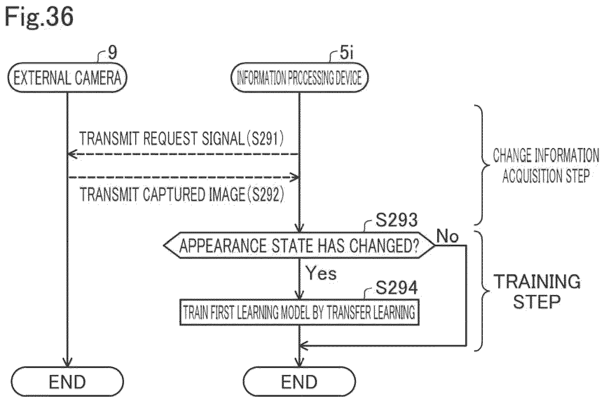

Fig. 36 is a flowchart showing a transfer learning method for the first learning model Md1. The flow shown in Fig. 36 is repeated, for example, every predetermined time from the time point at which the running of the vehicle 10 by unmanned driving is started.

In a change information acquisition step, the change information acquisition unit 521 transmits a request signal for acquiring the captured images Im1 to Im4 as the change information to the external camera 9 (step S291). Upon receiving the request signal, the external camera 9 transmits the captured images Im1 to Im4 to the information processing device 5i (step S292).

After the change information acquisition step, a training step is performed. In the training step, the training unit 522i determines, using the captured images Im1 to Im4, whether the appearance state of the target region Ta has changed from the appearance state at the time when the first learning model Md1 stored in the storage unit 53i was trained. When the training unit 522i determines that the appearance state of the target region Ta has changed from the appearance state at the time when the first learning model Md1 stored in the storage unit 53i was trained (step S293: Yes), the training unit 522i trains the first learning model Md1 by transfer learning (step S294). On the other hand, when the training unit 522i determines that the appearance state of the target region Ta has not changed from the appearance state at the time when the first learning model Md1 stored in the storage unit 53i was trained (step S293: No), the training unit 522i ends the flow without training the first learning model Md1 by transfer learning.

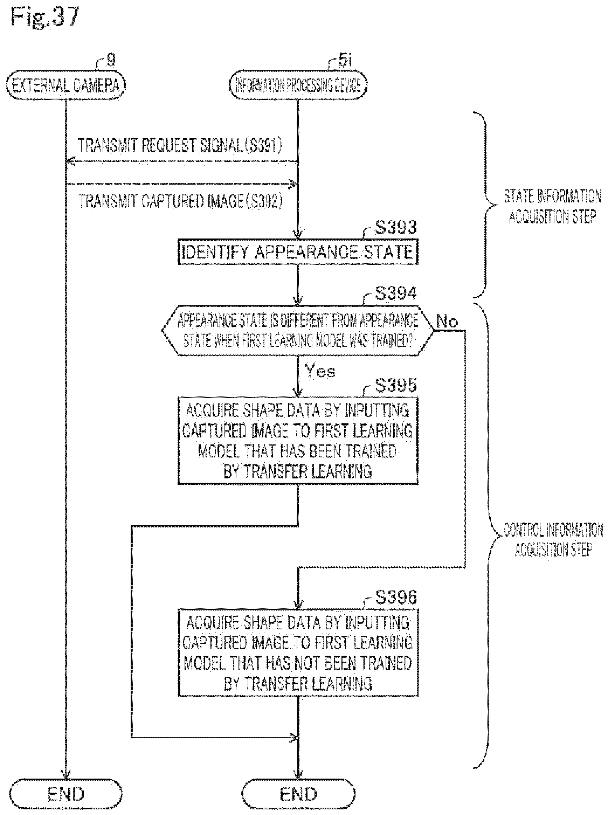

Fig. 37 is a flowchart showing a method for acquiring the shape data Da in the eleventh embodiment. The flow shown in Fig. 37 is repeated, for example, every predetermined time from the time point at which the running of the vehicle 10 by unmanned driving is started.

In a state information acquisition step, the state information acquisition unit 523 transmits a request signal for acquiring the captured images Im1 to Im4 as the state information to the external camera 9 (step S391). Upon receiving the request signal, the external camera 9 transmits the captured images Im1 to Im4 to the information processing device 5i (step S392). The state information acquisition unit 523i identifies the appearance state of the target region Ta by analyzing the captured images Im1 to Im4 (step S393).

After the state information acquisition step, a control information acquisition step is performed. In the control information acquisition step, the control information acquisition unit 524i acquires the shape data Da by inputting the captured images Im1 to Im4 to the first learning model Md1, which has been trained using the training image Ti including the vehicle 10 and the target region Ta having an appearance state identified by the state information. Specifically, when the appearance state identified by the state information is different from the appearance state of the target region Ta in the training image Ti used at the time of the training of the first learning model Md1 stored in the storage unit 53i (step S394: Yes), the control information acquisition unit 524i performs the following processing. In this case, the control information acquisition unit 524i inputs the captured images Im1 to Im4 to the first learning model Md1, which has been trained by transfer learning using a plurality of sets of training data in which a training image Ti including the vehicle 10 and the target region Ta having an appearance state identified by the state information is associated with a region correct answer label Lr. In this way, the control information acquisition unit 524i acquires the shape data Da (step S395). On the other hand, when the appearance state identified by the state information is the same as the appearance state of the target region Ta in the training image Ti used at the time of the training of the first learning model Md1 stored in the storage unit 53i (step S394: No), the control information acquisition unit 524i performs the following processing. In this case, the control information acquisition unit 524i inputs the captured images Im1 to Im4 to the first learning model Md1, which has not been trained by transfer learning using a plurality of sets of training data in which a training image Ti including the vehicle 10 and the target region Ta having an appearance state identified by the state information is associated with a region correct answer label Lr, thereby acquiring the shape data Da (step S396).

According to the eleventh embodiment described above, when the information processing device 5i determines, using the change information, that the appearance state of the target region Ta has changed, the information processing device 5i can perform the following processing. In this case, the information processing device 5i can perform transfer learning with respect to the first learning model Md1, which has been trained using a plurality of sets of training data in which a training image Ti including the vehicle 10 and the target region Ta before its change in the appearance state is associated with the region correct answer label Lr, using a plurality of sets of training data in which a training image Ti including the vehicle 10 and the target region Ta after its change in the appearance state is associated with the region correct answer label Lr. In this way, in the case where the appearance state of the target region Ta has changed, it is possible to suppress a decrease in detection accuracy in the detection of the vehicle 10 from the captured images Im1 to Im4.

Further, according to the eleventh embodiment described above, when the appearance state identified by the state information is different from the training image Ti used at the time of the training of the first learning model Md1, the information processing device 5i can acquire the shape data Da by performing the following processing. In this case, the information processing device 5i can acquire the shape data Da by inputting the captured images Im1 to Im4 to the first learning model Md1, which has been trained by transfer learning using a plurality of sets of training data in which a training image Ti including the vehicle 10 and the target region Ta having an appearance state identified by the state information is associated with a region correct answer label Lr. In this way, it is possible to suppress a decrease in accuracy in the detection of the vehicle 10 from the captured images Im1 to Im4, in the case where the appearance state of the target region Ta is different from the appearance state at the time when the first learning model Md1 was trained.

L. Twelfth Embodiment

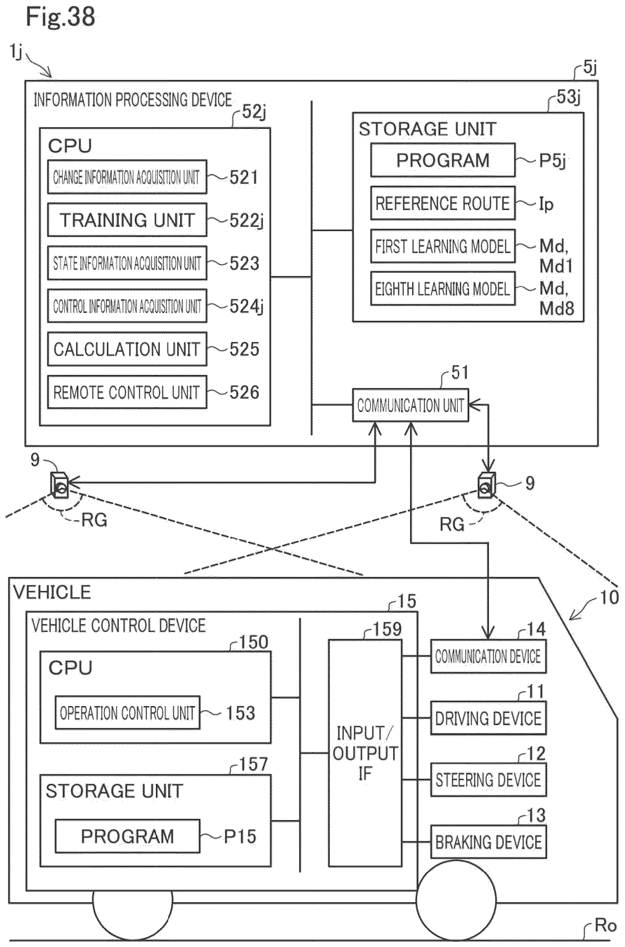

Fig. 38 is a diagram showing a structure of an information processing system 1j in the twelfth embodiment. The information processing system 1j includes one or more vehicles 10, the external camera 9, and an information processing device 5j. In the present embodiment, when it is determined that the appearance state of the target region Ta has changed, the information processing device 5j discards the first learning model Md1 and trains an eighth learning model Md8 as a new machine learning model Md. The rest of the structure of the information processing system 1j is the same as that of the first embodiment, unless otherwise specified. The same structure as that of the first embodiment is described with the same reference symbols and the explanation thereof is omitted.

The information processing device 5j includes the communication unit 51, a CPU 52j, and a storage unit 53j. The storage unit 53j of the information processing device 5j stores various types of information, including various programs P5j that control operation of the information processing device 5j, and the first learning model Md1.

The CPU 52j of the information processing device 5j functions as the change information acquisition unit 521, a training unit 522j, the state information acquisition unit 523, a control information acquisition unit 524j, the calculation unit 525, and the remote control unit 526, by expanding the various programs P5j stored in the storage unit 53j.

The training unit 522j determines whether the appearance state of the target region Ta has changed from the appearance state at the time when the first learning model Md1 was trained using the change information. Further, when the training unit 522j determines that the appearance state of the target region Ta has changed, the training unit 522j perform the following processing. In this case, the training unit 522j discards the first learning model Md1, which has been trained using the initial training data set. Then, the training unit 522j trains a new eighth learning model Md8 using a new training data set. The new training data set includes a plurality of sets of training data in which the training image Ti including the vehicle 10 and the target region Ta after its change in the appearance state is associated with the region correct answer label Lr. As the eighth learning model Md8, for example, a CNN for implementing either semantic segmentation or instance segmentation may be used. Upon the training of the CNN, for example, CNN parameters are updated by back-propagation (error back-propagation) to reduce errors between the output result of the eighth learning model Md8 and the region correct answer label Lr. The training unit 522j stores the created eighth learning model Md8 in the storage unit 53j.

The control information acquisition unit 524j identifies the appearance state of the target region Ta using the state information and inputs the captured images Im1 to Im4 to the machine learning model Md according to the appearance state of the target region Ta, thereby acquiring the shape data Da. Specifically, when the appearance state of the target region Ta identified by the state information is different from the appearance state of the target region Ta in the training image Ti used at the time of the training of the first learning model Md1, the control information acquisition unit 524j performs the following processing. In this case, the control information acquisition unit 524j acquires the shape data Da by inputting the captured images Im1 to Im4 to the eighth learning model Md8. On the other hand, when the appearance state of the target region Ta identified by the state information is the same as the appearance state of the target region Ta in the training image Ti used at the time of the training of the first learning model Md1, the control information acquisition unit 524j performs the following processing. In this case, the control information acquisition unit 524j acquires the shape data Da by inputting the captured images Im1 to Im4 to the first learning model Md1.

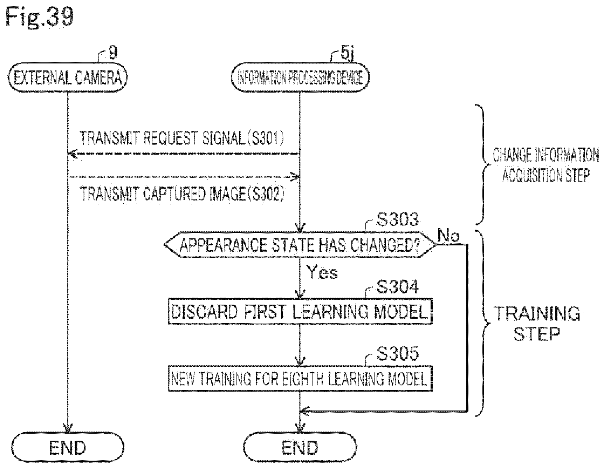

Fig. 39 is a flowchart showing a training method for the learning models Md1 and Md8 in the twelfth embodiment. The flow shown in Fig. 39 is repeated, for example, every predetermined time from the time point at which the running of the vehicle 10 by unmanned driving is started.

In a change information acquisition step, the change information acquisition unit 521 transmits a request signal for acquiring the captured images Im1 to Im4 as the change information to the external camera 9 (step S301). Upon receiving the request signal, the external camera 9 transmits the captured images Im1 to Im4 to the information processing device 5i (step S302).

After the change information acquisition step, a training step is performed. In the training step, the training unit 522j determines, using the captured images Im1 to Im4, whether the appearance state of the target region Ta has changed from the appearance state at the time when the first learning model Md1 stored in the storage unit 53j was trained. When the training unit 522j determines that the appearance state of the target region Ta has changed from the appearance state at the time when the first learning model Md1 stored in the storage unit 53j was trained (step S303: Yes), the training unit 522j discards the first learning model Md1 (step S304). Then, the training unit 522j performs new training of the eighth learning model Md8 (step S305). On the other hand, when the training unit 522j determines that the appearance state of the target region Ta has not changed from the appearance state at the time when the first learning model Md1 stored in the storage unit 53j was trained (step S303: No), the training unit 522j ends the flow without discarding the first learning model Md1 and performing the new training of the eighth learning model Md8.

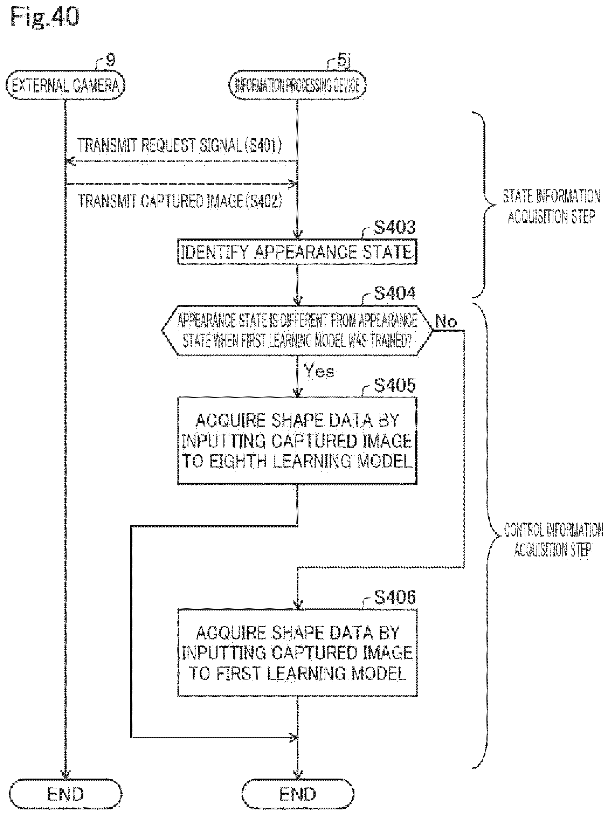

Fig. 40 is a flowchart showing a method for acquiring the shape data Da in the twelfth embodiment. The flow shown in Fig. 40 is repeated, for example, every predetermined time from the time point at which the running of the vehicle 10 by unmanned driving is started.

In a state information acquisition step, the state information acquisition unit 523 transmits a request signal for acquiring the captured images Im1 to Im4 as the state information to the external camera 9 (step S401). Upon receiving the request signal, the external camera 9 transmits the captured images Im1 to Im4 to the information processing device 5j (step S402). The state information acquisition unit 523j identifies the appearance state of the target region Ta by analyzing the captured images Im1 to Im4 (step S403).

After the state information acquisition step, a control information acquisition step is performed. In the control information acquisition step, the control information acquisition unit 524j inputs the captured images Im1 to Im4 to the machine learning model Md according to the appearance state of the target region Ta, thereby acquiring the shape data Da. Specifically, when the appearance state identified by the state information is different from the appearance state of the target region Ta in the training image Ti used at the time of the training of the first learning model Md1 stored in the storage unit 53j (step S404: Yes), the control information acquisition unit 524j performs the following processing. In this case, the control information acquisition unit 524j acquires the shape data Da by inputting the captured images Im1 to Im4 to the eighth learning model Md8 (step S405). On the other hand, when the appearance state identified by the state information is the same as the appearance state of the target region Ta in the training image Ti used at the time of the training of the first learning model Md1 stored in the storage unit 53j (step S404: No), the control information acquisition unit 524j performs the following processing. In this case, the control information acquisition unit 524j acquires the shape data Da by inputting the captured images Im1 to Im4 to the first learning model Md1 (step S406).

According to the twelfth embodiment described above, when the information processing device 5j determines, using the change information, that the appearance state of the target region Ta has changed, the information processing device 5j can perform the following processing. In this case, the information processing device 5j can discard the first learning model Md1, which has been trained using a plurality of sets of training data in which the training image Ti including the vehicle 10 and the target region Ta after its change in the appearance state is associated with the region correct answer label Lr, and can perform new training of the eighth learning model Md8 using a plurality of sets of training data in which the training image Ti including the vehicle 10 and the target region Ta after its change in the appearance state is associated with the region correct answer label Lr. In this way, in the case where the appearance state of the target region Ta has changed, it is possible to suppress a decrease in detection accuracy in the detection of the vehicle 10 from the captured images Im1 to Im4.

Further, according to the twelfth embodiment described above, when the appearance state identified by the state information is different from the training image Ti used at the time of the training of the first learning model Md1, the information processing device 5j can acquire the shape data Da by performing the following processing. In this case, the information processing device 5j can acquire the shape data Da by inputting the captured images Im1 to Im4 to the eighth learning model Md8, which has been trained using a plurality of sets of training data in which the training image Ti including the vehicle 10 and the target region Ta having an appearance state identified by the state information is associated with the region correct answer label Lr. In this way, it is possible to suppress a decrease in accuracy in the detection of the vehicle 10 from the captured images Im1 to Im4, in the case where the appearance state of the target region Ta is different from the appearance state at the time when the first learning model Md1 was trained.

M. Thirteenth Embodiment:

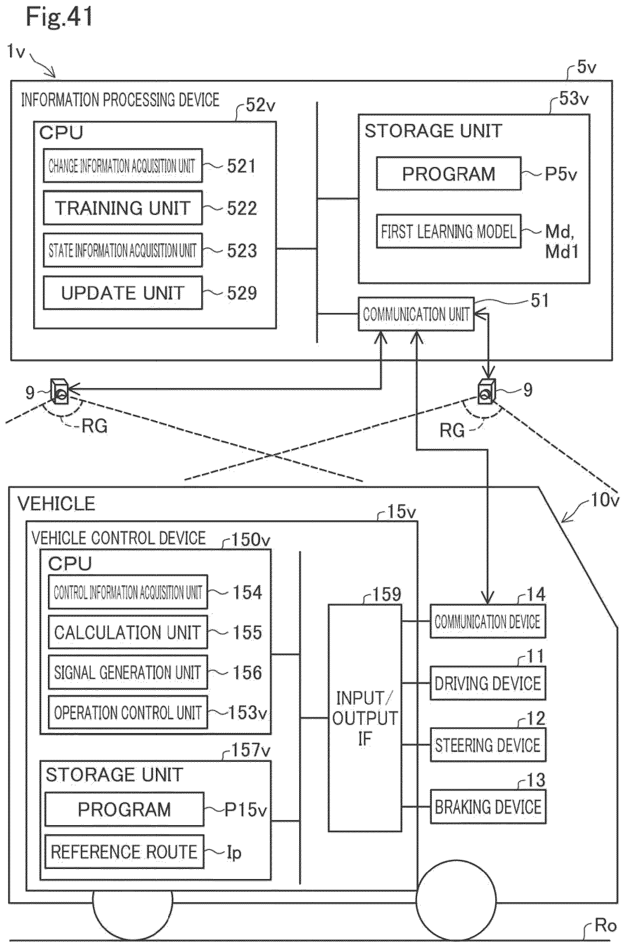

Fig. 41 is a diagram showing a structure of an information processing system 1v in the thirteenth embodiment. The information processing system 1v includes one or more vehicles 10v, the external camera 9, and an information processing device 5v. In the present embodiment, the vehicle control device 15v mounted on the vehicle 10v acquires the vehicle position information using the detection results output from an external camera 9, thereby generating a running control signal. The rest of the structure of the information processing system 1v is the same as that of the first embodiment, unless otherwise specified. The same structure as that of the first embodiment is described with the same reference symbols and the explanation thereof is omitted.

The information processing device 5v includes the communication unit 51, a CPU 52v, and a storage unit 53v. The storage unit 53v of the information processing device 5v stores various types of information, including various programs P5v that control operation of the information processing device 5v, and the first learning model Md1.

The CPU 52v of the information processing device 5v functions as the change information acquisition unit 521, the training unit 522, the state information acquisition unit 523, and an update unit 529, by expanding the various programs P5v stored in the storage unit 53v. The update unit 529 updates the first learning model Md1 stored in the vehicle control device 15v so that the first learning model Md1 stored in the vehicle control device 15v has the latest state, and the update is applied each time the first learning model Md1 stored in the vehicle control device 15v is retrained.

The vehicle control device 15v includes a CPU 150v, a storage unit 157v, and the input/output interface 159. The storage unit 157v of the vehicle control device 15v stores various types of information, including various programs P15v that control operation of the vehicle control device 15v, and the reference route Ip.

The CPU 150v of the vehicle control device 15v functions as the control information acquisition unit 154, the calculation unit 155, the signal generation unit 156, and an operation control unit 153v by expanding the various programs P15v stored in the storage unit 157v. The control information acquisition unit 154 acquires the shape data Da by inputting the captured images Im1 to Im4 to the first learning model Md1. The calculation unit 155 acquires the vehicle position information using the shape data Da. The signal generation unit 156 determines the target location to which the vehicle 10 is supposed to go next using the vehicle position information and the reference route Ip. Then, the signal generation unit 156 generates a running control signal to cause the vehicle 10v to run toward the determined target location. The operation control unit 153v controls the actuator using the generated running control signal, thereby causing the vehicle 10v to run.

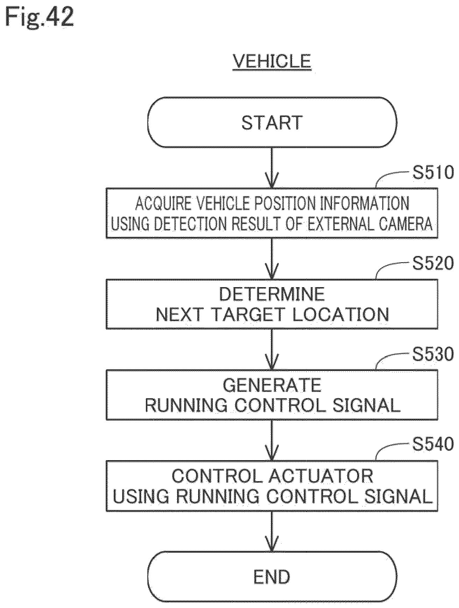

Fig. 42 is a flowchart showing a method for causing the vehicle 10v to run in the information processing system 1v of the thirteenth embodiment. The flow shown in Fig. 42 is repeated, for example, every predetermined time from the time point at which the running of the vehicle 10v by unmanned driving is started.

The calculation unit 155 of the vehicle control device 15v mounted on the vehicle 10v acquires the vehicle position information using the shape data Da (step S510). The signal generation unit 156 determines the target location to which the vehicle 10v should go next (step S520). The signal generation unit 156 generates a running control signal to cause the vehicle 10v to run toward the determined target location (step S530). The operation control unit 153 controls the actuator using the generated running control signal, thereby causing the vehicle 10v to run at the acceleration and the steering angle indicated by the running control signal (step S540). The vehicle control device 15v repeats the acquisition of the vehicle position information, the determination of the target location, the generation of the running control signal, and the control of the actuator, in a predetermined cycle.

According to the thirteenth embodiment described above, the information processing system 1v is capable of causing the vehicle 10v to run by autonomous control without performing remote control of the vehicle 10v by the information processing device 5v.

N. Alternative Embodiments:

N-1. Alternative Embodiment 1:

The factor affecting the change in the appearance state of the target region Ta may be any factor other than dirt in the target region Ta. The factor affecting the change in the appearance state of the target region Ta may be, for example, irregularities in the target region Ta.

The irregularities in the target region Ta are, for example, depressions on the pathway Ro that are generated as the road surface Rs wears down by, for example, an increase in the frequency of running of the vehicle 10, 10v. The irregularities in the target region Ta may also be protrusions generated in the pathway Ro due to rising of the road surface Rs. In this embodiment, the training unit 522, 522a to 522j can train the machine learning model Md according to the occurrence status of irregularities in the target region Ta. This can suppress the decrease in accuracy of the control information output from the machine learning model Md when the shape of the road surface Rs changes. Furthermore, the control information acquisition unit 154, 524, 524c to 524j can cause the vehicle 10, 10v to run by unmanned driving by acquiring control information using the machine learning model Md according to the occurrence status of irregularities in the target region Ta.

N-2. Alternative Embodiment 2:

The factor affecting the change in the appearance state of the target region Ta may be any factor other than dirt in the target region Ta. The factor affecting the change in the appearance state of the target region Ta may be, for example, an object other than the vehicle 10 movably disposed in the target region Ta. That is, the factor affecting the change in the appearance state of the target region Ta may be an object other than the vehicle 10, and may be, at least one of an object movably disposed in the target region Ta and an object that has been removed from the target region Ta. Examples of the object movably disposed in the target region Ta include fabrication facility with flexible disposition arrangement, tools such as road cones or signs, and the like. In this embodiment, the information processing device 5, 5a to 5j, 5v can train the machine learning model Md according to the arrangement status of objects in the target region Ta. This can suppress the decrease in accuracy of the control information output from the machine learning model Md when the arrangement status of objects in the target region Ta changes. Furthermore, the information processing device 5, 5a to 5j, 5v can cause the vehicle 10, 10v to run by unmanned driving by acquiring control information using the machine learning model Md according to the arrangement status of objects in the target region Ta.

N-3. Alternative Embodiment 3:

The factor affecting the change in the appearance state of the target region Ta may be any factor other than dirt in the target region Ta. The factor affecting the change in the appearance state of the target region Ta may be, for example, the color of the road surface in the pathway Ro. The color of the road surface in the pathway Ro may be, for example, the color of lane marking, such as white lines, the color of the paint of the floor surface including the pathway Ro, or the color of the paved road surface Rs. In this embodiment, the information processing device 5, 5a to 5j, 5v can train the machine learning model Md according to the color of the road surface in the pathway Ro. This allows the following to be achieved, for example, when the color of lane marking changes over time or depending on the maintenance status of the lane marking, for example, when the color of lane marking fades off over time or becomes darker by repainting. In this case, it is possible to suppress the decrease in accuracy of the signal generation parameter and the running control signal output from the machine learning model Md. This also allows the following to be achieved when the paint color of the floor surface including the pathway Ro changes over time or depending on the maintenance status of the floor surface, such as when the paint color of the floor surface including the pathway Ro changes by color fading by an increase in the frequency of running of the vehicle 10, 10v, becomes darker by repainting, or changes in its hue or the like from the state before repainting. In this case, it is possible to suppress the decrease in accuracy of the signal generation parameter and the running control signal output from the machine learning model Md. Further, it is possible to suppress the decrease in accuracy of the signal generation parameter and the running control signal output from the machine learning model Md, for example, when the color of the paved road surface Rs changes according to the pavement status of the pathway Ro, such as when the color of the paved road surface Rs becomes darker due to re-pavement. Furthermore, the information processing device 5, 5a to 5j, 5v can cause the vehicle 10, 10v to run by unmanned driving by acquiring control information using the machine learning model Md according to the color of the road surface of the pathway Ro.

N-4. Alternative Embodiment 4:

At least some of the functions of the information processing device 5, 5a to 5j, 5v may be implemented as a function of the vehicle control device 15, 15v or a function of the external camera 9. For example, if all of the functions of the information processing device 5, 5a to 5j, 5v are implemented by the external camera 9, the information processing device 5, 5a to 5j, 5v can acquire the coordinate values Cr1 to Cr4, Cb1 to Cb8 in the camera coordinate system without using the camera identifier.

N-5. Alternative Embodiment 5:

In each of the first to twelfth embodiments above, the information processing devices 5, 5a-5j perform the processing from acquisition of vehicle location information to generation of a running control signal. By contrast, the vehicle 10 may perform at least part of the processing from acquisition of vehicle location information to generation of a running control signal. For example, embodiments (1) to (3) described below are applicable, for example.

(1) the information processing devices 5, 5a-5j may acquire vehicle location information, determine a target location to which the vehicle 10 is to move next, and generate a route from a current location of the vehicle 10 indicated by the acquired vehicle location information to the target location. The information processing devices 5, 5a-5j may generate a route to the target location between the current location and a destination or generate a route to the destination. The information processing devices 5, 5a-5j may transmit the generated route to the vehicle 10. The vehicle 10 may generate a running control signal in such a manner as to cause the vehicle 10 to run along the route received from the information processing devices 5, 5a-5j and control an actuator using the generated running control signal.

(2) The information processing devices 5, 5a-5j may acquire vehicle location information and transmit the acquired vehicle location information to the vehicle 10. The vehicle 10 may determine a target location to which the vehicle 10 is to move next, generate a route from a current location of the vehicle 10 indicated by the received vehicle location information to the target location, generate a running control signal in such a manner as to cause the vehicle 10 to run along the generated route, and control an actuator using the generated running control signal.

(3) In the foregoing embodiments (1) and (2), an internal sensor may be mounted on the vehicle 10, and detection result output from the internal sensor may be used in at least one of the generation of the route and the generation of the running control signal. The internal sensor is a sensor mounted on the vehicle 10. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the information processing devices 5, 5a-5j may acquire detection result from the internal sensor, and in generating the route, may reflect the detection result from the internal sensor in the route. In the foregoing embodiment (1), the vehicle 10 may acquire detection result from the internal sensor, and in generating the running control signal, may reflect the detection result from the internal sensor in the running control signal. In the foregoing embodiment (2), the vehicle 10 may acquire detection result from the internal sensor, and in generating the route, may reflect the detection result from the internal sensor in the route. In the foregoing embodiment (2), the vehicle 10 may acquire detection result from the internal sensor, and in generating the running control signal, may reflect the detection result from the internal sensor in the running control signal.

(4) In the above thirteenth embodiment in which the vehicle 10v can be running by autonomous control, the vehicle 10v may be equipped with an internal sensor, and detection result output from the internal sensor may be used in at least one of generation of a route and generation of a running control signal. For example, the vehicle 10v may acquire detection result from the internal sensor, and in generating the route, may reflect the detection result from the internal sensor in the route. The vehicle 10v may acquire detection result from the internal sensor, and in generating the running control signal, may reflect the detection result from the internal sensor in the running control signal.

(5) In the above thirteen embodiment, the vehicle 10v acquires vehicle location information using detection result from the external sensor located at a different location than the vehicle 10v. By contrast, the vehicle 10v may be equipped with an internal sensor, the vehicle 10v may acquire vehicle location information using detection result from the internal sensor, determine a target location to which the vehicle 10v is to move next, generate a route from a current location of the vehicle 10v indicated by the acquired vehicle location information to the target location, generate a running control signal for running along the generated route, and control an actuator of the vehicle 10v using the generated running control signal. In this case, the vehicle 10v is capable of running without using any detection result from an external sensor. The vehicle 10v may acquire target arrival time or traffic congestion information from outside the vehicle 10v and reflect the target arrival time or traffic congestion information in at least one of the route and the running control signal.

(5) In each of the first to twelfth embodiments above, the information processing devices 5, 5a-5j automatically generates a running control signal to be transmitted to the vehicle 10. By contrast, the information processing devices 5, 5a-5j may generate a running control signal to be transmitted to the vehicle 10 in response to operation by an external operator existing outside the vehicle 10. For example, the external operator may operate an operating device including a display on which a image output from the external sensor is displayed, steering, an accelerator pedal, and a brake pedal for operating the vehicle 10 remotely, and a communication device for making communication with the information processing devices 5, 5a-5j through wire communication or wireless communication, for example, and the information processing devices 5, 5a-5j may generate a running control signal responsive to the operation on the operating device.

N-6. Alternative Embodiment 6:

In each of the above-described embodiments, the vehicles 10, 10v are simply required to have a configuration to become movable by unmanned driving. The vehicles 10, 10v may embodied as a platform having the following configuration, for example. The vehicles 10, 10v are simply required to include at least actuators and a controller. More specifically, in order to fulfill three functions including "run," "turn," and "stop" by unmanned driving, the actuators may include a driving device, a steering device and a braking device. The actuators are controlled by the controller that controls running of the vehicle 10, 10v. In order for the vehicles 10, 10v to acquire information from outside for unmanned driving, the vehicles 10, 10v are simply required to include the communication device further. Specifically, the vehicles 10, 10v to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 10, 10v before the vehicles 10, 10v are shipped from a factory, or a remaining component such as a bodyshell may be mounted on the vehicles 10, 1 0v after the vehicles 10, 1 0v is shipped from a factory while the remaining component such as a bodyshell is not mounted on the vehicles 10, 10v. Each of components may be mounted on the vehicle 10, 10v from any direction such as from above, from below, from the front, from the back, from the right, or from the left. Alternatively, these components may be mounted from the same direction or from respective different directions. The location determination for the platform may be performed in the same way as for the vehicles 10, 10v in each of the above embodiments.

N-7. Alternative Embodiment 7:

The vehicles 10, 10v may be manufactured by combining a plurality of modules. The module means a unit composed of one or more components grouped according to a configuration or function of the vehicles 10, 10v. For example, a platform of the vehicles 10, 10v may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicles 10, 10v different from the platform may be modularized. Various modules may include an arbitrary exterior component such as a bumper or a grill, or an arbitrary interior component such as a seat or a console. Not only the vehicles 10, 10v but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

N-8. Alternative Embodiment 8:

A configuration for realizing running of a vehicles 10, 10v by unmanned driving is also called a "Remote Control auto Driving system". Conveying vehicles 10, 10v using Remote Control Auto Driving system is also called "self-running conveyance". Producing the vehicles 10, 10v using self-running conveyance is also called "self-running production". In self-running production, for example, at least part of the conveyance of vehicles 10, 10v is realized by self-running conveyance in a factory where the vehicles 10, 10v is manufactured.

The present disclosure is not limited to the embodiments described above, but can be realized in various configurations without departing from the spirit thereof. For example, the technical features of the embodiments corresponding to the technical features in each of the aspects stated in the Summary may be replaced or combined as appropriate to solve some or all of the problems described above or to achieve some or all of the effects described above. Further, if the technical feature is not described as essential in this specification, the technical feature may be deleted as appropriate.

**Claims**

1. An information processing device(5;5a;5b;5e-5j;5v) used to move a moving object(10) that is capable of moving by unmanned driving, comprising:

    a change information acquisition unit(521;521a) that acquires change information regarding a change in an appearance state of a target region(Ta), the target region(Ta) being included in an imaging range of an external camera(9) provided in a place different from a place of the moving object(10), and including a pathway on which the moving object(10) moves and a surrounding area of the pathway; and
    when the appearance state is determined, using the change information, to have changed, at least one of:

        a training unit(522;522a;522b;522e-522j;522v) that trains a machine learning model using a plurality of sets of training data in which a training image including the target region(Ta) after a change in the appearance state and the moving object(10) is associated with a correct answer label when a captured image acquired by the external camera(9) imaging the target region(Ta) and the moving object(10) is input, the machine learning model being configured to output at least one of a control signal for defining operation of the moving object(10) that moves by the unmanned driving and a parameter used in generating the control signal; and
    a notification control unit(527) that notifies an administrator of training request information for training the machine learning model.

2. An information processing device(5c) used to move a moving object(10) that is capable of moving by unmanned driving, comprising:

    a training unit(522c) that trains a machine learning model when a captured image acquired by an external camera(9) imaging a target region(Ta) and the moving object(10) is input, the machine learning model being configured to output at least one of a control signal for defining operation of the moving object(10) that moves by the unmanned driving and a parameter used in generating the control signal, the target region(Ta) being included in an imaging range of the external camera(9) provided in a place different from a place of the moving object(10), and including a pathway on which the moving object(10) moves and a surrounding area of the pathway,
    wherein
    the target region(Ta) is classified into a plurality of appearance states according to a change in appearance, and
    the training unit(522c) trains the machine learning model for each of the appearance states using M (M is an integer of 2 or more) sets of training data in which a training image including the target region(Ta) classified as one of the plurality of appearance states and the moving object(10) is associated with a correct answer label, and N (N is an integer of 0 or more and less than M) sets of training data in which a training image including the target region(Ta) classified as another remaining appearance state and the moving object(10) is associated with a correct answer label.

3. An information processing device(5d) used to move a moving object(10) that is capable of moving by unmanned driving, comprising:

a training unit(522d) that trains a machine learning model when a captured image acquired by an external camera(9) imaging a target region(Ta) and the moving object(10), and an appearance state of the target region(Ta) are input, the machine learning model being configured to output at least one of a control signal for defining operation of the moving object(10) that moves by the unmanned driving and a parameter used in generating the control signal, the target region(Ta) being included in an imaging range of the external camera(9) provided in a place different from a place of the moving object(10), and including a pathway on which the moving object(10) moves and a surrounding area of the pathway,
wherein
the appearance state includes a plurality of appearance states into which the target region(Ta) is classified according to a change in appearance, and
the training unit(522d) trains the machine learning model using a plurality of sets of training data in which a training image including the target region(Ta) and the moving object(10), a correct answer label, and supplementary information indicating the appearance state of the target region(Ta) included in the training image are associated with each other.

4. An information processing device(5;5a;5b;5e-5j) used to move a moving object(10) that is capable of moving by unmanned driving, comprising:

a state information acquisition unit(523;523a) that acquires state information regarding an appearance state of a target region(Ta), the target region(Ta) being included in an imaging range of an external camera(9) provided in a place different from a place of the moving object(10), and including a pathway on which the moving object(10) moves and a surrounding area of the pathway; and
a control information acquisition unit(524;524d-524j) that inputs, when a captured image acquired by the external camera(9) imaging the target region(Ta) and the moving object(10) is input, the captured image to a trained machine learning model, thereby acquiring at least one of a control signal for defining operation of the moving object(10) that moves by the unmanned driving and a parameter used in generating the control signal, the trained machine learning model being configured to output at least one of the control signal and the parameter,
wherein, when the appearance state identified by the state information is different from the appearance state when the machine learning model was trained, the control information acquisition unit(524;524d-524j) inputs the captured image to the machine learning model that has been trained using a plurality of sets of training data in which a training image including the target region(Ta) having the appearance state identified by the state information and the moving object(10) is associated with a correct answer label.

5. An information processing device(5b) used to move a moving object(10) that is capable of moving by unmanned driving, comprising:

a state information acquisition unit(523) that acquires state information regarding an appearance state of a target region(Ta), the target region(Ta) being included in an imaging range of an external camera(9) provided in a place different from a place of the moving object(10), and including a pathway on which the moving object(10) moves and a surrounding area of the pathway;
a model acquisition unit(528) that acquires a machine learning model when a captured image acquired by the external camera(9) imaging the target region(Ta) and the moving object(10) is input, the machine learning model being configured to output at least one of a control signal for defining operation of the moving object(10) that moves by the unmanned driving and a parameter used in generating the control signal; and
a control information acquisition unit(524) that acquires at least one of the control signal and the parameter by inputting the captured image to the machine learning model acquired by the model acquisition unit,
wherein
the appearance state includes a plurality of appearance states into which the target region(Ta) is classified according to a change in appearance,
the machine learning model is prepared for each of the appearance states,
the machine learning model prepared for each of the appearance states has been trained in advance using M (M is an integer of 2 or more) sets of training data in which a training image including the target region(Ta) classified as one of the plurality of appearance states and the moving object(10) is associated with a correct answer label, and N (N is an integer of 0 or more and less than M) sets of training data in which a training image including the target region(Ta) classified as another remaining appearance state and the moving object(10) is associated with a correct answer label, and

the model acquisition unit(528) acquires the machine learning model selected according to the appearance state from among the plurality of machine learning models prepared for the respective appearance states.

6. An information processing device(5d) used to move a moving object(10) that is capable of moving by unmanned driving, comprising:

a state information acquisition unit(523) that acquires state information regarding an appearance state of a target region(Ta), the target region(Ta) being included in an imaging range of an external camera(9) provided in a place different from a place of the moving object(10), and including a pathway on which the moving object(10) moves and a surrounding area of the pathway; and
a control information acquisition unit(524d) that inputs, when a captured image acquired by the external camera(9) imaging the target region(Ta) and the moving object(10), and the appearance state identified by the state information are input, the captured image and the appearance state identified by the state information to a trained machine learning model, thereby acquiring at least one of a control signal for defining operation of the moving object(10) that moves by the unmanned driving and a parameter used in generating the control signal, the trained machine learning model being configured to output at least one of the control signal and the parameter,
wherein
the appearance state includes a plurality of appearance states into which the target region(Ta) is classified according to a change in appearance, and
the machine learning model has been trained in advance using a plurality of sets of training data in which a training image including the target region(Ta) and the moving object(10), a correct answer label, and supplementary information indicating the appearance state of the target region(Ta) included in the training image are associated with each other.

7. The information processing device(5;5a-5j;5v) according to any one of claims 1 to 6, wherein a factor affecting a change in the appearance state includes at least one of dirt in the target region(Ta), irregularities in the target region(Ta), an object other than the moving object(10) and movably disposed in the target region(Ta), and a road surface color of the pathway.

8. The information processing device(5;5a-5j;5v) according to any one of claims 1 to 6, wherein the machine learning model is trained during a period when the unmanned driving control is performed.

9. The information processing device(5;5a-5j;5v) according to any one of claims 1 to 6, wherein the training image includes at least one of the captured image and a composite image generated by combining a virtual moving object(10) image generated by virtually reproducing the moving object(10) with a background image that is either a real background image acquired by the external camera(9) imaging the target region(Ta) or a virtual background image generated by virtually reproducing the target region(Ta).

10. An information processing system(1;1a-1j;1v) used to move a moving object(10) that is capable of moving by unmanned driving, comprising:

the moving object(1 0);
an external camera(9) provided in a place different from a place of the moving object(10); and
the information processing device(5;5a-5j;5v) according to any one of claims 1 to 6.

11. An information processing method used to move a moving object(10) that is capable of moving by unmanned driving, comprising:

a change information acquisition step of acquiring change information regarding a change in an appearance state of a target region(Ta), the target region(Ta) being included in an imaging range of an external camera(9) provided in a place different from a place of the moving object(10), and including a pathway on which the moving object(10) moves and a surrounding area of the pathway; and
when the appearance state is determined, using the change information, to have changed, at least one of:

a training step of training a machine learning model using a plurality of sets of training data in which a training image including the target region(Ta) after a change in the appearance state and the moving object(10) is associated with a correct answer label when a captured image acquired by the external camera(9) imaging the target region(Ta) and the moving object(10) is input, the machine learning model being configured to output at least one of a control signal for defining operation of the moving object(10) that moves by the unmanned driving and a parameter used in generating the control signal; and

a notification step of notifying an administrator of training request information for training the machine learning model.

12. An information processing method used to move a moving object(10) that is capable of moving by unmanned driving, comprising:

a preparation step of preparing a plurality of training images including a target region(Ta) and the moving object(10), the target region(Ta) being included in an imaging range of an external camera(9) provided in a place different from a place of the moving object(10), and including a pathway on which the moving object(10) moves and a surrounding area of the pathway; and
a training step of training a machine learning model when a captured image acquired by the external camera(9) imaging the target region(Ta) and the moving object(10) is input, the machine learning model being configured to output at least one of a control signal for defining operation of the moving object(10) that moves by the unmanned driving and a parameter used in generating the control signal, wherein
the target region(Ta) is classified into a plurality of appearance states according to a change in appearance, and
the training step includes training the machine learning model for each of the appearance states using M (M is an integer of 2 or more) sets of training data in which the training image including the target region(Ta) classified as one of the plurality of appearance states and the moving object(10) is associated with a correct answer label, and N (N is an integer of 0 or more and less than M) sets of training data in which the training image including the target region(Ta) classified as another remaining appearance state and the moving object(10) is associated with a correct answer label.

13. An information processing method used to move a moving object(10) that is capable of moving by unmanned driving, comprising:

a preparation step of preparing a plurality of training images including a target region(Ta) and the moving object(10), the target region(Ta) being included in an imaging range of an external camera(9) provided in a place different from a place of the moving object(10), and including a pathway on which the moving object(10) moves and a surrounding area of the pathway; and
a training step of training a machine learning model when a captured image acquired by the external camera(9) imaging the target region(Ta) and the moving object(10), and an appearance state of the target region(Ta) are input, the machine learning model being configured to output at least one of a control signal for defining operation of the moving object(10) that moves by the unmanned driving and a parameter used in generating the control signal, wherein
the appearance state includes a plurality of appearance states into which the target region(Ta) is classified according to a change in appearance, and
the training step includes training the machine learning model using a plurality of sets of training data in which the training image including the target region(Ta) and the moving object(10), a correct answer label, and supplementary information indicating the appearance state of the target region(Ta) included in the training image are associated with each other.

14. An information processing method used to move a moving object(10) that is capable of moving by unmanned driving, comprising:

a state information acquisition step of acquiring state information regarding an appearance state of a target region(Ta), the target region(Ta) being included in an imaging range of an external camera(9) provided in a place different from a place of the moving object(10), and including a pathway on which the moving object(10) moves and a surrounding area of the pathway; and
a control information acquisition step of inputting, when a captured image acquired by the external camera(9) imaging the target region(Ta) and the moving object(10) is input, the captured image to a trained machine learning model, thereby acquiring at least one of a control signal for defining operation of the moving object(10) that moves by the unmanned driving and a parameter used in generating the control signal, the trained machine learning model being configured to output at least one of the control signal and the parameter, wherein, when the appearance state identified by the state information is different from the appearance state of the target region(Ta) in a training image input at a time when the machine learning model was trained, the control information acquisition step includes inputting the captured image to the machine learning model that has been trained using a plurality of sets of training data in which a training image including the target region(Ta) having the appearance state identified by the state information and the moving object(10) is associated with a correct answer label.

15. An information processing method used to move a moving object(10) that is capable of moving by unmanned driving, comprising:

a state information acquisition step of acquiring state information regarding an appearance state of a target region(Ta), the target region(Ta) being included in an imaging range of an external camera(9) provided in a place different from a place of the moving object(10), and including a pathway on which the moving object(10) moves and a surrounding area of the pathway;

a model acquisition step of acquiring a machine learning model when a captured image acquired by the external camera(9) imaging the target region(Ta) and the moving object(10) is input, the machine learning model being configured to output at least one of a control signal for defining operation of the moving object(10) that moves by the unmanned driving and a parameter used in generating the control signal; and

a control information acquisition step of acquiring at least one of the control signal and the parameter by inputting the captured image to the machine learning model acquired in the model acquisition step,

wherein

the appearance state includes a plurality of appearance states into which the target region(Ta) is classified according to a change in appearance,

the machine learning model is prepared for each of the appearance states,

the machine learning model prepared for each of the appearance states has been trained in advance using M (M is an integer of 2 or more) sets of training data in which a training image including the target region(Ta) classified as one of the plurality of appearance states and the moving object(10) is associated with a correct answer label, and N (N is an integer of 0 or more and less than M) sets of training data in which a training image including the target region(Ta) classified as another remaining appearance state and the moving object(10) is associated with a correct answer label, and

the model acquisition step includes acquiring the machine learning model selected according to the appearance state from among the plurality of machine learning models prepared for the respective appearance states.

## Fig.1

1

INFORMATION PROCESSING DEVICE  5

CPU  52

| CHANGE INFORMATION ACQUISITION UNIT | ~521 |
| TRAINING UNIT | ~522 |
| STATE INFORMATION ACQUISITION UNIT | ~523 |
| CONTROL INFORMATION ACQUISITION UNIT | ~524 |
| CALCULATION UNIT | ~525 |
| REMOTE CONTROL UNIT | ~526 |

STORAGE UNIT  53

| PROGRAM | ~P5 |
| REFERENCE ROUTE | ~Ip |
| FIRST LEARNING MODEL | ~Md, Md1 |

COMMUNICATION UNIT  51

9  RG          9  RG          10

VEHICLE

VEHICLE CONTROL DEVICE  15

CPU  150

| OPERATION CONTROL UNIT | ~153 |

STORAGE UNIT  157

| PROGRAM | ~P15 |

INPUT/ OUTPUT IF  159

| COMMUNICATION DEVICE | ~14 |
| DRIVING DEVICE | ~11 |
| STEERING DEVICE | ~12 |
| BRAKING DEVICE | ~13 |

Ro

Fig.2

INFORMATION PROCESSING DEVICE

VEHICLE

```
        ( START )
            │
            ▼            ┌─ S110
┌─────────────────────────────────┐
│ ACQUIRE VEHICLE POSITION INFORMATION USING │
│ DETECTION RESULT OF EXTERNAL CAMERA │
└─────────────────────────────────┘
            │
            ▼            ┌─ S120
┌─────────────────────────────────┐
│           DETERMINE             │
│      NEXT TARGET LOCATION       │
└─────────────────────────────────┘
            │
            ▼            ┌─ S130
┌─────────────────────────────────┐
│           GENERATE              │
│     RUNNING CONTROL SIGNAL      │
└─────────────────────────────────┘
            │
            ▼            ┌─ S140
┌─────────────────────────────────┐
│    TRANSMIT RUNNING CONTROL     │
│       SIGNAL TO VEHICLE         │
└─────────────────────────────────┘
            │
            ▼
        (  END  )
```

```
        ( START )
            │
            ▼            ┌─ S150
┌─────────────────────────────────┐
│    RECEIVE RUNNING CONTROL SIGNAL │
│ FROM INFORMATION PROCESSING DEVICE │
└─────────────────────────────────┘
            │
            ▼            ┌─ S160
┌─────────────────────────────────┐
│        CONTROL ACTUATOR         │
│   USING RUNNING CONTROL SIGNAL  │
└─────────────────────────────────┘
            │
            ▼
        (  END  )
```

Fig.3

EP 4 560 586 A1

# Fig.4

```
    ┌─9                              ┌─5
(EXTERNAL CAMERA)          (INFORMATION PROCESSING DEVICE)
```

TRANSMIT REQUEST SIGNAL (S311)

TRANSMIT CAPTURED IMAGE (S312)

┌─S313
| IDENTIFY APPEARANCE STATE |

┌─S314
APPEARANCE STATE IS DIFFERENT FROM APPEARANCE STATE WHEN FIRST LEARNING MODEL WAS TRAINED?

STATE INFORMATION ACQUISITION STEP

No

Yes
┌─S315
| ACQUIRE SHAPE DATA BY INPUTTING CAPTURED IMAGE TO RETRAINED FIRST LEARNING MODEL |

┌─S316
| ACQUIRE SHAPE DATA BY INPUTTING CAPTURED IMAGE TO FIRST LEARNING MODEL THAT HAS NOT BEEN RETRAINED |

CONTROL INFORMATION ACQUISITION STEP

( END )          ( END )

44

Fig.5

```
                    ┌──────────────┐
                    │    START     │
                    └──────┬───────┘
                           ↓
          ┌────────────────────────────────┐
          │     IMAGE ACQUISITION STEP      │────  S410
          └────────────────┬───────────────┘
                           ↓
          ┌────────────────────────────────┐
          │   DISTORTION CORRECTION STEP    │────  S420
          └────────────────┬───────────────┘
                           ↓
          ┌────────────────────────────────┐
          │    ROTATION PROCESSING STEP     │────  S430
          └────────────────┬───────────────┘
                           ↓
          ┌────────────────────────────────┐
          │         TRIMMING STEP           │────  S440
          └────────────────┬───────────────┘
                           ↓
          ┌────────────────────────────────┐
          │        DETECTION STEP           │────  S450
          └────────────────┬───────────────┘
                           ↓
          ┌────────────────────────────────┐
          │  PERSPECTIVE TRANSFORMATION STEP │────  S460
          └────────────────┬───────────────┘
                           ↓
          ┌────────────────────────────────┐
          │ COORDINATE POINT CALCULATION STEP │────  S470
          └────────────────┬───────────────┘
                           ↓
          ┌────────────────────────────────┐
          │   POSITION TRANSFORMATION STEP  │────  S480
          └────────────────┬───────────────┘
                           ↓
                    ┌──────────────┐
                    │     END      │
                    └──────────────┘
```

Fig.6

Fig.7

Fig.8

ROTATION

INVERSE
ROTATION

EP 4 560 586 A1

Fig.9

EP 4 560 586 A1

EP 4 560 586 A1

Fig.10

50

Fig.11

INFORMATION PROCESSING DEVICE 1a — 5a

CPU 52a

CHANGE INFORMATION ACQUISITION UNIT — 521a

TRAINING UNIT — 522a

STATE INFORMATION ACQUISITION UNIT — 523a

CONTROL INFORMATION ACQUISITION UNIT — 524

CALCULATION UNIT — 525

REMOTE CONTROL UNIT — 526

STORAGE UNIT 53a

PROGRAM — P5a

REFERENCE ROUTE — Ip

FIRST LEARNING MODEL — Md, Md1

CLEANING INFORMATION — Ic

COMMUNICATION UNIT — 51

9 — RG

RG — 9

10

VEHICLE

VEHICLE CONTROL DEVICE — 15

CPU — 150

OPERATION CONTROL UNIT — 153

STORAGE UNIT — 157

PROGRAM — P15

INPUT/ OUTPUT IF — 159

COMMUNICATION DEVICE — 14

DRIVING DEVICE — 11

STEERING DEVICE — 12

BRAKING DEVICE — 13

Ro

## Fig.12

1b

5b

INFORMATION PROCESSING DEVICE 52b

**CPU**

| CHANGE INFORMATION ACQUISITION UNIT | ~521 |
| TRAINING UNIT | ~522b |
| STATE INFORMATION ACQUISITION UNIT | ~523 |
| CONTROL INFORMATION ACQUISITION UNIT | ~524 |
| CALCULATION UNIT | ~525 |
| REMOTE CONTROL UNIT | ~526 |
| NOTIFICATION CONTROL UNIT | ~527 |

**STORAGE UNIT** 53b

| PROGRAM | ~P5b |
| REFERENCE ROUTE | ~Ip |
| FIRST LEARNING MODEL | ~Md, Md1 |

NOTIFICATION UNIT ~54

INPUT OPERATION UNIT ~55

COMMUNICATION UNIT ~51

9

RG

9

RG

10

**VEHICLE**

VEHICLE CONTROL DEVICE 15

**CPU** 150

OPERATION CONTROL UNIT ~153

**STORAGE UNIT** 157

PROGRAM ~P15

INPUT/OUTPUT IF 159

COMMUNICATION DEVICE 14

DRIVING DEVICE 11

STEERING DEVICE 12

BRAKING DEVICE 13

Ro

Fig.13

EXTERNAL CAMERA `9`

INFORMATION PROCESSING DEVICE `5b`

TRANSMIT REQUEST SIGNAL (S221)

TRANSMIT CAPTURED IMAGE (S222)

CHANGE INFORMATION ACQUISITION STEP

APPEARANCE STATE HAS CHANGED? S223 — No

Yes

NOTIFY TRAINING REQUEST INFORMATION S224

NOTIFICATION STEP

RETRAINING INSTRUCTION RECEIVED? S225

No

Yes

RETRAIN FIRST LEARNING MODEL S226

TRAINING STEP

END

END

Fig.14

1c

INFORMATION PROCESSING DEVICE — 52c

**CPU**

TRAINING UNIT — 522c

STATE INFORMATION ACQUISITION UNIT — 523

CONTROL INFORMATION ACQUISITION UNIT — 524c

CALCULATION UNIT — 525

REMOTE CONTROL UNIT — 526

MODEL ACQUISITION UNIT — 528

5c

**STORAGE UNIT** — 53c

PROGRAM — P5c

REFERENCE ROUTE — Ip

SECOND LEARNING MODEL — Md, Md2, Md2b

Md,Md2,Md2a

COMMUNICATION UNIT — 51

9

RG

9

RG

10

**VEHICLE**

VEHICLE CONTROL DEVICE — 15

**CPU** — 150

OPERATION CONTROL UNIT — 153

**STORAGE UNIT** — 157

PROGRAM — P15

INPUT/ OUTPUT IF — 159

COMMUNICATION DEVICE — 14

DRIVING DEVICE — 11

STEERING DEVICE — 12

BRAKING DEVICE — 13

Ro

Fig.15

PREPARE PRIORITIZED TRAINING DATA SET
(S231)

INFORMATION PROCESSING DEVICE — 5c

PREPARATION STEP

S232

TRAIN SECOND LEARNING MODEL FOR EACH APPEARANCE STATE OF TARGET REGION

TRAINING STEP

END

EP 4 560 586 A1

Fig.16

Fig.17

1d

INFORMATION PROCESSING DEVICE 5d

CPU 52d

TRAINING UNIT ~522d

STATE INFORMATION ACQUISITION UNIT ~523

CONTROL INFORMATION ACQUISITION UNIT ~524d

CALCULATION UNIT ~525

REMOTE CONTROL UNIT ~526

STORAGE UNIT 53d

PROGRAM ~P5d

REFERENCE ROUTE ~Ip

THIRD LEARNING MODEL ~Md, Md3

COMMUNICATION UNIT ~51

9

RG

9

RG

10

VEHICLE

VEHICLE CONTROL DEVICE 15

CPU 150

OPERATION CONTROL UNIT ~153

STORAGE UNIT 157

PROGRAM ~P15

INPUT/ OUTPUT IF 159

COMMUNICATION DEVICE 14

DRIVING DEVICE 11

STEERING DEVICE 12

BRAKING DEVICE 13

Ro

Fig.18

INFORMATION PROCESSING DEVICE ⌐5d

PREPARE BATCH TRAINING DATA SET
(S241)

PREPARATION
STEP

TRAIN THIRD LEARNING MODEL ⌐S242

TRAINING
STEP

END

## Fig.19

EXTERNAL CAMERA 9

INFORMATION PROCESSING DEVICE 5d

TRANSMIT REQUEST SIGNAL (S341)

TRANSMIT CAPTURED IMAGE (S342)

S343
IDENTIFY APPEARANCE STATE

STATE INFORMATION ACQUISITION STEP

S344
ACQUIRE SHAPE DATA BY INPUTTING CAPTURED IMAGE AND APPEARANCE STATE TO THIRD LEARNING MODEL

CONTROL INFORMATION ACQUISITION STEP

END

END

Fig.20

EP 4 560 586 A1

## Fig.21

1e

5e

INFORMATION PROCESSING DEVICE

53e

52e

**CPU**

CHANGE INFORMATION ACQUISITION UNIT ~ 521

**TRAINING UNIT** ~ 522e

STATE INFORMATION ACQUISITION UNIT ~ 523

CONTROL INFORMATION ACQUISITION UNIT ~ 524e

**CALCULATION UNIT** ~ 525e

REMOTE CONTROL UNIT ~ 526

**STORAGE UNIT**

PROGRAM ~ P5e

REFERENCE ROUTE ~ Ip

FOURTH LEARNING MODEL ~ Md, Md4

RECTANGLE DATABASE ~ Db1

CAMERA PARAMETER ~ Pa

COMMUNICATION UNIT ~ 51

9

9

RG

RG

10

VEHICLE

15

VEHICLE CONTROL DEVICE

159

150

**CPU**

OPERATION CONTROL UNIT ~ 153

INPUT/ OUTPUT IF

COMMUNICATION DEVICE 14

DRIVING DEVICE 11

STEERING DEVICE 12

BRAKING DEVICE 13

157

**STORAGE UNIT**

PROGRAM ~ P15

Ro

Fig.22

Ti,Im1~Im4

10

Ro,Rs

Vc3,
Cr1($X_3$,$Y_3$)

Rc

Vc2,
Cr2($X_2$,$Y_2$)

Vc4,
Cr4($X_4$,$Y_4$)

Vc1,
Cr1($X_1$,$Y_1$)

## Fig.23

Fig.24

## Fig.25

INFORMATION PROCESSING DEVICE 1f — 5f — 53f

**CPU** 52f

| CHANGE INFORMATION ACQUISITION UNIT ~ 521 |
| TRAINING UNIT ~ 522f |
| STATE INFORMATION ACQUISITION UNIT ~ 523 |
| CONTROL INFORMATION ACQUISITION UNIT ~ 524f |
| CALCULATION UNIT ~ 525f |
| REMOTE CONTROL UNIT ~ 526 |

**STORAGE UNIT**

| PROGRAM ~ P5f |
| REFERENCE ROUTE ~ Ip |
| FIFTH LEARNING MODEL ~ Md, Md5 |
| THREE-DIMENSIONAL DATABASE ~ Db2 |
| CAMERA PARAMETER ~ Pa |

COMMUNICATION UNIT — 51

9

RG          RG          9          10

**VEHICLE**

VEHICLE CONTROL DEVICE 15

**CPU** 150

OPERATION CONTROL UNIT ~ 153

**STORAGE UNIT** 157

PROGRAM ~ P15

INPUT/ OUTPUT IF 159

COMMUNICATION DEVICE 14
DRIVING DEVICE 11
STEERING DEVICE 12
BRAKING DEVICE 13

Ro

Fig.26

## Fig.27

┌9
(EXTERNAL CAMERA)

┌5f
(INFORMATION PROCESSING DEVICE)

TRANSMIT REQUEST SIGNAL (S261)

TRANSMIT CAPTURED IMAGE (S262)

CHANGE INFORMATION ACQUISITION STEP

┌S263

APPEARANCE STATE HAS CHANGED? — No

Yes

┌S264

RETRAIN FIFTH LEARNING MODEL

TRAINING STEP

END

END

Fig.28

# Fig.29

Diagram showing:

**INFORMATION PROCESSING DEVICE** (1g, 5g)

**CPU** (52g)
- CHANGE INFORMATION ACQUISITION UNIT ~ 521
- TRAINING UNIT ~ 522g
- STATE INFORMATION ACQUISITION UNIT ~ 523
- CONTROL INFORMATION ACQUISITION UNIT ~ 524g
- REMOTE CONTROL UNIT ~ 526

**STORAGE UNIT** (53g)
- PROGRAM ~ P5g
- REFERENCE ROUTE ~ Ip
- SIXTH LEARNING MODEL ~ Md, Md6
- CAMERA PARAMETER ~ Pa

COMMUNICATION UNIT ~ 51

9 — RG      RG — 9      10

**VEHICLE**

**VEHICLE CONTROL DEVICE** (15)

**CPU** (150)
- OPERATION CONTROL UNIT ~ 153

**STORAGE UNIT** (157)
- PROGRAM ~ P15

INPUT/OUTPUT IF (159)

- COMMUNICATION DEVICE ~ 14
- DRIVING DEVICE ~ 11
- STEERING DEVICE ~ 12
- BRAKING DEVICE ~ 13

Ro

## Fig.30

EXTERNAL CAMERA `9`

INFORMATION PROCESSING DEVICE `5g`

TRANSMIT REQUEST SIGNAL (S271)

TRANSMIT CAPTURED IMAGE (S272)

CHANGE INFORMATION ACQUISITION STEP

S273

APPEARANCE STATE HAS CHANGED? No

Yes

S274

RETRAIN SIXTH LEARNING MODEL

TRAINING STEP

END

END

Fig.31

EXTERNAL CAMERA 9

INFORMATION PROCESSING DEVICE 5g

TRANSMIT REQUEST SIGNAL (S371)

TRANSMIT CAPTURED IMAGE (S372)

S373
IDENTIFY APPEARANCE STATE

STATE INFORMATION ACQUISITION STEP

S374
ACQUIRE POSITION INFORMATION BY INPUTTING CAPTURED IMAGE AND CAMERA IDENTIFIER TO SIXTH LEARNING MODEL

CONTROL INFORMATION ACQUISITION STEP

END

END

## Fig.32

Fig.33

Fig.34

Fig.35

INFORMATION PROCESSING DEVICE — 1i, 5i

**CPU** — 52i
- CHANGE INFORMATION ACQUISITION UNIT — 521
- TRAINING UNIT — 522i
- STATE INFORMATION ACQUISITION UNIT — 523
- CONTROL INFORMATION ACQUISITION UNIT — 524i
- CALCULATION UNIT — 525
- REMOTE CONTROL UNIT — 526

**STORAGE UNIT** — 53i
- PROGRAM — P5i
- REFERENCE ROUTE — Ip
- FIRST LEARNING MODEL — Md, Md1

COMMUNICATION UNIT — 51

9 — RG

RG — 9

10

**VEHICLE**

**VEHICLE CONTROL DEVICE** — 15

**CPU** — 150
- OPERATION CONTROL UNIT — 153

**STORAGE UNIT** — 157
- PROGRAM — P15

INPUT/ OUTPUT IF — 159

COMMUNICATION DEVICE — 14

DRIVING DEVICE — 11

STEERING DEVICE — 12

BRAKING DEVICE — 13

Ro

# Fig.36

Fig.37

EXTERNAL CAMERA 9

INFORMATION PROCESSING DEVICE 5i

TRANSMIT REQUEST SIGNAL (S391)

TRANSMIT CAPTURED IMAGE (S392)

S393
IDENTIFY APPEARANCE STATE

STATE INFORMATION
ACQUISITION STEP

S394
APPEARANCE STATE IS DIFFERENT FROM APPEARANCE
STATE WHEN FIRST LEARNING MODEL WAS TRAINED?  No

Yes

S395
ACQUIRE SHAPE DATA BY INPUTTING
CAPTURED IMAGE TO FIRST LEARNING
MODEL THAT HAS BEEN TRAINED
BY TRANSFER LEARNING

S396
ACQUIRE SHAPE DATA BY INPUTTING
CAPTURED IMAGE TO FIRST LEARNING
MODEL THAT HAS NOT BEEN TRAINED
BY TRANSFER LEARNING

CONTROL INFORMATION
ACQUISITION STEP

END

END

Fig.38

INFORMATION PROCESSING DEVICE 1j / 52j / 5j / 53j

**CPU** 52j

CHANGE INFORMATION ACQUISITION UNIT ~521

TRAINING UNIT ~522j

STATE INFORMATION ACQUISITION UNIT ~523

CONTROL INFORMATION ACQUISITION UNIT ~524j

CALCULATION UNIT ~525

REMOTE CONTROL UNIT ~526

**STORAGE UNIT** 53j

PROGRAM ~P5j

REFERENCE ROUTE ~Ip

FIRST LEARNING MODEL ~Md, Md1

EIGHTH LEARNING MODEL ~Md, Md8

COMMUNICATION UNIT ~51

9 ~RG   RG~ 9   10

**VEHICLE**

VEHICLE CONTROL DEVICE ~15

**CPU** 150

OPERATION CONTROL UNIT ~153

**STORAGE UNIT** 157

PROGRAM ~P15

INPUT/OUTPUT IF ~159

COMMUNICATION DEVICE ~14

DRIVING DEVICE ~11

STEERING DEVICE ~12

BRAKING DEVICE ~13

Ro

Fig.39

9 EXTERNAL CAMERA

5j INFORMATION PROCESSING DEVICE

TRANSMIT REQUEST SIGNAL (S301)

TRANSMIT CAPTURED IMAGE (S302)

CHANGE INFORMATION ACQUISITION STEP

S303 APPEARANCE STATE HAS CHANGED? No

Yes

S304 DISCARD FIRST LEARNING MODEL

S305 NEW TRAINING FOR EIGHTH LEARNING MODEL

TRAINING STEP

END

END

## Fig.40

9
(EXTERNAL CAMERA)

5j
(INFORMATION PROCESSING DEVICE)

TRANSMIT REQUEST SIGNAL (S401)

TRANSMIT CAPTURED IMAGE (S402)

STATE INFORMATION
ACQUISITION STEP

S403
IDENTIFY APPEARANCE STATE

S404
APPEARANCE STATE IS DIFFERENT FROM APPEARANCE
STATE WHEN FIRST LEARNING MODEL WAS TRAINED?  No

Yes
S405
ACQUIRE SHAPE DATA BY
INPUTTING CAPTURED IMAGE
TO EIGHTH LEARNING MODEL

CONTROL INFORMATION
ACQUISITION STEP

S406
ACQUIRE SHAPE DATA BY
INPUTTING CAPTURED IMAGE
TO FIRST LEARNING MODEL

END

END

Fig.41

INFORMATION PROCESSING DEVICE 1v — 52v

**CPU** — 52v

| CHANGE INFORMATION ACQUISITION UNIT | ~ 521 |
| TRAINING UNIT | ~ 522 |
| STATE INFORMATION ACQUISITION UNIT | ~ 523 |
| UPDATE UNIT | ~ 529 |

5v

**STORAGE UNIT** — 53v

PROGRAM ~ P5v

FIRST LEARNING MODEL ~ Md, Md1

COMMUNICATION UNIT — 51

9 ~ RG                    RG ~ 9

10v

**VEHICLE**

VEHICLE CONTROL DEVICE — 150v

**CPU**

| CONTROL INFORMATION ACQUISITION UNIT | ~ 154 |
| CALCULATION UNIT | ~ 155 |
| SIGNAL GENERATION UNIT | ~ 156 |
| OPERATION CONTROL UNIT | ~ 153v |

**STORAGE UNIT** — 157v

PROGRAM ~ P15v

REFERENCE ROUTE ~ Ip

159

INPUT/ OUTPUT IF

COMMUNICATION DEVICE — 14

DRIVING DEVICE — 11

STEERING DEVICE — 12

BRAKING DEVICE — 13

Ro

Fig.42

VEHICLE

```
        ┌─────────────────────────┐
        │          START          │
        └─────────────────────────┘
                     │
                     ▼                    ⌐S510
   ┌──────────────────────────────────────────┐
   │       ACQUIRE VEHICLE POSITION INFORMATION │
   │  USING DETECTION RESULT OF EXTERNAL CAMERA │
   └──────────────────────────────────────────┘
                     │
                     ▼                    ⌐S520
   ┌──────────────────────────────────────────┐
   │                DETERMINE                   │
   │           NEXT TARGET LOCATION             │
   └──────────────────────────────────────────┘
                     │
                     ▼                    ⌐S530
   ┌──────────────────────────────────────────┐
   │                GENERATE                    │
   │          RUNNING CONTROL SIGNAL            │
   └──────────────────────────────────────────┘
                     │
                     ▼                    ⌐S540
   ┌──────────────────────────────────────────┐
   │             CONTROL ACTUATOR               │
   │      USING RUNNING CONTROL SIGNAL          │
   └──────────────────────────────────────────┘
                     │
                     ▼
        ┌─────────────────────────┐
        │           END           │
        └─────────────────────────┘
```

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 24 20 3354

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/258762 A1 (KELLOGG TAD W [US] ET AL) 18 August 2022 (2022-08-18) * paragraph [0027] - paragraph [0063]; figures 1-4 * | 1,7-11 | INV. G06V10/764 G06V20/58 |
| A | US 2023/059924 A1 (HEINRICH GREGORY [FR] ET AL) 23 February 2023 (2023-02-23) * paragraph [0055] - paragraph [0671]; figures 1-39 * | 1,7-11 | |

**TECHNICAL FIELDS
SEARCHED (IPC)**

G06V

## INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| The Hague | 15 April 2025 | Thibault, Guillaume |

EPO FORM 1503 03.82 (P04E07)

Europäisches
Patentamt

European
Patent Office

Office européen
des brevets

**INCOMPLETE SEARCH
SHEET C**

Application Number

EP 24 20 3354

Claim(s) completely searchable:
1, 7-11

Claim(s) not searched:
2-6, 12-15

Reason for the limitation of the search:

Due to the presence of multiple independent claims from the same category
(entity claims 1-6), it appears that the current set of claims does not
comply with Rule  43(2) EPC. These claims do not appear to be
interrelated products, nor use claim, nor alternative solutions. Hence,
these independent claims are not concise (Article 84 EPC).
Due to the presence of multiple independent claims from the same category
(activity claims 11-15), it appears that the current set of claims does
not comply with Rule  43(2) EPC. These claims do not appear to be
interrelated products, nor use claim, nor alternative solutions. Hence,
these independent claims are not concise (Article 84 EPC).
In reply to an invitation pursuant Rule 62a(1) EPC, the applicant
requested claims 1, 7-10 and 11 to be searched.

## ANNEX TO THE EUROPEAN SEARCH REPORT
## ON EUROPEAN PATENT APPLICATION NO.

EP 24 20 3354

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2025

| Patent document cited in search report | Publication date | Patent family member(s) | | Publication date |
|---|---|---|---|---|
| US 2022258762 A1 | 18-08-2022 | AU | 2022200508 A1 | 01-09-2022 |
| | | CN | 114995368 A | 02-09-2022 |
| | | EP | 4047315 A1 | 24-08-2022 |
| | | EP | 4447002 A2 | 16-10-2024 |
| | | JP | 2022125988 A | 29-08-2022 |
| | | KR | 20220117824 A | 24-08-2022 |
| | | US | 2022258762 A1 | 18-08-2022 |
| US 2023059924 A1 | 23-02-2023 | AU | 2022211894 A1 | 23-02-2023 |
| | | CN | 115705491 A | 17-02-2023 |
| | | DE | 102022119208 A1 | 09-02-2023 |
| | | GB | 2613424 A | 07-06-2023 |
| | | JP | 2023029824 A | 07-03-2023 |
| | | KR | 20230021621 A | 14-02-2023 |
| | | US | 2023059924 A1 | 23-02-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017538619 W